# EUROPEAN PATENT APPLICATION

(11) **EP 4 797 565 A1**
(43) Date of publication of application: **26.08.2026**
(21) Application number: 24890482.3
(22) Date of filing: 28.10.2024
(51) Int. Cl.: H04B 7/185

(54) **COMMUNICATION METHOD, APPARATUS AND SYSTEM**

(30) Priority: 13.11.2023 CN 202311516601; 16.02.2024 CN 202410179021
(71) Applicant: HUAWEI TECHNOLOGIES CO., LTD., Shenzhen 518129 (CN)
(72) Inventor: DOU, Fenghui, Shenzhen, Guangdong 518129 (CN); LI, Shuai, Shenzhen, Guangdong 518129 (CN); HU, Xiaokun, Shenzhen, Guangdong 518129 (CN)
(74) Representative: Thun, Clemens
(86) International application number: PCT/CN2024/127908
(87) International publication number: WO 2025/103125

(57) **Abstract**

This application relates to a communication method, apparatus, and system. A first core network element receives first information from an IMS network element, where the first information indicates that a first apparatus and a second apparatus are to make a call. The first core network element sends first configuration information to a UPF based on the first information, where the first configuration information is for configuring the UPF to perform local switching on call data between the first apparatus and the second apparatus, and both the first apparatus and the second apparatus access a network via a satellite. For example, the UPF may switch the call data between the first apparatus and the second apparatus on the satellite. Therefore, the call data can be switched on the satellite without being routed to a terrestrial network, to shorten a transmission path of the call data and reduce a delay.

## Description

### CROSS-REFERENCE TO RELATED APPLICATIONS

This application claims priorities to Chinese Patent Application No. 202311516601.3, filed with the China National Intellectual Property Administration on November 13, 2023 and entitled "COMMUNICATION METHOD, APPARATUS, AND SYSTEM", and to Chinese Patent Application No. 202410179021.8, filed with the China National Intellectual Property Administration on February 16, 2024 and entitled "COMMUNICATION METHOD, APPARATUS, AND SYSTEM", both of which are incorporated herein by reference in their entireties.

### TECHNICAL FIELD

This application relates to the field of communication technologies, and in particular, to a communication method, apparatus, and system.

### BACKGROUND

Currently, a user equipment (user equipment, UE) may make calls by using an internet protocol (internet protocol, IP) multimedia subsystem (IP multimedia subsystem, IMS). For example, the UE first registers with a network in a 5th generation (5th generation, 5G) system, and establishes an IMS protocol data unit (protocol data unit, PDU) session (session) for carrying call data and call signaling. The foregoing process mainly involves interaction between the UE and a 5G core network (5G core, 5GC). Then, the UE initiates IMS registration to the IMS through the established IMS PDU session, establishes an IMS session, and then performs voice data transmission through the IMS session. These subsequent steps involve interaction between the UE and the IMS via the 5GC.

In a satellite scenario, a UE may access a 4G network or a 5G network, for example, an LTE NTN (Non-Terrestrial Network) or a 5G NTN, via a satellite. In different satellite-based access scenarios, some network elements in the network may alternatively be deployed on a satellite. For example, a base station may be deployed on the satellite. When the UE accesses the 5G network via the satellite, if the UE performs a call service by using the IMS, call data needs to be routed from the satellite to a terrestrial network because some network elements, for example, an IMS network element, for call data transmission may still be located on the ground. A distance between the satellite and the terrestrial network is long. Consequently, a delay increases.

### SUMMARY

Embodiments of this application provide a communication method, apparatus, and system, to reduce a call delay.

According to a first aspect, a first communication method is provided. The method may be performed by a core network element, may be performed by another device having functions of the core network element, or may be performed by a chip system (or a chip) or another functional module, where the chip system or the functional module can implement the functions of the core network element, and the chip system or the functional module is, for example, disposed in the core network element. The core network element is, for example, a first core network element. An example in which the method is performed by the first core network element is used in the following descriptions. Optionally, the first core network element is, for example, an SMF, or is another core network element that can implement similar functions. The method includes: receiving first information from an IMS network element, where the first information indicates that a first apparatus and a second apparatus are to make a call; and sending first configuration information to a UPF based on the first information, where the first configuration information is for configuring the UPF to perform local switching on call data between the first apparatus and the second apparatus, and both the first apparatus and the second apparatus access a network via a satellite.

In this embodiment of this application, the UPF may perform local switching on the call data between the first apparatus and the second apparatus based on the first configuration information. Both the first apparatus and the second apparatus access the network via the satellite. For example, the UPF may switch the call data between the first apparatus and the second apparatus on the satellite. Therefore, the call data can be switched on the satellite without being routed to a terrestrial network, to shorten a transmission path of the call data and reduce a delay. In addition, because the UPF can perform local switching on the call data between the devices, the call data can directly arrive at a peer call device from the UPF without being transmitted through the IMS network element or the like, so that the transmission path is further shortened, and the delay is further reduced.

In an optional implementation, the UPF is located on the satellite. If the UPF is located on the satellite, that the UPF performs local switching on the call data between the first apparatus and the second apparatus is equivalent to: The call data between the first apparatus and the second apparatus is switched on the satellite. This reduces a call delay.

In an optional implementation, the first information further indicates that the first apparatus and the second apparatus are to switch the call data on the satellite; or the method further includes: determining that the first apparatus and the second apparatus are to switch the call data on the satellite. Whether the call data between the first apparatus and the second apparatus is to be switched on the satellite may be decided by the IMS network element, and the IMS network element may indicate a decision result to the first core network element by using the first information. Alternatively, whether the call data between the first apparatus and the second apparatus is to be switched on the satellite may be decided by the first core network element. It can be learned that a decision-making process is flexible.

In an optional implementation, the method further includes: when the first information further indicates that the first apparatus and the second apparatus are to switch the call data on the satellite, determining, based on the first information, that the first apparatus and the second apparatus are to switch the call data on the satellite; or determining, based on a UPF that serves the first apparatus and a UPF that serves the second apparatus, that the first apparatus and the second apparatus are to switch the call data on the satellite. Whether the call data between the first apparatus and the second apparatus is to be switched on the satellite may be decided by the IMS network element, and the IMS network element may indicate the decision result to the first core network element by using the first information. Alternatively, whether the call data between the first apparatus and the second apparatus is to be switched on the satellite may be decided by the first core network element. It can be learned that the decision-making process is flexible.

In an optional implementation, the determining that the first apparatus and the second apparatus are to switch the call data on the satellite includes: determining that the first apparatus and the second apparatus are served by the same UPF; or determining that the first apparatus and the second apparatus are served by different UPFs, where establishment of a data transmission channel is supported between the different UPFs. If the first apparatus and the second apparatus are served by the same UPF, the UPF can implement the local switching of the call data between the first apparatus and the second apparatus. If the first apparatus and the second apparatus are served by the different UPFs, but the different UPFs can communicate with each other, or the data transmission channel can be established between the different UPFs, the local switching of the call data between the two devices can also be implemented through the two UPFs. Therefore, in these two cases, it may be considered that the first apparatus and the second apparatus can switch the call data on the satellite.

In an optional implementation, the first information further includes one or more of the following: a first identifier of the first apparatus, a second identifier of the first apparatus, address information of the first apparatus, a first identifier of the second apparatus, a second identifier of the second apparatus, address information of the second apparatus, calling-party information, called-party information, or description information of the call data between the first apparatus and the second apparatus. The first information may include related information of the first apparatus and/or related information of the second apparatus, or may further include other information. This is not limited.

In an optional implementation, the description information of the call data is used by the UPF to perform setting on one or more of the following: for call data from a communication apparatus, setting a data filtering rule as obtaining the call data between the first apparatus and the second apparatus through filtering, where the communication apparatus is the first apparatus or the second apparatus; for call data from a communication apparatus, setting a data forwarding rule as performing forwarding to the UPF; for call data that is received by the UPF and forwarded by the UPF, setting a destination address of the call data to address information of a peer communication apparatus, where if the call data is from the first apparatus, the peer communication apparatus is the second apparatus; or if the call data is from the second apparatus, the peer communication apparatus is the first apparatus; or for call data that is received by the UPF and forwarded by the UPF, setting a rule for forwarding the call data as performing forwarding to a peer communication apparatus. The UPF can implement the local switching of the call data between the first apparatus and the second apparatus through the foregoing configuration process.

According to a second aspect, a second communication method is provided. The method may be performed by an IMS network element, may be performed by another device having functions of the IMS network element, or may be performed by a chip system (or a chip) or another functional module, where the chip system or the functional module can implement the functions of the IMS network element, and the chip system or the functional module is, for example, disposed in the IMS network element. An example in which the method is performed by the IMS network element is used in the following descriptions. Optionally, the IMS network element is, for example, a P-CSCF or an S-CSCF, or may be another network element in an IMS. The method includes: receiving a first request from a first apparatus, where the first request is for requesting to make a call with a second apparatus; and sending first information to a first core network element, where the first information indicates that the first apparatus and the second apparatus are to make the call. For example, the first core network element may determine, with reference to the first information, whether the first apparatus and the second apparatus are to switch call data on a satellite. Therefore, the call data can be switched on the satellite without being routed to a terrestrial network, to shorten a transmission path of the call data and reduce a delay.

In an optional implementation, the first information further indicates that the first apparatus and the second apparatus are to switch the call data on the satellite.

In an optional implementation, the method further includes: determining that the first apparatus and the second apparatus are to switch the call data on the satellite. If whether the first apparatus and the second apparatus are to switch the data on the satellite is decided by the IMS network element, the IMS network element may determine whether the first apparatus and the second apparatus are to switch the call data on the satellite, to send a decision result to the first core network element.

In an optional implementation, the determining that the first apparatus and the second apparatus are to switch the call data on the satellite includes one or more of the following: determining that the first apparatus and the second apparatus are served by a same UPF, where the UPF is located on the satellite; determining that the first apparatus and the second apparatus are served by a same IMS network element; determining that the first apparatus and the second apparatus are served by different UPFs, where the different UPFs are both located on the satellite; or determining that media description information of the first apparatus matches that of the second apparatus. If the first apparatus and the second apparatus are served by the same IMS network element, it may also be considered that the two devices are served by a same UPF, or are served by different UPFs. Therefore, that the first apparatus and the second apparatus are served by the same IMS network element may also be used as a determining condition for determining that the first apparatus and the second apparatus are to switch the call data on the satellite. In a conventional call process, when call data passes through the IMS, the IMS network element may perform format conversion on the call data. For example, media description information of UEs of both call parties may not match, and a peer call end can identify the received call data through processing performed by the IMS network element. However, in this embodiment of this application, the call data between the first UE and the second UE may not pass through the IMS, but directly arrive at a peer call end (the first UE or the second UE). Therefore, optionally, the media description information of the first UE may match that of the second UE, so that the first UE and the second UE can identify the call data from the peer call end without processing performed by the IMS network element. For another determining condition, refer to effect descriptions in the first aspect or a corresponding implementation.

In an optional implementation, the determining that the first apparatus and the second apparatus are served by the same IMS network element includes: determining, based on a second identifier that is of the second apparatus and that is carried in the first request, that the first apparatus and the second apparatus are served by the same IMS network element, and the IMS network element uniquely corresponds to one UPF. This is a determining manner of determining whether the first apparatus and the second apparatus are served by the same IMS network element. Another determining manner may alternatively be used, and is not specifically limited.

In an optional implementation, the determining, based on the second identifier that is of the second apparatus and that is carried in the first request, that the first apparatus and the second apparatus are served by the same IMS network element includes: determining, based on the second identifier of the second apparatus and a second identifier of the first apparatus, that both the first apparatus and the second apparatus perform IMS registration via the same IMS network element. For example, the IMS network element may store registration information of a UE, and the registration information of the UE may include a second identifier of the UE. Therefore, whether the IMS network element stores the registration information of the UE can be determined based on the second identifier of the UE, and therefore, whether the UE has registered with the IMS network element can be determined.

In an optional implementation, the second identifier of the second apparatus includes a uniform resource locator of the second apparatus and/or a uniform resource identifier of the second apparatus.

In an optional implementation, the second identifier of the first apparatus includes a uniform resource locator of the first apparatus and/or a uniform resource identifier of the first apparatus.

In an optional implementation, the determining that the first apparatus and the second apparatus are served by the same UPF includes: determining that the first request and a request from the second apparatus are from the same UPF. For example, if source address information carried in a data packet corresponding to the first request and source address information carried in a data packet corresponding to the request from the second UE are the same, it may be determined that the requests of the two devices are from the same UPF. In this case, it is determined that the two devices are served by the same UPF. This determining manner is simple.

In an optional implementation, the determining that the first apparatus and the second apparatus are to switch the call data on the satellite includes: when the call between the first apparatus and the second apparatus corresponds to a delay handling policy, determining that the first apparatus and the second apparatus are to switch the call data on the satellite; and/or when a disaster recovery policy is executed, determining that the first apparatus and the second apparatus are to switch the call data on the satellite. For example, if a current network has a high delay requirement, and a call delay cannot be excessively long, a mechanism of switching call data on the satellite may be used, to reduce the call delay as much as possible. Alternatively, if a disaster, for example, an earthquake or a tsunami, occurs currently, a mechanism of switching call data on the satellite may be used, so that an emergency call can be transmitted within a shorter delay to respond to an emergency.

In an optional implementation, the method further includes one or more of the following: determining, based on subscription information of the first apparatus, that a network allows call data of the first apparatus to be switched on the satellite, and/or determining, based on subscription information of the second apparatus, that the network allows call data of the second apparatus to be switched on the satellite; receiving second information, where the second information indicates that the first apparatus requests switching of call data of the first apparatus on the satellite, and/or indicates that the second apparatus requests switching of call data of the second apparatus on the satellite; or receiving third information, where the third information indicates that a network allows call data of the first apparatus to be switched on the satellite, and/or indicates that the network allows call data of the second apparatus to be switched on the satellite. For example, the IMS network element may obtain subscription information of a device, to determine whether the network allows the device to switch call data on the satellite. For example, if the network does not allow the first apparatus and/or the second apparatus to switch the call data on the satellite, the IMS network element may decide that the first apparatus and the second apparatus are not to switch the call data on the satellite, to meet a requirement of the network. For example, the second information is from the first apparatus and/or the second apparatus, and is a requirement of the device. In this case, the IMS network element may make a decision with reference to the requirement of the device. For example, if the first apparatus requests the switching of the call data of the first apparatus on the satellite, the IMS network element may decide as much as possible that the call data of the first apparatus is to be switched on the satellite. For example, the third information is from another network element. For example, the IMS network element is the P-CSCF, and the third information is, for example, from the S-CSCF. For example, the S-CSCF obtains the subscription information of the first apparatus and/or the second apparatus, and determines, based on the subscription information, whether the network allows the first apparatus and/or the second apparatus to switch the call data on the satellite. In this case, the S-CSCF may send a determining result to the P-CSCF, so that the P-CSCF may make a decision with reference to the determining result, without determining, based on the subscription information, whether the network allows the first apparatus and/or the second apparatus to switch the call data on the satellite. This can reduce workload of the P-CSCF.

In an optional implementation, the call data is not transmitted through the IMS. For example, the call data may be directly switched on the UPF or another network element (for example, a RAN) without passing through another network element. This shortens the transmission path of the call data and reduces the transmission delay.

According to a third aspect, a third communication method is provided. The method may be performed by a UPF, may be performed by another device having functions of the UPF, or may be performed by a chip system (or a chip) or another functional module, where the chip system or the functional module can implement the functions of the UPF, and the chip system or the functional module is, for example, disposed in the UPF. An example in which the method is performed by the UPF is used in the following descriptions. The method includes: receiving first configuration information; and performing configuration based on the first configuration information to perform local switching on call data between a first apparatus and a second apparatus, where both the first apparatus and the second apparatus access a network via a satellite.

In an optional implementation, the UPF is located on the satellite.

In an optional implementation, the performing configuration based on the first configuration information to perform local switching on the call data between the first apparatus and the second apparatus includes one or more of the following: for call data from a communication apparatus, setting a data filtering rule as obtaining the call data between the first apparatus and the second apparatus through filtering, where the communication apparatus is the first apparatus or the second apparatus; for call data from a communication apparatus, setting a data forwarding rule as performing forwarding to the UPF; for call data that is received by the UPF and forwarded by the UPF, setting a destination address of the call data to address information of a peer communication apparatus, where if the call data is from the first apparatus, the peer communication apparatus is the second apparatus; or if the call data is from the second apparatus, the peer communication apparatus is the first apparatus; or for call data that is received by the UPF and forwarded by the UPF, setting a rule for forwarding the call data as performing forwarding to a peer communication apparatus.

For technical effects of the third aspect or the implementations, refer to the descriptions of the technical effects of the first aspect or the corresponding implementations, and/or refer to the descriptions of the technical effects of the second aspect or the corresponding implementations.

According to a fourth aspect, a fourth communication method is provided. The method may be performed by a terminal device, may be performed by another device having functions of the terminal device, or may be performed by a chip system (or a chip) or another functional module, where the chip system or the functional module can implement the functions of the terminal device, and the chip system or the functional module is, for example, disposed in the terminal device. An example in which the method is performed by the terminal device is used in the following descriptions. The terminal device is, for example, the first apparatus or the second apparatus in any one or more of the foregoing aspects. The method includes: sending second information to an IMS network element, where the second information is for requesting switching of call data on a satellite.

For technical effects of the fourth aspect or the implementations, refer to the descriptions of the technical effects of the first aspect or the corresponding implementations, and/or refer to the descriptions of the technical effects of the second aspect or the corresponding implementations.

According to a fifth aspect, a fifth communication method is provided. The method may be performed by an IMS network element, may be performed by another device having functions of the IMS network element, or may be performed by a chip system (or a chip) or another functional module, where the chip system or the functional module can implement the functions of the IMS network element, and the chip system or the functional module is, for example, disposed in the IMS network element. An example in which the method is performed by the IMS network element is used in the following descriptions. Optionally, the IMS network element is, for example, a P-CSCF or an S-CSCF, or may be another network element in an IMS. The method includes: receiving a first request from a first apparatus, where the first request is for requesting to make a call with a second apparatus, and both the first apparatus and the second apparatus access a network via a satellite; determining that the first apparatus and the second apparatus are to switch call data on the satellite; and sending address information of the second apparatus to the first apparatus, and sending address information of the first apparatus to the second apparatus. Optionally, the address information of the first apparatus and the address information of the second apparatus are for switching the call data on the satellite.

In this embodiment of this application, a UPF may perform local switching on the call data between the first apparatus and the second apparatus, and both the first apparatus and the second apparatus access the network via the satellite. For example, the UPF may switch the call data between the first apparatus and the second apparatus on the satellite. Therefore, the call data can be switched on the satellite without being routed to a terrestrial network, to shorten a transmission path of the call data and reduce a delay. Because the UPF can perform local switching on the call data between the devices, the call data can directly arrive at a peer call device from the UPF without being transmitted through the IMS network element or the like, so that the transmission path is further shortened, and the delay is further reduced. In addition, the IMS network element may send address information of devices of both call parties to peer communication devices, so that the devices of both the call parties can switch call data on the satellite by including addresses of the peer call devices during a call, and there is no need to perform excessive configuration on a core network element and/or a RAN, to reduce a network element configuration process and improve call efficiency.

In an optional implementation, the method further includes: receiving a registration request from a communication apparatus, where a message header (header) of the registration request includes address information of the communication apparatus, and the communication apparatus includes the first apparatus or the second apparatus. During registration, the communication apparatus may send the address information of the communication apparatus to the IMS network element, so that the IMS network element can obtain the address information of the communication apparatus from the registration request of the communication apparatus.

In an optional implementation, the determining that the first apparatus and the second apparatus are to switch the call data on the satellite includes: determining that the first apparatus and the second apparatus are served by a same UPF, where the UPF is located on the satellite; and/or determining that the first apparatus and the second apparatus are served by a same IMS network element.

In an optional implementation, the determining that the first apparatus and the second apparatus are to switch the call data on the satellite further includes: determining that media description information of the first apparatus matches that of the second apparatus.

In an optional implementation, the determining that the first apparatus and the second apparatus are served by the same IMS network element includes: determining, based on a second identifier that is of the second apparatus and that is carried in the first request, that the first apparatus and the second apparatus are served by the same IMS network element.

In an optional implementation, the determining, based on the second identifier that is of the second apparatus and that is carried in the first request, that the first apparatus and the second apparatus are served by the same IMS network element includes: determining, based on the second identifier of the second apparatus and a second identifier of the first apparatus, that both the first apparatus and the second apparatus perform IMS registration via the same IMS network element.

In an optional implementation, the second identifier of the second apparatus includes a uniform resource locator of the second apparatus and/or a uniform resource identifier of the second apparatus.

In an optional implementation, the second identifier of the first apparatus includes a uniform resource locator of the first apparatus and/or a uniform resource identifier of the first apparatus.

In an optional implementation, the determining that the first apparatus and the second apparatus are served by the same UPF includes: determining that the first request and a request from the second apparatus are from the same UPF.

In an optional implementation, the determining that the first apparatus and the second apparatus are to switch the call data on the satellite includes: when the call between the first apparatus and the second apparatus corresponds to a delay handling policy, determining that the first apparatus and the second apparatus are to switch the call data on the satellite; and/or when a disaster recovery policy is executed, determining that the first apparatus and the second apparatus are to switch the call data on the satellite.

In an optional implementation, the method further includes one or more of the following: determining, based on subscription information of the first apparatus, that the network allows call data of the first apparatus to be switched on the satellite, and/or determining, based on subscription information of the second apparatus, that the network allows call data of the second apparatus to be switched on the satellite; receiving second information, where the second information indicates that the first apparatus requests switching of call data of the first apparatus on the satellite, and/or indicates that the second apparatus requests switching of call data of the second apparatus on the satellite; or receiving third information, where the third information indicates that the network allows call data of the first apparatus to be switched on the satellite, and/or indicates that the network allows call data of the second apparatus to be switched on the satellite.

In an optional implementation, the call data is not transmitted through the IMS.

For technical effects of the fifth aspect or the implementations, refer to the descriptions of the technical effects of the first aspect or the corresponding implementations, and/or refer to the descriptions of the technical effects of the second aspect or the corresponding implementations.

According to a sixth aspect, a sixth communication method is provided. The method may be performed by a terminal device, may be performed by another device having functions of the terminal device, or may be performed by a chip system (or a chip) or another functional module, where the chip system or the functional module can implement the functions of the terminal device, and the chip system or the functional module is, for example, disposed in the terminal device. An example in which the method is performed by the terminal device is used in the following descriptions. The terminal device is, for example, the first apparatus or the second apparatus in any one or more of the foregoing aspects. The method includes: receiving a second request from an IMS network element, where the second request includes address information of a second apparatus, where a first apparatus is a calling device, and the second apparatus is a called device; or a first apparatus is a called device, and the second apparatus is a calling device; and both the first apparatus and the second apparatus access a network via a satellite; and sending call data to a UPF, where destination address information of the call data is the address information of the second apparatus. Optionally, the address information of the second apparatus is for switching the call data on the satellite.

In an optional implementation, the method further includes: sending second information to the IMS network element, where the second information indicates that the communication apparatus requests switching of call data of the communication apparatus on the satellite.

In an optional implementation, the method further includes: sending a registration request to the IMS network element, where the registration request is for requesting to register with the IMS network element (or requesting to perform IMS registration, or requesting to register with an IMS in which the IMS network element is located), and the registration request further indicates that the communication apparatus accesses the network via the satellite.

For technical effects of the sixth aspect or the possible implementations, refer to the descriptions of the technical effects of the fifth aspect or the corresponding implementations.

According to a seventh aspect, a seventh communication method is provided. The method may be performed by an IMS network element, may be performed by another device having functions of the IMS network element, or may be performed by a chip system (or a chip) or another functional module, where the chip system or the functional module can implement the functions of the IMS network element, and the chip system or the functional module is, for example, disposed in the IMS network element. An example in which the method is performed by a first IMS network element is used in the following descriptions, and the IMS network element is, for example, the first IMS network element or a second IMS network element. Optionally, the IMS network element is, for example, a P-CSCF or an S-CSCF, or may be another network element in an IMS. The method includes: receiving a first message, where the first message is used by a first apparatus to request to make a call with a second apparatus, or is used by the second apparatus to respond to a call request from the first apparatus; determining, based on a first condition, that the first apparatus and the second apparatus are allowed to switch call data on a satellite; and sending a second message to a second core network element, where the second message includes an identifier of the first apparatus, an identifier of the second apparatus, and fourth information, the fourth information is for requesting the switching of the call data between the first apparatus and the second apparatus on the satellite, and the second core network element is a second core network element that serves an IMS PDU session of the first apparatus and/or a second core network element that serves an IMS PDU session of the second apparatus.

In this embodiment of this application, a UPF may perform local switching on the call data between the first apparatus and the second apparatus, and both the first apparatus and the second apparatus access a network via the satellite. For example, the UPF may switch the call data between the first apparatus and the second apparatus on the satellite. Therefore, the call data can be switched on the satellite without being routed to a terrestrial network, to shorten a transmission path of the call data and reduce a delay. Because the UPF can perform local switching on the call data between the devices, the call data can directly arrive at a peer call device from the UPF without being transmitted through the IMS network element or the like, so that the transmission path is further shortened, and the delay is further reduced. In addition, the IMS network element may perform corresponding determining on whether the first apparatus and the second apparatus can switch the call data on the satellite, so that the first apparatus and the second apparatus can switch the call data on the satellite when the condition is met, to meet requirements of a communication scenario and a plurality of communication parameters.

In an optional implementation, the first condition includes one or more of the following: The first apparatus and/or the second apparatus are/is allowed to switch call data on the satellite; the first apparatus and the second apparatus are served by a same user plane function entity, where the same user plane function entity is deployed on the satellite; the first apparatus and the second apparatus are served by a same IMS network element; the first apparatus and the second apparatus are served by different user plane function entities, where the different user plane function entities are both deployed on the satellite; media description information used by the first apparatus matches that used by the second apparatus; a serving PLMN of the first apparatus is the same as a serving PLMN of the second apparatus; the first apparatus and the second apparatus are covered by the same satellite; the first apparatus and the second apparatus are covered by different satellites, and there is an inter-satellite link between the different satellites; lawful interception is not to be performed on the call; when at least one apparatus of the first apparatus or the second apparatus accesses a roaming network, the apparatus that accesses the roaming network is not to perform home routing during the call; an IMS PDU session of the first apparatus and an IMS PDU session of the second apparatus are served by the same second core network element; or an IMS PDU session of the first apparatus and an IMS PDU session of the second apparatus are served by the same second core network element and a same first core network element. Alternatively, the first condition may further include another condition. This is not specifically limited.

In an optional implementation, the method further includes: obtaining information about the second core network element that serves the IMS PDU session of the first apparatus, and/or obtaining information about the second core network element that serves the IMS PDU session of the second apparatus; or obtaining information about the second core network element and a first core network element that serve the IMS PDU session of the first apparatus, and/or obtaining information about the second core network element and a first core network element that serve the IMS PDU session of the second apparatus. For example, if the first IMS network element needs to determine whether the IMS PDU session of the first apparatus and the IMS PDU session of the second apparatus are served by the same second core network element, the first IMS network element may obtain the information about the second core network elements that serve the IMS PDU sessions of the two apparatuses, to determine whether the two second core network elements are the same core network element. For another example, if the first IMS network element needs to determine whether the IMS PDU session of the first apparatus and the IMS PDU session of the second apparatus are served by the same first core network element, the first IMS network element may obtain the information about the second core network elements that serve the IMS PDU sessions of the two apparatuses, to determine whether the two first core network elements are the same core network element.

In an optional implementation, the method further includes: sending at least one of the following to a second IMS network element that serves the second apparatus: indication information, where the indication information indicates that the first apparatus and the second apparatus are to switch the call data on the satellite; information about the user plane function entity that serves the first apparatus; information about the serving PLMN of the first apparatus; an identifier of a satellite that serves the first apparatus; an identity of a serving cell of the first apparatus; the information about the second core network element that serves the IMS PDU session of the first apparatus; or the information about the first core network element that serves the IMS PDU session of the first apparatus. If the first IMS network element and the second IMS network element that serves the second apparatus are different network elements, the first IMS network element may send the foregoing information to the second IMS network element, so that the first IMS network element and the second IMS network element may make consistent decisions on whether the first apparatus and the second apparatus are to switch the call data on the satellite.

In an optional implementation, the sending the at least one of the following to the second IMS network element that serves the second apparatus includes: sending the at least one of the following to the second IMS when the first apparatus accesses a network via the satellite and/or the first apparatus is allowed to switch the call data on the satellite. For example, the first IMS network element may send the foregoing information to the second IMS network element when the first apparatus and the second apparatus are allowed to switch the call data on the satellite. If the first IMS network element does not allow the first apparatus and the second apparatus to switch the call data on the satellite, the first IMS network element may not send the foregoing information to the second IMS network element, to reduce an interaction process between the network elements.

In an optional implementation, the method further includes: receiving acknowledgment information from the second IMS network element, where the acknowledgment information is for acknowledging that the first apparatus and the second apparatus are to switch the call data on the satellite. After the second IMS network element receives the information from the first IMS network element, if the first apparatus and the second apparatus are allowed to switch the call data on the satellite, the second IMS network element may send the acknowledgment information to the first IMS network element. Through the foregoing interaction, the first IMS network element and the second IMS network element may make the consistent decisions on whether the first apparatus and the second apparatus are to switch the call data on the satellite.

In an optional implementation, the method further includes: receiving at least one of the following from the first IMS network element: indication information, where the indication information indicates that the first apparatus and the second apparatus are to switch the call data on the satellite; information about the user plane function entity that serves the first apparatus; information about the serving PLMN of the first apparatus; an identifier of a satellite that serves the first apparatus; an identity of a serving cell of the first apparatus; the information about the second core network element that serves the IMS PDU session of the first apparatus; or the information about the first core network element that serves the IMS PDU session of the first apparatus.

In an optional implementation, the method further includes: sending acknowledgment information to the first IMS network element, where the acknowledgment information is for acknowledging that the first apparatus and the second apparatus are to switch the call data on the satellite.

In an optional implementation, the sending the acknowledgment information to the first IMS network element includes: sending the acknowledgment information to the first IMS network element when at least one of the following is met: The second apparatus is allowed to switch the call data on the satellite; the first apparatus and the second apparatus are served by the same user plane function entity, where the same user plane function entity is deployed on the satellite; the first apparatus and the second apparatus are served by different user plane function entities, where the different user plane function entities are both deployed on the satellite; the media description information used by the first apparatus matches that used by the second apparatus; the serving PLMN of the first apparatus is the same as the serving PLMN of the second apparatus; the first apparatus and the second apparatus are covered by the same satellite; the first apparatus and the second apparatus are covered by the different satellites, and there is an inter-satellite link between the different satellites; the lawful interception is not to be performed on the call of the second apparatus; the second core network element that serves the IMS PDU session of the first apparatus is the same as the second core network element that serves the IMS PDU session of the second apparatus; or the second core network element that serves the IMS PDU session of the first apparatus is the same as a second core network element that serves the IMS PDU session of the second apparatus, and the first core network element that serves the IMS PDU session of the first apparatus is the same as the first core network element that serves the IMS PDU session of the second apparatus.

In an optional implementation, the method further includes: receiving seventh information from the second core network element, where the seventh information indicates a configuration result for the switching of the call data between the first apparatus and the second apparatus on the satellite. The second core network element that serves the first apparatus or the second apparatus may send the seventh information to the IMS network element, so that the IMS network element can learn of the configuration result of the second core network element for the switching of the call data between the first apparatus and the second apparatus on the satellite.

In an optional implementation, the first apparatus is a calling apparatus of the call, and the second apparatus is a called apparatus of the call.

According to an eighth aspect, an eighth communication method is provided. The method may be performed by a second core network element, may be performed by another device having functions of the second core network element, or may be performed by a chip system (or a chip) or another functional module, where the chip system or the functional module can implement the functions of the second core network element, and the chip system or the functional module is, for example, disposed in the second core network element. An example in which the method is performed by the second core network element is used in the following descriptions. The second core network element is, for example, a PCF. The method includes: receiving a second message, where the second message includes an identifier of a first apparatus, an identifier of a second apparatus, and fourth information, and the fourth information is for requesting switching of call data between the first apparatus and the second apparatus on a satellite; and sending, based on a second condition, fifth information to a first core network element that serves the first apparatus, where the fifth information indicates that the first apparatus and the second apparatus are to switch the call data on the satellite, and the first core network element that serves the first apparatus further serves the second apparatus, or the first core network element that serves the first apparatus does not serve the second apparatus.

In this embodiment of this application, a UPF may perform local switching on the call data between the first apparatus and the second apparatus, and both the first apparatus and the second apparatus access a network via the satellite. For example, the UPF may switch the call data between the first apparatus and the second apparatus on the satellite. Therefore, the call data can be switched on the satellite without being routed to a terrestrial network, to shorten a transmission path of the call data and reduce a delay. Because the UPF can perform local switching on the call data between the devices, the call data can directly arrive at a peer call device from the UPF without being transmitted through an IMS network element or the like, so that the transmission path is further shortened, and the delay is further reduced. In addition, the PCF may perform corresponding determining on whether the first apparatus and the second apparatus can switch the call data on the satellite, so that the first apparatus and the second apparatus can switch the call data on the satellite when the condition is met, to meet requirements of a communication scenario and a plurality of communication parameters.

In an optional implementation, the first core network element that serves the first apparatus does not serve the second apparatus, and the method further includes: sending sixth information to a first core network element that serves the second apparatus, where the sixth information indicates that the first apparatus and the second apparatus are to switch the call data on the satellite. If the first core network element that serves the first apparatus is different from the first core network element that serves the second apparatus, the second core network element may separately send the information to the two first core network elements, to indicate that the first apparatus and the second apparatus are to switch the call data on the satellite.

In an optional implementation, the second condition includes one or more of the following: A second core network element that serves an IMS PDU session of the first apparatus is the same as a second core network element that serves an IMS PDU session of the second apparatus; the first core network element that serves an IMS PDU session of the first apparatus is the same as the first core network element that serves an IMS PDU session of the second apparatus; both the first apparatus and the second apparatus access a network via the satellite; it is determined that the first apparatus and the second apparatus are covered by the same satellite; or it is determined that the first apparatus and the second apparatus are covered by different satellites, and there is an inter-satellite link between the different satellites. Alternatively, the second condition may further include another condition. This is not specifically limited.

In an optional implementation, the method further includes: receiving a third message, where the third message includes the identifier of the first apparatus, the identifier of the second apparatus, and the fourth information; and the sending, based on the second condition, the fifth information to the first core network element that serves the first apparatus includes: sending, based on the second condition, the second message, and the third message, the fifth information to the first core network element that serves the first apparatus. For example, if the second core network element that serves the first apparatus is the same as the second core network element that serves the second apparatus, the core network element may send the fifth information or send the fifth information and the sixth information after the second condition is met and the second message and the third message are received.

In an optional implementation, the method further includes: determining that the second core network element that serves the IMS PDU session of the first apparatus is different from the second core network element that serves the IMS PDU session of the second apparatus, and/or the first core network element that serves the IMS PDU session of the first apparatus is different from the first core network element that serves the IMS PDU session of the second apparatus; and sending first rejection information to the IMS network element, where the first rejection information indicates that the first apparatus and the second apparatus are rejected to switch the call data on the satellite. For example, the second core network element may send the first rejection information to the IMS network element if one or more of the following conditions are met: The second condition is not met, the second message is not received, or the third message is not received.

In an optional implementation, the method further includes: receiving eighth information from the first core network element that serves the IMS PDU session of the first apparatus, where the eighth information indicates a configuration result for the switching of the call data between the first apparatus and the second apparatus on the satellite; and sending seventh information to the IMS network element, where the seventh information indicates the configuration result for the switching of the call data between the first apparatus and the second apparatus on the satellite. For example, the second core network element may send the configuration result to the IMS network element after receiving the eighth information of the first core network element.

In an optional implementation, before the sending the eighth information to the IMS network element, the method further includes: receiving ninth information from the first core network element that serves the IMS PDU session of the second apparatus, where the ninth information indicates a configuration result for the switching of the call data between the first apparatus and the second apparatus on the satellite. If the second core network element that serves the first apparatus is the same as the second core network element that serves the second apparatus, the second core network element may send the configuration result to the IMS network element after receiving the eighth information and the ninth information from the two first core network elements.

According to a ninth aspect, a ninth communication method is provided. The method may be performed by a first core network element, may be performed by another device having functions of the first core network element, or may be performed by a chip system (or a chip) or another functional module, where the chip system or the functional module can implement the functions of the first core network element, and the chip system or the functional module is, for example, disposed in the first core network element. An example in which the method is performed by the first core network element is used in the following descriptions. The first core network element is, for example, an SMF. The method includes: receiving information from a second core network element, where the information indicates that a first apparatus and a second apparatus are to switch call data on a satellite; and sending third configuration information to a first user plane function entity based on a third condition, where the third configuration information is for configuring the first user plane function entity to directly forward the call data between the first apparatus and the second apparatus, the first user plane function entity is deployed on the satellite, and the first user plane function entity serves the first apparatus, or the first user plane function entity serves the first apparatus and the second apparatus.

In this embodiment of this application, the UPF may perform local switching on the call data between the first apparatus and the second apparatus, and both the first apparatus and the second apparatus access a network via the satellite. For example, the UPF may switch the call data between the first apparatus and the second apparatus on the satellite. Therefore, the call data can be switched on the satellite without being routed to a terrestrial network, to shorten a transmission path of the call data and reduce a delay. Because the UPF can perform local switching on the call data between the devices, the call data can directly arrive at a peer call device from the UPF without being transmitted through an IMS network element or the like, so that the transmission path is further shortened, and the delay is further reduced. In addition, the SMF may perform corresponding determining on whether the first apparatus and the second apparatus can switch the call data on the satellite, so that the first apparatus and the second apparatus can switch the call data on the satellite when the condition is met, to meet requirements of a communication scenario and a plurality of communication parameters.

In an optional implementation, the first user plane function entity serves the first apparatus, and the method further includes: sending fourth configuration information to a second user plane function entity, where the fourth configuration information is for configuring the second user plane function entity to directly forward the call data between the first apparatus and the second apparatus, the second user plane function entity is deployed on the satellite, and the second user plane function entity serves the second apparatus. If the UPF that serves the first apparatus is different from the UPF that serves the second apparatus, the first core network element may separately send the configuration information to the two UPFs, to separately configure the two UPFs.

In an optional implementation, the third condition includes one or more of the following: Both the first apparatus and the second apparatus access a network via the satellite; the first apparatus and the second apparatus are served by a same user plane function entity, where the same user plane function entity is deployed on the satellite; the first apparatus and the second apparatus are served by different user plane function entities, where the different user plane function entities are both deployed on the satellite, and a data transmission channel is capable of being established between the different user plane function entities; the first apparatus and the second apparatus are covered by the same satellite; or the first apparatus and the second apparatus are covered by different satellites, and there is an inter-satellite link between the different satellites. Alternatively, the third condition may further include another condition. This is not specifically limited.

According to a tenth aspect, a communication apparatus is provided. The communication apparatus may be the first core network element according to any one of the first aspect to the ninth aspect. The communication apparatus has functions of the first core network element. The communication apparatus is, for example, the first core network element, a large device including the first core network element, or a functional module, for example, a baseband apparatus or a chip system, in the first core network element. In an optional implementation, the communication apparatus includes the baseband apparatus and a radio frequency apparatus. In another optional implementation, the communication apparatus includes a processing unit (sometimes also referred to as a processing module) and a transceiver unit (sometimes also referred to as a transceiver module). The transceiver unit can implement a sending function and a receiving function. When the transceiver unit implements the sending function, the transceiver unit may be referred to as a sending unit (sometimes also referred to as a sending module). When the transceiver unit implements the receiving function, the transceiver unit may be referred to as a receiving unit (sometimes also referred to as a receiving module). The sending unit and the receiving unit may be a same functional module, the functional module is referred to as the transceiver unit, and the functional module can implement the sending function and the receiving function. Alternatively, the sending unit and the receiving unit may be different functional modules, and the transceiver unit is a general term for these functional modules.

In an optional implementation, the transceiver unit (or the receiving unit) is configured to receive first information from an IMS network element, where the first information indicates that a first apparatus and a second apparatus are to make a call. The transceiver unit (or the sending unit) is configured to send first configuration information to a UPF based on the first information, where the first configuration information is for configuring the UPF to perform local switching on call data between the first apparatus and the second apparatus, and both the first apparatus and the second apparatus access a network via a satellite.

In an optional implementation, the transceiver unit (or the receiving unit) is configured to receive information from a second core network element, where the information indicates that a first apparatus and a second apparatus are to switch call data on a satellite. The transceiver unit (or the sending unit) is configured to send third configuration information to a first user plane function entity based on a third condition, where the third configuration information is for configuring the first user plane function entity to directly forward the call data between the first apparatus and the second apparatus, the first user plane function entity is deployed on a satellite, and the first user plane function entity serves the first apparatus, or the first user plane function entity serves the first apparatus and the second apparatus.

In an optional implementation, the communication apparatus further includes a storage unit (sometimes also referred to as a storage module). The processing unit is configured to be coupled to the storage unit, and execute a program or instructions in the storage unit, to enable the communication apparatus to perform the functions of the first core network element according to any one of the first aspect to the sixth aspect.

According to an eleventh aspect, a communication apparatus is provided. The communication apparatus may be the IMS network element according to any one of the first aspect to the ninth aspect. The communication apparatus has functions of the IMS network element. The communication apparatus is, for example, the IMS network element, a large device including the IMS network element, or a functional module, for example, a baseband apparatus or a chip system, in the IMS network element. In an optional implementation, the communication apparatus includes the baseband apparatus and a radio frequency apparatus. In another optional implementation, the communication apparatus includes a processing unit (sometimes also referred to as a processing module) and a transceiver unit (sometimes also referred to as a transceiver module). For an implementation of the transceiver unit, refer to the descriptions in the tenth aspect.

In an optional implementation, the transceiver unit (or the receiving unit) is configured to receive a first request from a first apparatus, where the first request is for requesting to make a call with a second apparatus. The transceiver unit (or the sending unit) is configured to send first information to a first core network element, where the first information indicates that the first apparatus and the second apparatus are to make the call.

In an optional implementation, the transceiver unit (or the receiving unit) is configured to receive a first request from a first apparatus, where the first request is for requesting to make a call with a second apparatus, and both the first apparatus and the second apparatus access a network via a satellite. The processing unit is configured to determine that the first apparatus and the second apparatus are to switch call data on the satellite. The transceiver unit (or the sending unit) is configured to send address information of the second apparatus to the first apparatus, and send address information of the first apparatus to the second apparatus.

In an optional implementation, the transceiver unit (or the receiving unit) is configured to receive a first message, where the first message is used by a first apparatus to request to make a call with a second apparatus, or is used by the second apparatus to respond to a call request from the first apparatus. The processing unit is configured to determine, based on a first condition, that the first apparatus and the second apparatus are allowed to switch call data on a satellite. The transceiver unit (or the sending unit) is configured to send a second message to a second core network element, where the second message includes an identifier of the first apparatus, an identifier of the second apparatus, and fourth information, the fourth information is for requesting the switching of the call data between the first apparatus and the second apparatus on the satellite, and the second core network element is a second core network element that serves an IMS PDU session of the first apparatus and/or a second core network element that serves an IMS PDU session of the second apparatus.

In an optional implementation, the communication apparatus further includes a storage unit (sometimes also referred to as a storage module). The processing unit is configured to be coupled to the storage unit, and execute a program or instructions in the storage unit, to enable the communication apparatus to perform the functions of the IMS network element according to any one of the first aspect to the sixth aspect.

According to a twelfth aspect, a communication apparatus is provided. The communication apparatus may be the UPF according to any one of the first aspect to the ninth aspect. The communication apparatus has functions of the UPF. The communication apparatus is, for example, the UPF, a large device including the UPF, or a functional module, for example, a baseband apparatus or a chip system, in the UPF. In an optional implementation, the communication apparatus includes the baseband apparatus and a radio frequency apparatus. In another optional implementation, the communication apparatus includes a processing unit (sometimes also referred to as a processing module) and a transceiver unit (sometimes also referred to as a transceiver module). For an implementation of the transceiver unit, refer to the descriptions in the tenth aspect.

In an optional implementation, the transceiver unit (or the receiving unit) is configured to receive first configuration information. The processing unit is configured to perform configuration based on the first configuration information to perform local switching on call data between a first apparatus and a second apparatus, where both the first apparatus and the second apparatus access a network via a satellite.

In an optional implementation, the communication apparatus further includes a storage unit (sometimes also referred to as a storage module). The processing unit is configured to be coupled to the storage unit, and execute a program or instructions in the storage unit, to enable the communication apparatus to perform the functions of the IMS network element according to any one of the first aspect to the sixth aspect.

According to a thirteenth aspect, a communication apparatus is provided. The communication apparatus may be the first apparatus or the second apparatus according to any one of the first aspect to the ninth aspect. The communication apparatus has functions of the first apparatus or the second apparatus. The communication apparatus is, for example, the first apparatus or the second apparatus, a large device including the first apparatus or the second apparatus, or a functional module, for example, a baseband apparatus or a chip system, in the first apparatus or the second apparatus. In an optional implementation, the communication apparatus includes the baseband apparatus and a radio frequency apparatus. In another optional implementation, the communication apparatus includes a processing unit (sometimes also referred to as a processing module) and a transceiver unit (sometimes also referred to as a transceiver module). For an implementation of the transceiver unit, refer to the descriptions in the tenth aspect.

In an optional implementation, the transceiver unit (or the receiving unit) is configured to send second information to an IMS network element, where the second information indicates that the terminal device requests switching of call data of the terminal device on a satellite.

In an optional implementation, the transceiver unit (or the receiving unit) is configured to receive a second request from an IMS network element, where the second request includes address information of a second apparatus, where the first apparatus is a calling device, and the second apparatus is a called device; or the first apparatus is a called device, the second apparatus is a calling device; and both the first apparatus and the second apparatus access a network via a satellite. The transceiver unit (or the sending unit) is configured to send call data to a UPF, where destination address information of the call data is the address information of the second apparatus.

In an optional implementation, the communication apparatus further includes a storage unit (sometimes also referred to as a storage module). The processing unit is configured to be coupled to the storage unit, and execute a program or instructions in the storage unit, to enable the communication apparatus to perform the functions of the first apparatus or the second apparatus according to any one of the first aspect to the sixth aspect.

According to a fourteenth aspect, a communication apparatus is provided. The communication apparatus may be the second core network element according to any one of the first aspect to the ninth aspect. The communication apparatus has functions of the second core network element. The communication apparatus is, for example, the second core network element, a large device including the second core network element, or a functional module, for example, a baseband apparatus or a chip system, in the second core network element. In an optional implementation, the communication apparatus includes the baseband apparatus and a radio frequency apparatus. In another optional implementation, the communication apparatus includes a processing unit (sometimes also referred to as a processing module) and a transceiver unit (sometimes also referred to as a transceiver module). For an implementation of the transceiver unit, refer to the descriptions in the tenth aspect.

In an optional implementation, the transceiver unit (or the receiving unit) is configured to receive a second message, where the second message includes an identifier of a first apparatus, an identifier of a second apparatus, and fourth information, and the fourth information is for requesting switching of call data between the first apparatus and the second apparatus on a satellite. The transceiver unit (or the sending unit) is configured to send, based on a second condition, fifth information to a first core network element that serves the first apparatus, where the fifth information indicates that the first apparatus and the second apparatus are to switch the call data on the satellite, and the first core network element that serves the first apparatus further serves the second apparatus, or the first core network element that serves the first apparatus does not serve the second apparatus.

In an optional implementation, the communication apparatus further includes a storage unit (sometimes also referred to as a storage module). The processing unit is configured to be coupled to the storage unit, and execute a program or instructions in the storage unit, to enable the communication apparatus to perform the functions of the second core network element according to any one of the first aspect to the ninth aspect.

According to a fifteenth aspect, a communication apparatus is provided. The communication apparatus may be a first core network element, or may be a chip or a chip system used in the first core network element. The communication apparatus includes a communication interface and a processor, and optionally, further includes a memory. The memory is configured to store a computer program. The processor is coupled to the memory and the communication interface. When the processor reads the computer program or instructions, the communication apparatus is caused to perform the method performed by the first core network element in the foregoing aspects.

According to a sixteenth aspect, a communication apparatus is provided. The communication apparatus may be an IMS network element, or may be a chip or a chip system used in the IMS network element. The communication apparatus includes a communication interface and a processor, and optionally, further includes a memory. The memory is configured to store a computer program. The processor is coupled to the memory and the communication interface. When the processor reads the computer program or instructions, the communication apparatus is caused to perform the method performed by the IMS network element in the foregoing aspects.

According to a seventeenth aspect, a communication apparatus is provided. The communication apparatus may be a UPF, or may be a chip or a chip system used in the UPF. The communication apparatus includes a communication interface and a processor, and optionally, further includes a memory. The memory is configured to store a computer program. The processor is coupled to the memory and the communication interface. When the processor reads the computer program or instructions, the communication apparatus is caused to perform the method performed by the UPF in the foregoing aspects.

According to an eighteenth aspect, a communication apparatus is provided. The communication apparatus may be a terminal device, or may be a chip or a chip system used in the terminal device. The communication apparatus includes a communication interface and a processor, and optionally, further includes a memory. Optionally, the terminal device is, for example, the first apparatus or the second apparatus according to any one or more of the foregoing aspects. The memory is configured to store a computer program. The processor is coupled to the memory and the communication interface. When the processor reads the computer program or instructions, the communication apparatus is caused to perform the method performed by the first apparatus or the second apparatus in the foregoing aspects.

According to a nineteenth aspect, a communication apparatus is provided. The communication apparatus may be a second core network element, or may be a chip or a chip system used in the second core network element. The communication apparatus includes a communication interface and a processor, and optionally, further includes a memory. The memory is configured to store a computer program. The processor is coupled to the memory and the communication interface. When the processor reads the computer program or instructions, the communication apparatus is caused to perform the method performed by the second core network element in the foregoing aspects.

According to a twentieth aspect, a communication system is provided, including a first core network element and an IMS network element, where the first core network element is configured to perform the method performed by the first core network element according to any one of the first aspect to the fourth aspect, and the IMS network element is configured to perform the method performed by the IMS network element according to any one of the first aspect to the fourth aspect. For example, the first core network element may be implemented by the communication apparatus according to the tenth aspect or the fifteenth aspect, and the IMS network element may be implemented by the communication apparatus according to the eleventh aspect or the sixteenth aspect.

Optionally, the communication system further includes a UPF, and the UPF is configured to perform the method performed by the UPF according to any one of the first aspect to the fourth aspect. For example, the UPF may be implemented by the communication apparatus according to the twelfth aspect or the seventeenth aspect.

Optionally, the communication system further includes a terminal device, and the terminal device is configured to perform the method performed by the first apparatus or the second apparatus according to any one of the first aspect to the fourth aspect. For example, the terminal device may be implemented by the communication apparatus according to the thirteenth aspect or the eighteenth aspect.

According to a twenty-first aspect, another communication system is provided, including a first core network element, where the first core network element is configured to perform the method performed by the first core network element according to the fifth aspect or the sixth aspect. For example, the first core network element may be implemented by the communication apparatus according to the tenth aspect or the fifteenth aspect.

Optionally, the communication system further includes a terminal device, and the terminal device is configured to perform the method performed by the first apparatus or the second apparatus according to the fifth aspect or the sixth aspect. For example, the terminal device may be implemented by the communication apparatus according to the thirteenth aspect or the eighteenth aspect.

According to a twenty-second aspect, still another communication system is provided, including an IMS network element, where the IMS network element is configured to perform the method performed by the IMS network element according to any one of the sixth aspect to the ninth aspect. For example, the IMS network element may be implemented by the communication apparatus according to the eleventh aspect or the sixteenth aspect.

Optionally, the communication system further includes a second core network element, and the second core network element is configured to perform the method performed by the second core network element according to any one of the sixth aspect to the ninth aspect. For example, the second core network element may be implemented by the communication apparatus according to the fourteenth aspect or the nineteenth aspect.

Optionally, the communication system further includes a first core network element, and the first core network element is configured to perform the method performed by the first core network element according to any one of the sixth aspect to the ninth aspect. For example, the first core network element may be implemented by the communication apparatus according to the tenth aspect or the fifteenth aspect.

According to a twenty-third aspect, a computer-readable storage medium is provided. The computer-readable storage medium is configured to store a computer program or instructions. When the computer program or the instructions are run, the method performed by the first core network element, the second core network element, the IMS network element, the UPF, or the terminal device in the foregoing aspects is implemented.

According to a twenty-fourth aspect, a computer program product including instructions is provided. When the computer program product runs on a computer, the methods in the foregoing aspects are implemented.

According to a twenty-fifth aspect, a chip or a chip system is provided, including a processor and an interface. The processor is configured to invoke instructions from the interface and run the instructions, to cause the chip or the chip system to implement the methods in the foregoing aspects.

### BRIEF DESCRIPTION OF DRAWINGS

FIG. 1 is a diagram of a transmission path of call data;
FIG. 2A is a diagram of a 5G network architecture;
FIG. 2B is a diagram of an IMS architecture;
FIG. 3A to FIG. 3E are diagrams of several application scenarios according to embodiments of this application;
FIG. 4A and FIG. 4B are two flowcharts of a communication method according to an embodiment of this application;
FIG. 5A is a flowchart of another communication method according to an embodiment of this application;
FIG. 5B is a diagram of source address information included in a data packet corresponding to a SIP message according to an embodiment of this application;
FIG. 6 is a diagram of an apparatus according to an embodiment of this application;
FIG. 7 is a diagram of another apparatus according to an embodiment of this application;
FIG. 8A and FIG. 8B are a flowchart of still another communication method according to an embodiment of this application; and
FIG. 9 is a flowchart of yet another communication method according to an embodiment of this application.

### DESCRIPTION OF EMBODIMENTS

To make objectives, technical solutions, and advantages of embodiments of this application clearer, the following further describes embodiments of this application in detail with reference to the accompanying drawings.

In embodiments of this application, unless otherwise specified, a quantity of a noun indicates "a singular noun or a plural noun", namely, "one or more". "At least one" means one or more, and "a plurality of" means two or more. "And/or" describes an association relationship between associated objects and indicates that three relationships may exist. For example, A and/or B may indicate the following three cases: Only A exists, both A and B exist, and only B exists, where A and B may be singular or plural. The character "/" generally indicates an "or" relationship between associated objects. For example, A/B indicates A or B. "At least one of the following items (pieces)" or a similar expression thereof means any combination of these items, including a singular item (piece) or any combination of plural items (pieces). For example, at least one of a, b, or c indicates a, b, c, a and b, a and c, b and c, or a, b, and c, where a, b, and c may be singular or plural.

Ordinal numbers such as "first" and "second" in embodiments of this application are for distinguishing between a plurality of objects, but are not for limiting sizes, content, a sequence, a time sequence, priorities, importance, or the like of the plurality of objects. In addition, step numbers in embodiments described in this application are merely intended to distinguish between different steps, but are not intended to limit a sequence of the steps. For example, S501 may occur before S502, after S502, or simultaneously with S502.

The following describes some terms or concepts in embodiments of this application, to help a person skilled in the art have an understanding.

In embodiments of this application, a terminal device is a device having a wireless transceiver function, and may be a fixed device, a mobile device, a handheld device (for example, a mobile phone), a wearable device, a vehicle-mounted device, or a wireless apparatus (for example, a communication module, a modem, or a chip system) built in the foregoing device. The terminal device is configured to connect people, things, machines, and the like, and may be widely used in various scenarios, for example, including but not limited to the following scenarios: a sensing scenario, cellular communication, device-to-device (device-to-device, D2D) communication, vehicle-to-everything (vehicle-to-everything, V2X), machine-to-machine/machine type communication (machine-to-machine/machine type communication, M2M/MTC), an internet of things (internet of things, IoT), virtual reality (virtual reality, VR), augmented reality (augmented reality, AR), industrial control (industrial control), self-driving (self-driving), telemedicine (telemedicine), a smart grid (smart grid), smart furniture, smart office, smart wearables, smart transportation, a smart city (smart city), an uncrewed aerial vehicle, a robot, and indoor commercial scenarios (such as mobile phone projection, file sharing, and video transmission from a mobile phone to VR glasses). When the terminal device is used in V2X, the terminal device may also be referred to as a V2X device, for example, a smart car (smart car or intelligent car), a digital car (digital car), an unmanned car (unmanned car, driverless car, pilotless car, or automobile), a self-driving car (self-driving car or autonomous car), a pure electric vehicle (pure EV or Battery EV), a hybrid electric vehicle (hybrid electric vehicle, HEV), a range extended electric vehicle (range extended EV, REEV), a plug-in hybrid electric vehicle (plug-in HEV, PHEV), a new energy vehicle (new energy vehicle), or a road side unit (road side unit, RSU). Alternatively, the terminal device may be a device, for example, an electricity meter or a water meter, in the D2D communication.

In addition, in embodiments of this application, the terminal device may alternatively be a terminal device in an IoT system. An IoT is an important part of future development of information technologies. A main technical feature of the IoT is connecting a thing to a network by using a communication technology, to implement an intelligent network for interconnection between a person and a machine or between things.

If the terminal devices described above are located in a vehicle (for example, placed in the vehicle or mounted in the vehicle), the terminal devices may be all considered as vehicle-mounted terminal devices. For example, the vehicle-mounted terminal device is also referred to as an on-board unit (on-board unit, OBU). The terminal device in this application may alternatively be a vehicle module, a vehicle-mounted assembly, a vehicle-mounted component, a vehicle-mounted chip, or a vehicle-mounted unit that is disposed in a vehicle as one or more components or units. The vehicle may implement a method in this application by using the vehicle-mounted module, the vehicle-mounted assembly, the vehicle-mounted component, the vehicle-mounted chip, or the vehicle-mounted unit that is disposed in the vehicle.

The terminal device may sometimes be referred to as a UE, a terminal, an access station, a UE station, a remote station, a wireless communication device, a user apparatus, or the like.

In the following descriptions of embodiments of this application, a first apparatus is, for example, a terminal device or a functional module, for example, a chip system, in the terminal device; and a second apparatus is, for example, a terminal device or a functional module, for example, a chip system, in the terminal device.

In embodiments of this application, a communication apparatus configured to implement functions of the terminal device may be a terminal device, or may be an apparatus, for example, a chip system, that can support the terminal device in implementing the functions. The apparatus may be mounted in the terminal device. In the technical solutions provided in embodiments of this application, the technical solutions provided in embodiments of this application are described by using an example in which the apparatus configured to implement the functions of the terminal device is the terminal device. In addition, for ease of description, in embodiments of this application, an example in which the terminal device is a UE is used for description. For example, the first apparatus is referred to as a first UE, and the second apparatus is referred to as a second UE.

A network device in embodiments of this application includes, for example, an access network device and/or a core network device. The access network device is a device having a wireless transceiver function, and is configured to communicate with the terminal device. The access network device includes but is not limited to a base station (a base transceiver station (base transceiver station, BTS), a NodeB (NodeB), an evolved NodeB (evolved NodeB, eNodeB)/eNB, or a next-generation NodeB (next-generation NodeB, gNodeB)/gNB), a transmission reception point (transmission reception point, TRP), a subsequently evolved base station in the 3rd generation partnership project (3rd generation partnership project, 3GPP), an access node in a wireless fidelity (wireless fidelity, Wi-Fi) system, a wireless relay node, a wireless backhaul node, and the like. The base station may be a macro base station, a micro base station, a picocell base station, a small cell, a relay station, or the like. A plurality of base stations may support networks using a same access technology, or may support networks using different access technologies. The base station may include one or more co-site or non-co-site transmission reception points. Alternatively, the access network device may be a radio controller in a cloud radio access network (cloud radio access network, CRAN) scenario, a central unit (central unit, CU), and/or a distributed unit (distributed unit, DU). Alternatively, the access network device may be a server or the like. For example, a network device in a V2X technology may be a road side unit (road side unit, RSU). The following provides descriptions by using an example in which the access network device is the base station. The base station may communicate with the terminal device, or may communicate with the terminal device via a relay station. The terminal device may communicate with a plurality of base stations in different access technologies. The core network device is configured to implement mobility management, data processing, session management, policy and charging, and the like. Names of devices that implement core network functions in systems using different access technologies may be different. This is not limited in embodiments of this application. Using a 5th generation (5th generation, 5G) mobile communication technology system as an example, the core network device includes an access and mobility management function (access and mobility management function, AMF), a session management function (session management function, SMF), a policy control function (policy control function, PCF), a user plane function (user plane function, UPF), or the like.

In a CU-DU architecture, the access network device may include one or more of logical network elements such as a central unit (central unit, CU), a distributed unit (distributed unit, DU), a CU-control plane (control plane, CP), a CU-user plane (user plane, UP), or a radio unit (radio unit, RU). The CU and the DU may be separately arranged, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may also have different names, but a person skilled in the art may understand meanings thereof. For example, in an ORAN system, the CU may also be referred to as an open-CU (open-CU, O-CU), the DU may also be referred to as an O-DU, the CU-CP may also be referred to as an O-CU-CP, the CU-UP may also be referred to as an O-CU-UP, and the RU may also be referred to as an O-RU. For ease of description, in embodiments of this application, the CU, the CU-CP, the CU-UP, the DU, and the RU are used as examples for description. In embodiments of this application, any unit in the CU (or the CU-CP or the CU-UP), the DU, and the RU may be implemented by a software module, a hardware module, or a combination of a software module and a hardware module.

In embodiments of this application, a communication apparatus configured to implement functions of the network device may be a network device, or may be an apparatus, for example, a chip system, that can support the network device in implementing the functions. The apparatus may be mounted in the network device. In the technical solutions provided in embodiments of this application, the technical solutions provided in embodiments of this application are described by using an example in which the apparatus configured to implement the functions of the network device is the network device.

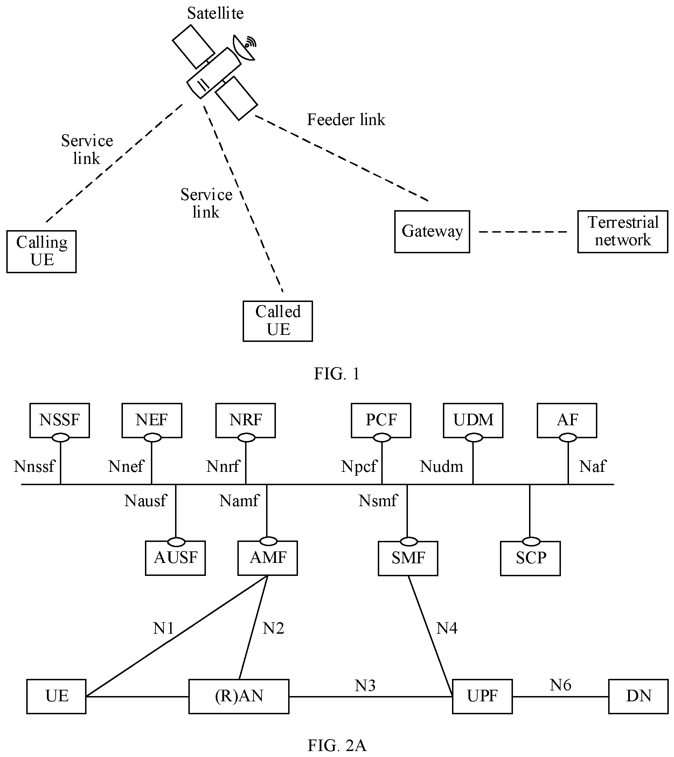

FIG. 1 is a diagram of a current transmission path of call data. In FIG. 1, for example, a base station is deployed on a satellite, and both a calling UE and a called UE access a network via the base station on the same satellite. The calling UE initiates a call. The call data arrives at the satellite through a service link (service link) between the calling UE and the satellite, and then arrives at a terrestrial gateway (gateway) through a feeder link (feeder link) between the satellite and the gateway. The gateway sends the call data to another network element, for example, a core network element or an IMS network element, in a terrestrial network. After being processed by the network element in the terrestrial network, the call data arrives at the gateway through the feeder link, is sent to the satellite by the gateway, and then is sent to the called UE by the satellite. It can be learned that the transmission path of the call data is long; and the call data needs to be routed from the satellite to the terrestrial network in a transmission process, and a distance between network elements is long. Consequently, a call delay is long.

FIG. 1 shows a case that involves only one satellite. Actually, there is also a scenario in which a plurality of satellites are connected to a terrestrial gateway through an inter-satellite link. To be specific, a service link is established between a UE and a satellite 1, a feeder link is established between a satellite 2 and a terrestrial gateway, and an inter-satellite link is established between the satellite 1 and the satellite 2. In this scenario, the inter-satellite link and the feeder link may also be referred to as a terrestrial link in combination.

In view of this, in embodiments of this application, a UPF may perform local switching on call data between a first UE and a second UE based on first configuration information, and both the first UE and the second UE access a network via a satellite. For example, the UPF may switch the call data between the first UE and the second UE on the satellite. Therefore, the call data can be switched on the satellite without being routed to a terrestrial network, to shorten a transmission path of the call data and reduce a delay. In addition, because the UPF can perform local switching on the call data between the devices, the call data can directly arrive at a peer call device from the UPF without being transmitted through some IMS network elements in an IMS network, so that the transmission path is further shortened, and the delay is further reduced.

The technical solutions provided in embodiments of this application may be applied to a 4th generation (4th generation, 4G) mobile communication technology system, for example, a long term evolution (long term evolution, LTE) system, may be applied to a 5th generation (5th generation, 5G) mobile communication technology system, for example, an NR system, or may be applied to a next-generation mobile communication system or another similar communication system, for example, a 6th generation (6th generation, 6G) mobile communication technology system. This is not specifically limited. In addition, the technical solutions provided in embodiments of this application may be applied to a sidelink (sidelink, SL). For example, the SL belongs to a D2D scenario, for example, an NR-D2D scenario, or belongs to a V2X scenario, for example, an NR-V2X scenario. For example, embodiments of this application may be applied to factory manufacturing, whole-house intelligence, intelligent driving, assisted driving, intelligent connected vehicles, indoor commercial scenarios, or the like.

FIG. 2A is a diagram of a 5G network architecture. The network architecture is also a network architecture to which embodiments of this application are applied. FIG. 2A shows an interaction relationship between network functions and entities, and shows corresponding interfaces. For example, a UE and an AMF may interact with each other through an N1 interface, and an interaction message is referred to as an N1 message (message). Some interfaces in FIG. 2A may be implemented by service-based interfaces. FIG. 2A includes a network slice selection function (network slice selection function, NSSF), a network exposure function (network exposure function, NEF), a network repository function (network repository function, NRF), a PCF, a UDM, an application function (application function, AF), an authentication server function (authentication server function, AUSF), the AMF, an SMF, a signaling control point (signaling control point, SCP), the UE, a (R)AN, a UPF, a data network (data network, DN), and the like.

The UE, the (R)AN, the UPF, and the data network (data network, DN) in FIG. 2A are generally referred to as data plane network functions and entities. Data traffic of a user may be communicated through a protocol data unit (protocol data unit, PDU) session (session) established between the UE and the DN, and the transmission passes through two network function entities: the (R)AN and the UPF. Remaining parts in FIG. 2A are referred to as control plane network functions and entities, and are mainly responsible for authentication, registration management, session management, mobility management, policy control, and the like, to implement reliable and stable transmission of user plane traffic. A user plane is for carrying service data, and a control plane is for carrying a signaling message.

An access network element, for example, the (R)AN, is mainly responsible for radio resource management, quality of service management, data compression and ciphering, and the like on an air interface side. The access network device may include various forms of base stations, such as a macro base station, a micro base station, a relay station, and an access point. In systems using different radio access technologies, a device having functions of a base station may have different names. For example, in a 5G system, the device is referred to as a gNB.

The AMF, namely, an access and mobility management entity, is a core network element, and is mainly responsible for UE access and mobility management-related signaling processing such as access control, mobility management, registration and deregistration, and SMF selection. The AMF serves as an anchor of N1 and N2 signaling connections, provides routing of N1 and N2 messages for the UE and a network element in a core network, and is responsible for maintaining and managing status information of the UE. When the AMF serves a session of the UE, the AMF provides a control plane storage resource for the session, to store a session identifier, an SMF network element identifier associated with the session identifier, or the like.

The SMF, namely, a session management entity, is responsible for signaling processing of session management, user plane network element selection, user plane network element redirection, internet protocol (internet protocol, IP) address allocation, bearer establishment, modification, and release, quality of service (quality of service, QoS) control, and the like.

The UPF, namely, a user plane entity, is responsible for forwarding and receiving of user data in the UE. The UPF may receive user data from the DN, and transmit the user data to the UE through an access network element. The UPF may further receive user data from the UE through an access network element, and then forward the user data to the DN. A transmission resource and a scheduling function in the UPF that serve the UE are managed and controlled by the SMF.

The NEF mainly supports secure interaction between a 3rd generation partnership project (3rd generation partnership project, 3GPP) network and a third-party application.

The AF is a server that provides a service of a specific type for the user, and therefore may also be referred to as an application server or a service server. The AF may be an AF deployed by an operator network, or may be a third-party AF.

The DN is, for example, an operator service IMS, internet (internet) access, or a third-party service.

The PCF is responsible for policy control decisions, provision of policy rules for control plane functions, and traffic-based charging control functions.

The UDM is mainly responsible for management of subscription data of the UE, including storage and management of an identifier of the UE, access authorization of the UE, and the like.

The NRF supports registration and discovery of network functions.

Related interfaces between the network element functions in embodiments of this application include:
N1: is an interface between the UE and the control plane of the core network.
N2: is a communication interface between the (R)AN and the control plane of the core network.
N3: is a communication interface between the (R)AN and the UPF, and is configured to communicate user plane data.
N4: is a communication interface between the SMF and the UPF, and is used by the SMF to perform policy configuration and the like on the UPF.
N6: is a communication port between the UPF and the DN.

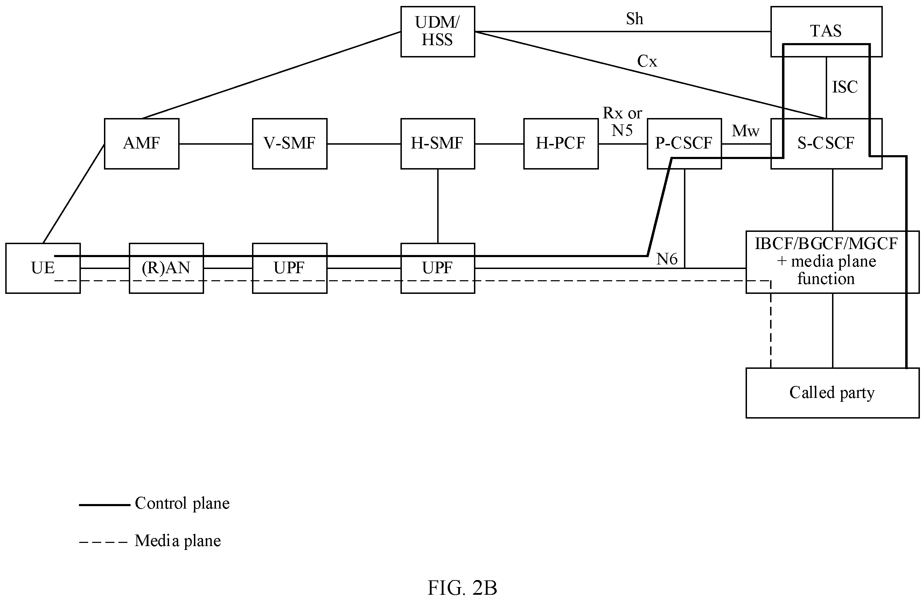

FIG. 2B is a diagram of an IMS architecture. The network architecture is also a network architecture to which embodiments of this application are applied. The IMS architecture mainly involves the following network elements: a UE, a (R)AN, a UPF, an AMF, a visited (visited)-SMF, a UDM, a home subscriber server (home subscriber server, HSS), a home (home)-SMF, an H-PCF, a proxy-call session control function (proxy-call session control function), a service-call session control function (service-call session control function, S-CSCF), a telecom application server (telecom application server, TAS), an interconnection border control function (interconnection border control function, IBCF), a breakout gateway control function (breakout gateway control function, BGCF), a media gateway control function (media gateway control function, MGCF), a called party (B party), and the like. FIG. 2B shows two transmission paths. A bold solid line indicates a control plane (control plane) transmission path, and a dashed line indicates a media plane (media plane) transmission path. In addition, Sh, Cx, Rx, N5, Mw, ISC, N5, and the like in FIG. 2B all represent interface names.

The P-CSCF is a 1^{st} access point in the IMS. The P-CSCF acts like a proxy. The P-CSCF receives a request, and internally serves the request or forwards the request upward.

The S-CSCF performs a session control service for the UE. The S-CSCF maintains a session status based on a requirement of a network operator to support a service.

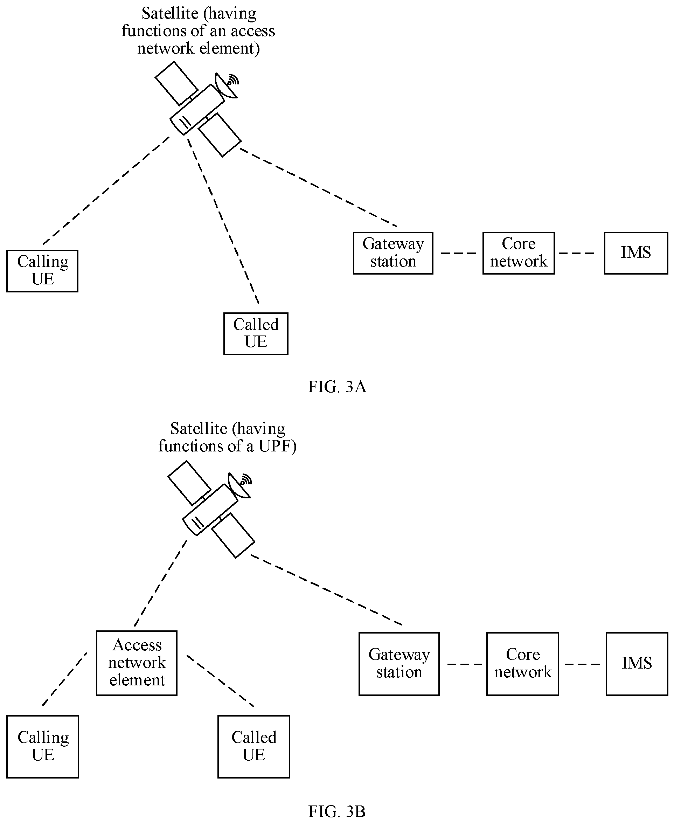

Based on the architectures shown in FIG. 2A and FIG. 2B, FIG. 3A to FIG. 3E show several network architectures to which embodiments of this application are applied.

In FIG. 3A, the access network element is disposed on a satellite, or it is considered that the satellite has functions of the access network element. Network elements (for example, a core network element and/or an IMS network element) for call service transmission other than the access network element are all located on the ground. The IMS network element in embodiments of this application may be a network element located in the IMS. The P-CSCF, the S-CSCF, and the like may all be referred to as IMS network elements.

In FIG. 3B, the UPF is disposed on a satellite, or it is considered that the satellite has functions of the UPF. Network elements (for example, one or more of the access network element, a core network element other than the UPF, or an IMS network element) for call service transmission other than the UPF are all located on the ground. FIG. 3B uses an example in which a calling UE and a called UE are served by a same access network element on the ground. It may be understood that in a scenario in which the UPF is disposed on the satellite and the access network device is on the ground, the calling UE and the called UE may be served by different access network elements.

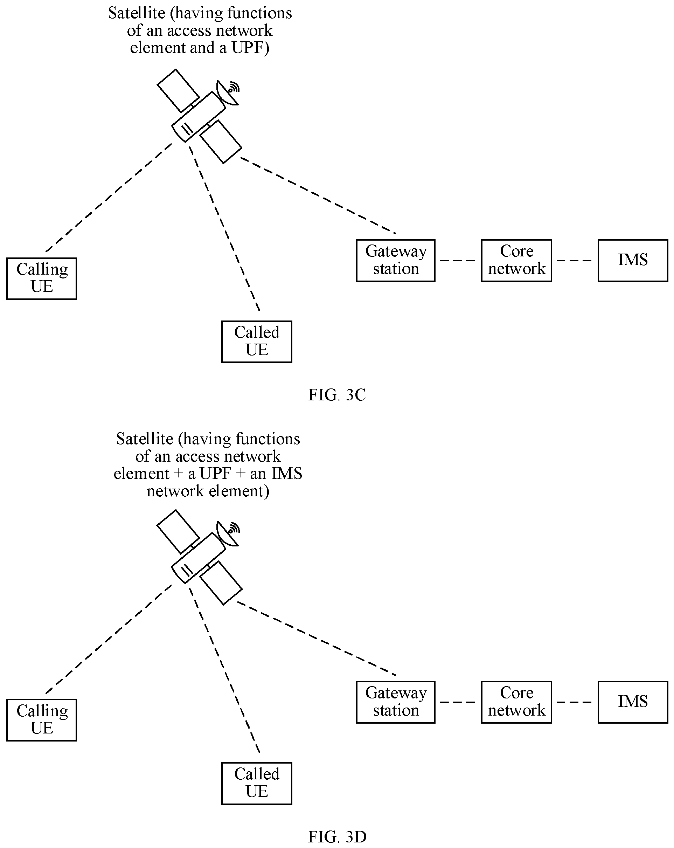

In FIG. 3C, the access network element and the UPF are disposed on a satellite, or it is considered that the satellite has functions of the access network element and the UPF. Network elements (for example, a core network element other than the UPF and/or an IMS network element) for call service transmission other than the access network element and the UPF are all located on the ground.

In FIG. 3D, the access network element, the UPF, and a part or all (for example, the P-CSCF and/or the S-CSCF) of network elements in the IMS are all disposed on a satellite, or it is considered that the satellite has functions of the access network element, the UPF, and the part or all (for example, the P-CSCF and/or the S-CSCF) of the network elements in the IMS. Network elements (for example, a core network element other than the UPF and/or another network element in the IMS) for call service transmission other than the access network element, the UPF, and the part or all of the network elements in the IMS are all located on the ground.

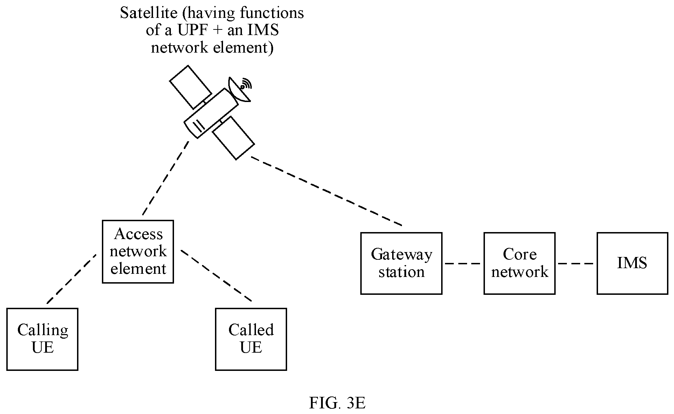

In FIG. 3E, the UPF and a part or all (for example, the P-CSCF and/or the S-CSCF) of network elements in the IMS are all disposed on a satellite, or it is considered that the satellite has functions of the UPF and the part or all (for example, the P-CSCF and/or the S-CSCF) of the network elements in the IMS. Network elements (for example, one or more of the access network element, a core network element other than the UPF, or another network element in the IMS) for call service transmission other than the UPF and the part or all of the network elements in the IMS are all located on the ground. In a scenario in which the access network device is on the ground, a calling UE and a called UE may be served by a same access network element or different access network elements.

Alternatively, all network elements for call service transmission may be disposed on a satellite. This is not limited in embodiments of this application.

Based on scenarios of deployment of a satellite and a terrestrial network, satellite network architectures may be classified into three types: a transparent satellite architecture, a satellite backhaul architecture, and a regenerative satellite architecture. An architecture in which a UE is connected to a terrestrial access network via a satellite may be referred to as the transparent satellite architecture (not included in FIG. 3A to FIG. 3E). An architecture in which a UE is connected to a terrestrial access network and then connected to a terrestrial network via a satellite may be referred to as the satellite backhaul architecture (for example, in FIG. 3B or FIG. 3E). In addition, an architecture in which an access network device is located on a satellite is referred to as the regenerative satellite architecture (for example, in FIG. 3A, FIG. 3C, or FIG. 3D). Embodiments of this application relate to the satellite backhaul architecture and the regenerative satellite architecture, and do not relate to the satellite backhaul architecture.

In addition, FIG. 3A to FIG. 3E use an example in which the calling UE and the called UE access a network via the same satellite.

To better describe embodiments of this application, the following describes, with reference to the accompanying drawings, methods provided in embodiments of this application. In embodiments of this application, call data includes, for example, voice data, video data, and/or IMS data channel (data channel) data. In embodiments of this application, a UPF that serves a UE may be a UPF that serves an IMS PDU session of the UE. For example, the UPF is an anchor (anchor) UPF of the IMS PDU session, may be a non-anchor UPF of the IMS PDU session, or is referred to as an intermediate UPF (intermediate UPF). In embodiments of this application, that a specific network element is deployed on a satellite may also be described as: The network element is located on the satellite. Unless otherwise specified below, in the accompanying drawings corresponding to embodiments of this application, steps represented by dashed lines are all optional steps.

All the methods provided in embodiments of this application may be applied to the network architecture shown in any one of FIG. 3A to FIG. 3E. For example, a first UE in embodiments of this application may be the calling UE shown in any one of FIG. 3A to FIG. 3E; a second UE in embodiments of this application may be the called UE shown in any one of FIG. 3A to FIG. 3E; an IMS network element in embodiments of this application may be the P-CSCF shown in any one of FIG. 3A to FIG. 3E or the S-CSCF shown in any one of FIG. 3A to FIG. 3E; and a first core network element in embodiments of this application may be the SMF shown in any one of FIG. 3A to FIG. 3E. In the following descriptions, an example in which the first core network element is the SMF is used. The following scenario in which "a UPF is deployed on a satellite" is, for example, the scenario shown in any one of FIG. 3B, FIG. 3C, FIG. 3D, or FIG. 3E. The following scenario in which "a RAN is deployed on a satellite" is, for example, the scenario shown in any one of FIG. 3A, FIG. 3C, or FIG. 3D.

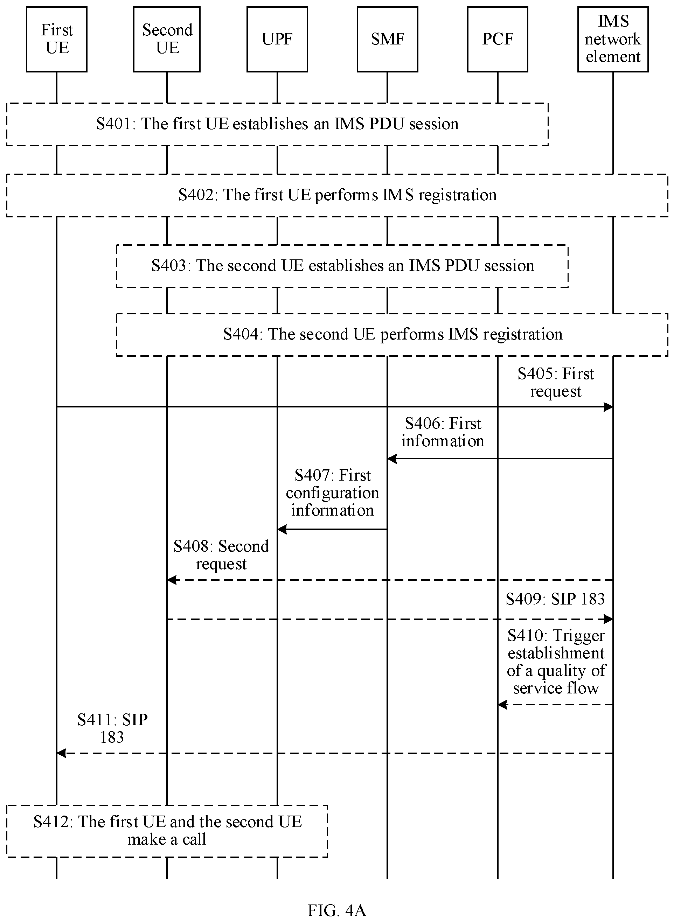

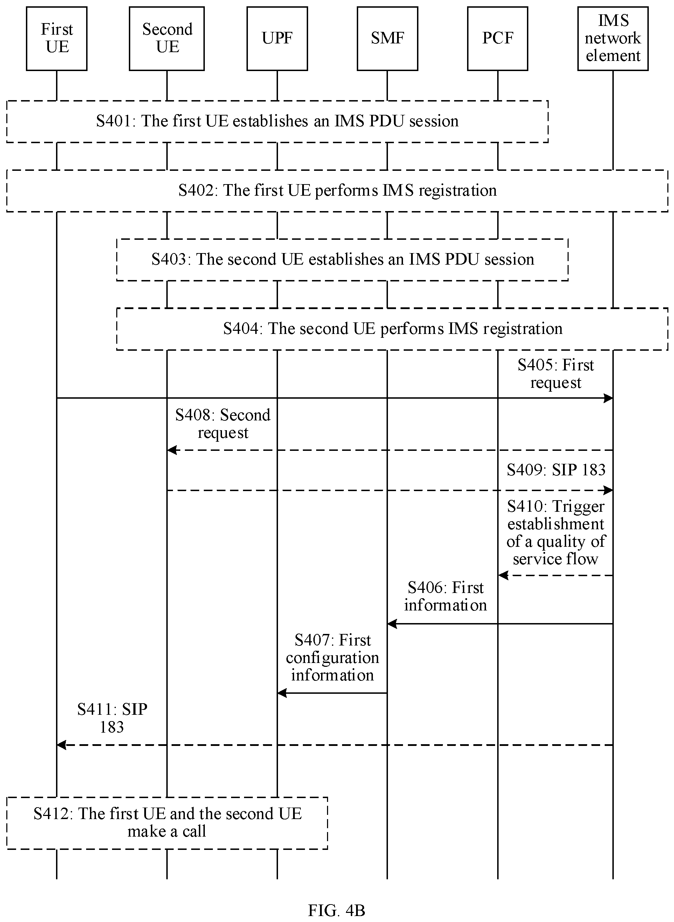

An embodiment of this application provides a communication method. FIG. 4A or FIG. 4B is a flowchart of the method.

S401: A first UE establishes a PDU session. The PDU session may be for carrying IMS communication-related signaling and data, and therefore may also be referred to as an IMS PDU session.

In S401, the first UE may send a PDU session establishment request (PDU session establishment request) message to an SMF through an AMF. A data network name (data network name, DNN) included in the PDU session establishment request message is IMS, that is, the PDU session is for carrying the IMS communication-related signaling and data. In a process of making an emergency call, the DNN included in the PDU session establishment request message may alternatively be a DNN, for example, emergency (emergency), that describes emergency communication. After receiving the PDU session establishment request message, the SMF sends a PDU session establishment accept (PDU session establishment accept) message to the UE. The PDU session establishment accept message may include an IP address corresponding to the PDU session. The IP address is allocated by the SMF or a UPF to the first UE in a process of establishing the PDU session, and is used by the first UE to perform subsequent communication through the PDU session. In addition, in S401, the SMF may establish, for the first UE, a quality of service (quality of service, QoS) flow (flow) for carrying IMS signaling, where a 5G quality of service identifier (5G QoS identifier, 5QI) of the QoS flow is, for example, 5. Details of more steps of establishing the PDU session are not described herein.

In the process of establishing the PDU session, the first UE may further obtain an address of a P-CSCF in an IMS, where the address is for subsequent communication between the first UE and the IMS.

S402: The first UE performs IMS registration.

In S402, the first UE may send a session initiation protocol (session initialization protocol, SIP) registration (registration) message to an IMS network element (for example, the P-CSCF) through the IMS PDU session and the QoS flow that are established in S401, to perform the IMS registration procedure, request to register with the IMS network element, or request to register with the IMS network element. Optionally, the SIP registration message may include a private (private, P)-access (Access)-network (Network)-information (Info) information element, and the information element may indicate that the first UE accesses a network via a satellite. For example, the first UE may receive system information from an access network element, and may determine, based on the system information, whether the first UE accesses the network via the satellite. Alternatively, the first UE may determine, based on a public land mobile network (public land mobile network, PLMN) in which the first UE is located, whether the first UE accesses the network via the satellite.

If the registration succeeds, the first UE may receive a SIP registration ok (or referred to as 200 OK) message from the IMS network element (for example, the P-CSCF). A detailed process of the IMS registration procedure is not described. The first UE registers with the IMS through S402.

For the first UE that performs IMS registration, an IMS network element (for example, including the P-CSCF and/or an S-CSCF) may store registration information of the first UE. The registration information of the first UE includes, for example, one or more of the following: a first identifier of the first UE, an IP address of the first UE, or a second identifier of the first UE. The first identifier of the first UE may indicate (or identify) the first UE in a communication system, for example, uniquely indicate the first UE in the communication system. The second identifier of the first UE may indicate (or identify) the first UE in the communication system, for example, uniquely indicate the first UE in the communication system. Optionally, the second identifier of the first UE includes, for example, a uniform resource locator (uniform resource locator, URL) of the first UE and/or a uniform resource identifier (uniform resource identifier, URI) of the first UE. A URI of a UE (for example, the first UE or a second UE) in embodiments of this application includes, for example, a telephone (telephone, TEL) URI of the UE; and a URL of a UE (for example, the first UE or the second UE) in embodiments of this application includes, for example, a SIP URL of the UE. It is simply understood that a TEL URI of a UE may be a telephone number of the UE. For example, a TEL URI of a UE is "Tel: +8613904710100". A SIP URL of a UE is similar to an address of a network mailbox, and for example, is "Sip: user1@ims.fj.chinamobile.com", where "user1" represents a user name. The first identifier of the first UE is, for example, an identity number (ID) of the first UE. The first identifier of the first UE and the IP address of the first UE may be carried in the SIP registration message sent by the first UE to the P-CSCF in S401. For example, the first identifier of the first UE may be carried in contact (contact) in a message header of the SIP registration message, carried in from (from) in the message header of the SIP registration message, or carried in to (to) in the message header of the SIP registration message. The IP address of the first UE may be carried in the contact field in the message header of the SIP registration message, or carried in via (via) in the message header of the SIP registration message. Furthermore, in addition to storing the second identifier of the first UE, the P-CSCF may further send the second identifier of the first UE to the first UE. For example, the second identifier of the first UE may be carried in the SIP registration ok message sent by the P-CSCF to the UE in S401. Optionally, the second identifier of the first UE may be carried in private (private, P)-associated (associated)-URI in a message header of the SIP registration ok message. The first identifier of the first UE is, for example, an IP multimedia private identity (IP multimedia private identity, IMPI) of the first UE, or includes a part of bits in the IMPI. Alternatively, the first identifier of the first UE is, for example, an IP multimedia public identity (IP multimedia public identity, IMPU) of the first UE, or includes a part of bits in the IMPU. Alternatively, the first identifier of the first UE is, for example, an international mobile subscriber identifier (international mobile subscriber identifier, IMSI) of the first UE, or includes a part of bits in the IMSI. Alternatively, the first identifier of the first UE is, for example, a subscription permanent identifier (subscription permanent identifier, SUPI) of the first UE, or includes a part of bits in the SUPI. Alternatively, the first identifier of the first UE is, for example, a subscription concealed identifier (subscription concealed identifier, SUCI) of the first UE, or includes a part of bits in the SUCI. For example, the first identifier of the first UE is sip:460075205000317@ims.mnc007.mcc460.3gppnetwork.org. For 460075205000317, "460" is a mobile country code (mobile country code, MCC) identifier, and "007" is a mobile network code (mobile network code, MNC) identifier.

S403: The second UE establishes a PDU session. Similarly, the PDU session may also be referred to as an IMS PDU session.

A process in which the second UE establishes the PDU session is similar to the process in which the first UE establishes the PDU session in S401. For details, refer to the descriptions of S401. In the process of establishing the PDU session, the second UE may also obtain the address of the P-CSCF in the IMS, where the address is for subsequent communication between the second UE and the IMS.

S404: The second UE performs IMS registration.

For the second UE that performs IMS registration, the IMS network element (for example, including the P-CSCF and/or the S-CSCF) may store registration information of the second UE. The registration information of the second UE includes, for example, one or more of the following: a first identifier of the second UE, an IP address of the second UE, or a second identifier of the second UE. The first identifier of the second UE may indicate (or identify) the second UE in the communication system, for example, uniquely indicate the second UE in the communication system. The second identifier of the second UE may indicate (or identify) the second UE in the communication system, for example, uniquely indicate the second UE in the communication system. Optionally, the second identifier of the second UE includes, for example, a URL of the second UE and/or a URI of the second UE. The first identifier of the second UE is, for example, an identity number (ID) of the second UE. The first identifier of the second UE and the IP address of the second UE may be carried in a SIP registration message sent by the UE to the P-CSCF in S403. For example, the first identifier of the second UE may be carried in contact in a message header of the SIP registration message, carried in from in the message header of the SIP registration message, or carried in to (to) in the message header of the SIP registration message. The IP address of the second UE may be carried in contact in the message header of the SIP registration message, or carried in via in the message header of the SIP registration message. Furthermore, in addition to storing the second identifier of the second UE, the P-CSCF may further send the second identifier to the second UE. For example, the second identifier of the second UE may be carried in a SIP registration ok message sent by the P-CSCF to the UE in S403. Optionally, the second identifier of the second UE may be carried in P-associated-URI in a message header of the SIP registration ok message. The second identifier of the second UE is, for example, an IMPI of the second UE or an IMPU of the second UE.

For more content of the registration procedure of the second UE, refer to the registration procedure of the first UE described in S402.

The IMS PDU session establishment process and the IMS registration procedure of the first UE are independent of those of the second UE. Therefore, S403 and S404 may occur before S401 and S402, after S401 and S402, or simultaneously with S401 and S402. In addition, logically, for the first UE, there are core network elements and IMS network elements that serve the first UE; and for the second UE, there are core network elements and IMS network elements that serve the second UE. Therefore, an SMF that serves the IMS PDU session of the first UE may be the same as or different from an SMF that serves the IMS PDU session of the second UE, and a UPF that serves the IMS PDU session of the first UE may be the same as or different from a UPF that serves the IMS PDU session of the second UE. Alternatively, an SMF and a UPF that serve the IMS PDU session of the first UE may be partially the same as or partially different from an SMF and a UPF that serve the IMS PDU session the second UE. For example, the SMFs are the same, but the UPFs are different. In addition, the IMS network elements that serve the first UE and the IMS network elements that serve the second UE may be the same (for example, the same P-CSCF and the same S-CSCF are used), may be different (for example, different P-CSCFs and different S-CSCFs are used), or may be partially the same or partially different (for example, the same P-CSCF and different S-CSCFs are used, or different P-CSCFs and the same S-CSCF are used). This embodiment of this application uses an example in which serving PLMNs of the first UE and the second UE are the same. This corresponds to that same or partially same core network elements are for the IMS PDU session of the first UE and the IMS PDU session of the second UE (for example, the SMFs are the same, and the UPFs are the same or different), and corresponds to that the IMS that the first UE registers with and the IMS that the second UE registers with have same or partially same IMS network elements (for example, the same P-CSCF is used, and the S-CSCFs are the same or different; or the P-CSCFs are different, and the S-CSCFs are the same or different).

Optionally, based on that the UPF that serves the first UE is the same as or different from the UPF that serves the second UE, the UPF in the embodiment shown in FIG. 4A or FIG. 4B in embodiments of this application may be a same UPF or include two different UPFs. Similarly, based on that the IMS network element that serves the first UE is the same as or different from the IMS network element that serves the second UE, the IMS network element in the embodiment shown in FIG. 4A or FIG. 4B may be understood as one set of IMS network elements or two sets of IMS network elements, where one set of IMS network elements may be understood as at least including a P-CSCF, or at least including a P-CSCF and an S-CSCF.

S401 to S404 may be optional steps. For example, if a UE can make a call without performing IMS registration, steps S402 and S404 may not need to be performed.

The foregoing describes the registration procedures of the two UEs. The following describes a call process between the UEs.

S405: The first UE sends a first request to the IMS network element. Correspondingly, the IMS network element receives the first request from the first UE. The IMS network element is, for example, the P-CSCF or the S-CSCF. If the IMS network element is the S-CSCF, the P-CSCF may receive the first request from the first UE, and then the P-CSCF sends the first request to the S-CSCF after performing specific processing (for example, adding, deleting, or modifying some or all information in a message header) on the first request. It should be noted that, when a SIP message transmitted between two UEs is transmitted through each IMS network element, the IMS network element may perform specific processing before sending the SIP message to a next network element. For example, when the first request message is transmitted from the first UE to the second UE, the first request message needs to pass through the P-CSCF and the S-CSCF for the first UE and then the S-CSCF and the P-CSCF for the second UE, and finally is sent by the P-CSCF for the second UE to the second UE. Therefore, the first request may by processed (for example, some or all information in the message header is added, deleted, or modified) by the P-CSCF and the S-CSCF for the first UE and the S-CSCF and the P-CSCF for the second UE. This description is applicable to all the following SIP messages in embodiments.

The first request may be for requesting to make a call with the second apparatus, that is, the first UE initiates a call procedure with the second UE by sending the first request. The first request is, for example, a SIP invite (invite) message, or may be another message for requesting the call. The first request includes, for example, the second identifier of the first UE and/or the second identifier of the second UE. For example, the first request is the SIP invite message, the second identifier of the first UE may be included in from in a message header of the SIP invite message, and the second identifier of the second UE may be included in to in the message header of the SIP invite message, or may be included in request (request)-URI in the message header of the SIP invite message. The SIP invite message includes a session description protocol (session description protocol, SDP) request, where the SDP request is for negotiating a media type and a media format (or referred to as a coding scheme or an encoding/decoding scheme) with a called party, and for example, includes a media type requested by a calling party and a media format supported by the calling party.

Optionally, the IMS network element may further receive second information, where the second information may indicate that the first UE requests switching of call data of the first UE on the satellite, and/or indicate that the second UE requests switching of call data of the second UE on the satellite. For example, the second information includes information A and/or information B. The information A is from the first UE, and may indicate that the first UE requests the switching of the call data of the first UE on the satellite. The information B is from the second UE, and may indicate that the second UE requests the switching of the call data of the second UE on the satellite. For example, the information A may be included in a SIP message, and the SIP message is, for example, the SIP registration message in S402, the first request in S405, or another SIP message sent by the first UE to the IMS network element. For example, the information B may be included in a SIP message, and the SIP message is, for example, the SIP registration message in S404 or another SIP message sent by the second UE to the IMS network element. Optionally, if the IMS network element receives the second information, the IMS network element may determine, based on the second information, whether the first UE and the second UE are to switch call data on the satellite; or because the second information is received, the IMS network element may determine whether the first UE and the second UE are to switch call data on the satellite, and this is equivalent to that the second information is a trigger condition for the determining process. Alternatively, the IMS network element may send the second information to a first core network element (for example, the second information may be included in first information described below). In this case, the first core network element may determine, with reference to the second information, whether the first UE and the second UE are to switch call data on the satellite; or because the second information is received, the first core network element may determine whether the first UE and the second UE are to switch call data on the satellite, and this is equivalent to that the second information is a trigger condition for the determining process.

Optionally, if the IMS network element receives the second information, the IMS network element may further send response information for the second information to the UE. For example, the response information is referred to as response information 1, and the response information 1 may indicate that the call data of the UE can be configured to be switched on the satellite. For example, if the second information includes the information A, the response information 1 may include response information a, and the response information a may indicate that the call data of the first UE can be configured to be switched on the satellite. For another example, if the second information includes the information B, the response information 1 may include response information b, and the response information b may indicate that the call data of the second UE can be configured to be switched on the satellite.

S406: The IMS network element sends the first information to the first core network element. Correspondingly, the first core network element receives the first information from the IMS network element.

The IMS network element is, for example, the P-CSCF or the S-CSCF, or may be another network element in the IMS. If the IMS network element is the S-CSCF, the S-CSCF may first send the first information to the P-CSCF. For example, the S-CSCF may send a SIP 183 message to the P-CSCF, where the SIP 183 message may include the first information. After receiving the SIP 183 message, the P-CSCF sends the first information to the first core network element.

The first core network element is, for example, the SMF or a PCF, or may be another core network element. If the first core network element is the SMF, optionally, the IMS network element may send the first information to the PCF, and the PCF may generate a policy control and charging (policy control and charging, PCC) rule (rule) based on the first information, and then send the PCC rule to the SMF. For example, the PCC rule may include the first information. Therefore, this is equivalent to that the SMF obtains the first information. In FIG. 4A or FIG. 4B, an example in which the first core network element is the SMF is used.

For example, if the IMS network element determines that the first UE and/or the second UE access/accesses the network via the satellite, S406 may be performed. If the IMS network element determines that the first UE and/or the second UE access/accesses the network not via the satellite, the IMS network element may not perform S406, but perform a conventional call procedure. For example, the IMS network element may determine, based on the SIP registration message from the first UE, whether the first UE accesses the network via the satellite. For example, the IMS network element may determine, based on an indication of the P-Access-Network-Info information element in the SIP registration message, whether the first UE accesses the network via the satellite. For another example, the IMS network element may determine, based on the SIP registration message from the second UE, whether the second UE accesses the network via the satellite. For example, the IMS network element may determine, based on an indication of a P-Access-Network-Info information element in the SIP registration message, whether the second UE accesses the network via the satellite. Alternatively, the IMS network element is an IMS network element that specially serves a satellite access mode. In this case, if the IMS network element stores registration information of a specific UE, a specific UE registers with the IMS network element, or a specific UE registers with the IMS in which the IMS network element is located, the IMS network element may determine that the UE is a UE that accesses the network via the satellite. In this embodiment of this application, an example in which the first UE and/or the second UE access/accesses the network via the satellite is used.

The first information may also be referred to as assistance information, or may have another name. The first information may indicate that the first UE and the second UE are to make the call or perform IMS communication. The first information is mainly intended to indicate that both communication parties are between the first UE and the second UE, or indicate that both the communication parties are the first UE and the second UE. For example, after receiving the first request, the IMS network element may send the first information to the first core network element, to notify, by using the first information, the first core network element that the first UE and the second UE are to make the call. In this case, the first core network element can determine UEs of both call parties, for example, can determine that the first UE is a calling UE and the second UE is a called UE, to configure the call data between the first UE and the second UE to be switched on the satellite (for example, configure the call data to be locally switched on an on-satellite UPF).

Optionally, the first information may further indicate that the first UE and the second UE are to switch the call data on the satellite, indicate that the first UE and the second UE are to perform local switching (local switching) on the satellite, or indicate that the call data between the first UE and the second UE are to be switched on the satellite. The following uses an example in which the first information indicates that the first UE and the second UE are to switch the call data on the satellite. This is equivalent to: Whether the first UE and the second UE are to switch the call data on the satellite is decided by the IMS network element, and the first core network element may determine, based on the first information, that the first UE and the second UE are to switch the call data on the satellite, to configure the call data between the first UE and the second UE to be switched on the satellite.

For example, before S406, the IMS network element may determine whether the first UE and the second UE can switch the call data on the satellite, or determine whether the first UE and the second UE meet a condition for switching the call data on the satellite. If the first UE and the second UE can switch the call data on the satellite, or it is determined that the first UE and the second UE meet the condition for switching the call data on the satellite, the first information may indicate that the first UE and the second UE are to make the call, and indicate that the first UE and the second UE are to switch the call data on the satellite. For example, the first information includes indication information A and indication information B, where the indication information A indicates that the first UE and the second UE are to make the call, and the indication information B indicates that the first UE and the second UE are to switch the call data on the satellite. If the first UE and the second UE cannot switch the call data on the satellite, or it is determined that the first UE and the second UE do not meet the condition for switching the call data on the satellite, S406 may not be performed. Alternatively, although S406 is performed, the first information indicates that the first UE and the second UE are to make the call, and does not indicate that the first UE and the second UE are to switch the call data on the satellite. For example, the first information includes indication information A, where the indication information A indicates that the first UE and the second UE are to make the call. In this implementation, the first core network element may determine, based on the first information, that the first UE and the second UE are to switch the call data on the satellite.

Optionally, that the IMS network element determines that the first UE and the second UE are to switch the call data on the satellite may include one or more of the following, or the IMS network element may determine, by using one or more of the following, that the first UE and the second UE are to switch the call data on the satellite: determining that the network allows the first UE and/or the second UE to switch the call data on the satellite; determining that the first UE and the second UE are served by the same UPF, where the UPF is deployed on the satellite; determining that the first UE and the second UE are served by the same IMS network element; determining that the first UE and the second UE are served by different UPFs, where the different UPFs are both deployed on the satellite; determining that media description information supported by the first UE matches that supported by the second UE; or determining that the serving PLMN of the first UE and the serving PLMN of the second UE are the same PLMN.

Alternatively, if the IMS network element determines that the first UE and the second UE meet the condition for switching the call data on the satellite, the condition may include one or more of the following: The network allows the first UE and/or the second UE to switch the call data on the satellite; the first UE and the second UE are served by the same UPF, where the UPF is deployed on the satellite; the first UE and the second UE are served by the same IMS network element; the first UE and the second UE are served by different UPFs, where the different UPFs are both deployed on the satellite; media description information used by the first UE matches that used by the second UE; or the serving PLMN of the first UE and the serving PLMN of the second UE are the same PLMN.

Whether the network allows call data of a UE to be switched on the satellite may be determined based on subscription information of the UE. For example, for the first UE, an HSS may store subscription information of the first UE, and the subscription information may indicate whether the network allows the call data of the first UE to be switched on the satellite. In this case, the IMS network element can determine, based on the subscription information of the first UE, whether the network allows the call data of the first UE to be switched on the satellite. A processing manner of the IMS network element for the second UE is similar. For example, if the network does not allow the call data of the first UE and/or the second UE to be switched on the satellite, the IMS network element may not need to determine whether the first UE and the second UE are to switch the call data on the satellite. Optionally, if the IMS network element is the S-CSCF, the S-CSCF may request the subscription information of the first UE and/or subscription information of the second UE from the HSS. For example, the S-CSCF sends a third request to the HSS, where the third request is, for example, a Cx-Put (Put) message or a Cx-Pull (Pull) message, and the Cx-Put message or the Cx-Pull message may be for requesting the subscription information of the first UE and/or the subscription information of the second UE, or for querying the HSS whether the network allows the call data of the first UE and/or the second UE to be switched on the satellite. The HSS sends third information to the S-CSCF, where the third information is, for example, included in a Cx-Put response (response) message or a Cx-Pull response message, and the third information may indicate the subscription information of the first UE and/or the subscription information of the second UE, or indicate whether the network allows the call data of the first UE and/or the second UE to be switched on the satellite. The S-CSCF may determine, based on the subscription information of the first UE and/or the subscription information of the second UE, whether the first UE and the second UE are to switch the call data on the satellite; or determine, depending on whether the network allows the call data of the first UE and/or the second UE to be switched on the satellite, whether the first UE and the second UE are to switch the call data on the satellite.

Alternatively, if the IMS network element is the P-CSCF, the S-CSCF may first request the subscription information of the first UE and/or subscription information of the second UE from the HSS, or query the HSS whether the network allows the call data of the first UE and/or the second UE to be switched on the satellite. Then, the S-CSCF sends third information to the P-CSCF. For example, the third information is included in a 200 OK message, and the third information may indicate the subscription information of the first UE and/or the subscription information of the second UE, indicate whether the network allows the call data of the first UE and/or the second UE to be switched on the satellite, or indicate whether the data between the first UE and the second UE is to be switched on the satellite. For example, the S-CSCF may forward, to the P-CSCF, information that is from the HSS, that is, the third information in this case may be the information that is from the HSS. The P-CSCF further determines, based on the third information, whether the first UE and the second UE are to switch the call data on the satellite. Alternatively, after receiving information from the HSS, the S-CSCF may determine, based on the information, whether the first UE and the second UE are to switch the call data on the satellite. The S-CSCF may indicate a determining result of the S-CSCF to the P-CSCF by using the third information, where the determining result is, for example, that the first UE and the second UE are to switch the call data on the satellite, or that the first UE and the second UE are not to switch the call data on the satellite.

If the first UE and the second UE are served by the same UPF, the call data between the first UE and the second UE can be switched through the UPF. If the UPF is deployed on the satellite, the call data between the first UE and the second UE can be switched on the satellite. Optionally, the IMS network element may determine, in the following manner, whether the first UE and the second UE are served by the same UPF: determining whether the first UE and the second UE are served by the same IMS network element (the same IMS network element may be the IMS network element that performs the determining process). If the first UE and the second UE are served by the same IMS network element, the IMS network element may determine that the first UE and the second UE are served by the same UPF. Alternatively, if the first UE and the second UE are served by different IMS network elements, the IMS network element may determine that the first UE and the second UE are served by different UPFs. For example, the IMS network element uniquely corresponds to one UPF. In this case, if both the first UE and the second UE are served by the IMS network element, it indicates that both the first UE and the second UE are served by the UPF corresponding to the IMS network element.

Optionally, the IMS network element may determine, in the following manner, whether the first UE and the second UE are served by the same IMS network element: determining, based on the second identifier of the first UE and the second identifier of the second UE, whether the first UE and the second UE are served by the same IMS network element. For example, the registration information of the first UE may include the second identifier of the first UE. Therefore, based on the second identifier of the first UE, the IMS network element may determine whether the IMS network element has stored the registration information of the first UE, or query whether the first UE has registered with the IMS network element. In addition, the registration information of the second UE may include the second identifier of the second UE, and the IMS network element may query, based on the second identifier of the second UE, whether the IMS network element has stored the registration information of the second UE or whether the second UE has registered with the IMS network element. If the IMS network element has stored the registration information of the first UE and the registration information of the second UE, or both the first UE and the second UE have registered with the IMS network element, the IMS network element may determine that the first UE and the second UE are served by the same IMS network element.

Alternatively, optionally, the IMS network element may determine, in the following manner, whether the first UE and the second UE are served by the same UPF: determining whether a request of the first UE and a request of the second UE are from the same UPF. If the request of the first UE and the request of the second UE are from the same UPF, it may be determined that the first UE and the second UE are served by the same UPF; or if the request of the first UE and the request of the second UE are from different UPFs, it may be determined that the first UE and the second UE are served by the different UPFs. For example, whether the request of the first UE and the request of the second UE are from the same UPF may be determined in the following manner: determining that source address information carried in a data packet corresponding to the request of the first UE and source address information carried in a data packet corresponding to the request of the second UE are the same. The request of the first UE includes, for example, the first request or the SIP registration message sent by the first UE to the IMS network element in S402. The first request is, for example, the SIP invite message. The SIP invite message or the SIP registration message may be implemented in a form of a data packet. The data packet may carry the source address information. For example, a packet header of the data packet carries the source address information. Because the data packet is forwarded to the IMS network element by the UPF that serves the first UE, an address corresponding to the source address information carried in the packet header of the data packet may be a public-network address obtained by the UPF by translating a private-network address of the first UE. In addition, the IMS network element may further receive the request from the second UE, where the request includes, for example, the SIP registration message sent by the second UE to the IMS network element in S402. Similarly, the SIP registration message may be implemented by using a data packet, and an address corresponding to the source address information carried in a packet header of the data packet may be a public-network address obtained by the UPF that serves the second UE by translating a private-network address of the second UE. A same UPF may translate private-network addresses of different UEs to obtain a same public-network address. Therefore, if the source address information carried in the data packet corresponding to the request of the first UE is the same as the source address information carried in the data packet corresponding to the request of the second UE, the IMS network element may determine that the first UE and the second UE are served by the same UPF. In this case, the IMS network element does not need to be in one-to-one correspondence with the UPF. For example, one IMS network element may correspond to one or more UPFs. In addition, optionally, if the IMS network element is the P-CSCF, whether the first UE and the second UE are served by the same UPF may be determined in this manner. If the IMS network element is the S-CSCF, because a request from a UE that is received by the S-CSCF is forwarded by the P-CSCF, source address information carried in a data packet corresponding to the request may have been changed to address information of the P-CSCF. In this case, the S-CSCF may be incapable of determining, based on the source address information carried in the data packet, whether the first UE and the second UE are served by the same UPF. For example, the S-CSCF may determine, in the manner that is described above and that is of determining whether the first UE and the second UE are served by the same IMS network element, whether the first UE and the second UE are served by the same UPF.

If the first UE and the second UE are served by the same IMS network element, and for example, the IMS network element uniquely corresponds to one UPF, it may also indicate that the first UE and the second UE are served by the same UPF. Therefore, the IMS network element may determine that the first UE and the second UE are to switch the call data on the satellite.

If the first UE and the second UE are served by different UPFs, and the different UPFs are both deployed on the satellite, the IMS network element may also determine that the first UE and the second UE are to switch the call data on the satellite. In this case, the IMS network element may be incapable of determining whether the different UPFs can communicate with each other or whether a data transmission channel can be established between the different UPFs, but the IMS network element may consider that the data transmission channel can be established between the different UPFs.

In a conventional call process, when call data passes through the IMS, the IMS network element may perform processing, for example, format conversion, on the call data. For example, media description information of UEs of both call parties may not match, and a peer call end can identify the received call data through processing by the IMS network element. However, in this embodiment of this application, the call data between the first UE and the second UE may not pass through the IMS, but directly arrive at a peer call end (the first UE or the second UE). Therefore, optionally, the media description information supported by the first UE may match that supported by the second UE, so that the first UE and the second UE can identify the call data from the peer call end without processing performed by the IMS network element.

Whether the media description information supported by the first UE matches that supported by the second UE is determined, for example, based on a received session description protocol (session description protocol, SDP) of the first UE and the second UE. The media description information may indicate one or more of a media type (for example, a video (video) type or an audio (audio) type), a transmission protocol (for example, a real-time transport protocol (real-time transport protocol, RTP), a user datagram protocol (user datagram protocol, UDP), or an IP), a media format (for example, a G711 format, a G721 format, an advanced audio coding (advanced audio coding, AAC)-low delay (low delay, LD) format, an H.264 video format, or a motion picture experts group (motion picture experts group, MPEG) video format), or the like. That media description information of two UEs matches may be understood as: A receiving-end UE in the two UEs may decode data from a transmitting-end UE in the two UEs without transcoding processing performed by another network element. For example, if the media description information of the first UE matches that of the second UE, the first UE and the second UE support a same media format or a common media format. After SDP negotiation, the first UE and the second UE may use the same media format. In this case, the second UE can decode the call data from the first UE without transcoding processing performed by another network element. Similarly, the first UE can also decode the data from the second UE without transcoding processing performed by another network element.

A serving PLMN of a UE may be understood as a network currently accessed by the UE. If serving PLMNs of two UEs are the same, it may be understood that networks currently accessed by the two UEs are the same. This may include either or both of the following cases:
(1) Neither of the two UEs roams. The serving PLMNs of the two UEs are home PLMNs (home PLMNs, HPLMNs), and the two HPLMNs are a same PLMN.
(2) At least one UE roams. If one of the two UEs roams and the other does not roam, the serving PLMN of the roaming UE is a visited PLMN (visited PLMN, VPLMN) of the roaming UE, the serving PLMN of the non-roaming UE is an HPLMN of the non-roaming UE, and the VPLMN of the roaming UE is the same as the HPLMN of the non-roaming UE. Alternatively, if both the UEs roam, VPLMNs of the two UEs are the same, but HPLMNs of the two UEs may be the same or may be different.

In the case 1, that is, in the case in which neither of the two UEs roams, P-CSCFs for the two UEs are P-CSCFs in the HPLMN, and the two P-CSCFs may be a same P-CSCF or different P-CSCFs.

In the case 2, that is, in the case in which the at least one UE roams, a P-CSCF that serves the roaming UE may be a P-CSCF in the VPLMN of the roaming UE, or may be a P-CSCF in an HPLMN of the roaming UE. Therefore, when the P-CSCF for the roaming UE is the P-CSCF in the VPLMN of the roaming UE, P-CSCFs for the two UEs may be the same P-CSCF or different P-CSCFs. When the P-CSCF for the roaming UE is the P-CSCF in the HPLMN of the roaming UE, if the two UEs are both roaming UEs, and the HPLMNs of the two UEs are different, P-CSCFs for the two UEs may be different; or if the two UEs are both roaming UEs, and the HPLMNs of the two UEs are the same, P-CSCFs for the two UEs may be the same P-CSCF or different P-CSCFs.

If serving PLMNs of two UEs are the same, in some network deployment scenarios, it may indirectly indicate that the two UEs are served by a same IMS network element, or indicate that the two UEs are served by a same UPF. In addition, the IMS network element may alternatively determine, in another manner, whether the first UE and the second UE can switch the call data on the satellite. This is not limited.

Alternatively, whether the first UE and the second UE are to switch the call data on the satellite may be decided by the first core network element instead of the IMS network element. In this case, the first information may indicate that the first UE and the second UE are to make the call, but does not indicate that the first UE and the second UE are to switch the call data on the satellite. For example, the first information includes the indication information A, where the indication information A indicates that the first UE and the second UE are to make the call. After receiving the first information, the first core network element may determine whether the first UE and the second UE are to switch the call data on the satellite, or determine whether the first UE and the second UE meet the condition for switching the call data on the satellite. After receiving the first information, the first core network element may determine whether the first UE and the second UE are to switch the call data on the satellite. If it is determined that the first UE and the second UE are to switch the call data on the satellite, the call data between the first UE and the second UE may be configured to be switched on the satellite.

Optionally, that the first core network element determines that the first UE and the second UE are to switch the call data on the satellite may include one or both of the following, or the first core network element may determine, by using one or both of the following, that the first UE and the second UE are to switch the call data on the satellite: The first core network element determines, based on the UPF that serves the first UE and the UPF that serves the second UE, whether the first UE and the second UE are to switch the call data on the satellite; or the first core network element determines, based on a RAN that serves the first UE and a RAN that serves the second UE, whether the first UE and the second UE are to switch the call data on the satellite. For example, the first core network element may determine, in the following manner based on the UPF that serves the first UE and the UPF that serves the second UE, that the first UE and the second UE are to switch the call data on the satellite: The first core network element determines that the first UE and the second UE are served by the same UPF. If the first UE and the second UE are served by the same UPF, it may be determined that the first UE and the second UE are to switch the call data on the satellite, and the UPF may be configured to implement the switching of the call data. For another example, the first core network element may alternatively determine, in the following manner based on the UPF that serves the first UE and the UPF that serves the second UE, that the first UE and the second UE are to switch the call data on the satellite: The first core network element determines that the first UE and the second UE are served by different UPFs, and establishment of a data transmission channel is supported (or can be implemented or has been implemented) between the different UPFs. If the first UE is served by different UPFs, but establishment of a data transmission channel is supported between the two UPFs, it may also be determined that the first UE and the second UE are to switch the call data on the satellite, and the two UPFs may be configured to implement the switching of the call data.

The first core network element may determine, in the following manner based on the RAN that serves the first UE and the RAN that serves the second UE, whether the first UE and the second UE are to switch the call data on the satellite: The first core network element determines that the first UE and the second UE are served by a same RAN (or a same access network element). If the first UE and the second UE are served by the same RAN, it may be determined that the first UE and the second UE are to switch the call data on the satellite, and the RAN may be configured to implement the switching of the call data.

In conclusion, that the first core network element determines that the first UE and the second UE are to switch the call data on the satellite may include one or more of the following: determining that the first UE and the second UE are served by the same UPF; determining that the first UE and the second UE are served by the same RAN (or the same access network element); or determining that the first UE and the second UE are served by the different UPFs, and the establishment of the data transmission channel is supported (or can be implemented or has been implemented) between the different UPFs.

Alternatively, if the first core network element determines that the first UE and the second UE meet the condition for switching the call data on the satellite, the condition may include one or more of the following: The first UE and the second UE are served by the same UPF; the first UE and the second UE are served by a same RAN (or a same access network element); or the first UE and the second UE are served by different UPFs, and establishment of a data transmission channel is supported (or can be implemented or has been implemented) between the different UPFs.

If the first UE and the second UE are served by the same UPF, the call data between the first UE and the second UE can be switched through the UPF. Optionally, the UPF may be deployed on the satellite. In this case, the call data between the first UE and the second UE can be switched on the satellite. For example, the first core network element is the SMF. For the SMF, a UPF that serves a UE is selected by the SMF. Therefore, the SMF knows the UPF that serves the first UE and the UPF that serves the second UE, and can determine whether the two UEs are served by the same UPF.

If the first UE and the second UE are served by the same RAN, the call data between the first UE and the second UE can be switched through the RAN. Optionally, the RAN may be deployed on the satellite. In this case, the call data between the first UE and the second UE can be switched on the satellite. In other words, in this embodiment of this application, the local switching between the first UE and the second UE on the satellite is not limited to being implemented through the UPF, but may alternatively be implemented through another network element, for example, the RAN. The first core network element also knows a RAN that serves a UE. Therefore, the first core network element can determine whether the first UE and the second UE are served by the same RAN.

If the first UE and the second UE are served by different UPFs, and the different UPFs can communicate with each other, or a data transmission channel can be established between the different UPFs, it indicates that the local switching of the call data between the first UE and the second UE can be implemented through the UPFs. Optionally, the different UPFs are both deployed on the satellite. In this case, the call data between the first UE and the second UE can be switched on the satellite.

In addition, the first core network element may determine, in another manner, whether the first UE and the second UE can switch the call data on the satellite. This is not limited.

The IMS network element that serves the first UE and the IMS network element that serves the second UE may be the same or different (for example, as described above, the IMS network element that serves the first UE and the IMS network element that serves the second UE may belong to a same set of IMS network elements, or may belong to two different sets of IMS network elements). Therefore, when the IMS network elements are different, if the IMS network elements decide whether the call data is to be switched on the satellite, a decision process may involve interaction between the two sets of IMS network elements. Alternatively, if the first core network element decides whether the call data is to be switched on the satellite, the two P-CSCFs that serve the two UEs may separately send the first information to the first core network element, and the two sets of IMS network elements may not interact with each other.

Alternatively, neither the IMS network element nor the first core network element needs to determine whether the first UE and the second UE can switch the call data on the satellite, but the first UE and the second UE may be directly configured to switch the call data on the satellite. For example, when the IMS network element does not perform determining, the IMS network element indicates, by using the first information, that the first UE and the second UE are to switch the call data on the satellite. Alternatively, the IMS network element does not provide an indication, but notifies, by using the first information, that the first UE and the second UE are to make the call. After receiving the first information, the first core network element may perform S407 below without determining. This is equivalent to: The first core network element configures, without determining, the first UE and the second UE to switch the call data on the satellite. If the determining is not performed, a failure rate at which the first UE and the second UE switch the call data on the satellite increases. This is because the first UE and the second UE may actually not meet the condition for switching the call data on the satellite. However, the manner of not performing determining can save time and improve efficiency of making the call by the UEs. This embodiment of this application mainly uses an example in which the determining is performed.

Optionally, the first information may further include (or indicate) one or more of the following: the first identifier of the first UE, the second identifier of the first UE, address information of the first UE, the first identifier of the second UE, the second identifier of the second UE, address information of the second UE, calling-party information, called-party information, or description information of the call data between the first UE and the second UE. At least one of the first identifier of the first UE, the second identifier of the first UE, or the address information of the first UE may indicate the first UE, and at least one of the first identifier of the second UE, the second identifier of the second UE, or the address information of the second UE may indicate the second UE. A parameter indicating the first UE is not limited to one or more of the first identifier, the second identifier, the address information, or the like, and may also include another parameter, provided that the first core network device can uniquely determine the first UE based on the parameter. This is also applicable to the second UE. The calling-party information and/or the called-party information may indicate which UE in the first UE and the second UE is the calling party and which UE is the called party. For example, the first UE is the calling party, and the second UE is the called party. The description information may indicate the call data that needs to be switched on the satellite. For example, the description information includes a service data flow (service data flow, SDF) template (template). The SDF template may include an IP triplet (a source/destination address, a source port number, and a protocol type) or an IP quintuple (a destination address, a destination port number, a source address, a source port number, and a protocol type). For example, for the call data of the first UE, description information of the call data may include {source address = calling-party address/destination address = called-party address, source port number = calling-party port number/destination port number = called-party port number, protocol type = UDP} or an IP quintuple {destination address = called-party address, destination port number = called-party port number, source address = calling-party address, source port number = calling-party port number, protocol type = UDP}. For the call data of the second UE, description information of the call data may include {source address=called-party address/destination address=calling-party address, source port number=called-party port number/destination port number=calling-party port number, protocol type=UDP} or an IP quintuple {destination address=calling-party address, destination port number=calling-party port number, source address=called-party address, source port number=called-party port number, protocol type=UDP}. The address information of the first UE may include address information of the first UE in the IP triplet or the IP quintuple. The IMS network element may obtain the address information of the first UE by using a request message sent by the first UE to the IMS network element, for example, by using a SIP message sent by the first UE to the IMS network element (for example, from a message body in the SIP registration message or the SIP invite message). In addition, the SIP message of the first UE may be sent to the IMS network element in a form of a data packet (for example, an IP data packet). In this case, the IMS network element may obtain the address information of the first UE by using source address information carried in a packet header of the data packet (the packet header is a packet header of the IP data packet carrying the SIP message; or because the SIP message is implemented in the form of the data packet, the packet header of the data packet may also be understood as a message header of the SIP message). Based on two manners of obtaining the address information of the first UE by the IMS, the address information of the first UE indicates, for example, the private-network address of the first UE, for example, the IP address allocated by the SMF or the UPF to the first UE in the process of establishing the IMS PDU session by the first UE. The first UE may include the private-network address when sending the SIP message to the IMS network element. Alternatively, the address information of the first UE may indicate the public-network address of the first UE. For example, the UPF that serves the first UE may allocate the public-network address to the first UE. For example, when the first UE sends the SIP message to the IMS network element, and when the data packet carrying the SIP message passes through the UPF, the UPF performs network address translation (network address translation, NAT) on the IP address (which is the private-network address of the first UE in this case) in the packet header of the data packet to obtain the public-network address. Alternatively, the address information of the first UE may indicate an address determined based on the private-network address and the public-network address of the first UE, for example, is a combination of the private-network address and the public-network address of the first UE. Correspondingly, the address information of the first UE in the first information may include the IP address in the message body of the SIP message that is received by the IMS network element from the first UE, and/or include a source address in the packet header of the data packet that is received by the IMS network element and that carries the SIP message of the first UE. For a specific process in which the IMS network element obtains the address information of the first UE, refer to descriptions in S507. Details are not described herein. An implementation of the address information of the second UE in the first information is similar, and details are not described.

For example, the first information may include one or more of indication information C, indication information D, or indication information E, where the indication information A indicates the first identifier of the first UE, the indication information D indicates the first identifier of the second UE, and the indication information E indicates the description information. The one or more of the information included in the first information may be for assisting the first core network element in deciding whether the first UE and the second UE can switch the call data on the satellite. For example, if the IMS network element decides whether the first UE and the second UE can switch the call data on the satellite, for example, the first information indicates that the first UE and the second UE are to switch the call data on the satellite, the first information may not need to include the foregoing information. For example, the first information indicates that the first UE and the second UE are to make the call, so that the SMF can determine devices of both the call parties. For another example, if the first core network element decides whether the first UE and the second UE can switch the call data on the satellite, the first information may include the one or more of the foregoing information, to assist the first core network element in making the decision. Alternatively, even if the IMS network element decides whether the first UE and the second UE can switch the call data on the satellite, the first information may also include the one or more of the foregoing information. This is not specifically limited.

The first UE and the second UE are respectively the calling UE and the called UE. For example, the P-CSCF for the first UE may generate the first information based on that the first UE is the calling UE, and the P-CSCF for the second UE may generate the first information based on that the second UE is the called UE. Therefore, content of the first information sent by the P-CSCF for the first UE to the first core network element may be different from content of the first information sent by the P-CSCF for the second UE to the first core network element.

Optionally, if the first core network element decides whether the first UE and the second UE can switch the call data on the satellite, the first information may further indicate that the first UE and the second UE meet the condition for switching the call data on the satellite. For example, the IMS network element determines, in the foregoing manner, that the first UE and the second UE are to switch the data on the satellite, or that the first UE and the second UE meet the condition for switching the call data on the satellite, but the IMS network element may not make a decision, but sends the first information to the first core network element, and the first core network element decides whether the first UE and the second UE are to switch the call data on the satellite. In this case, that the first information indicates that the first UE and the second UE meet the condition for switching the call data on the satellite indicates: The IMS network element considers that the first UE and the second UE can switch the call data on the satellite. Whether the first UE and the second UE are to switch the call data on the satellite may be decided by the SMF. For example, the first core network element may make the decision in the foregoing manner, where the first core network element may make the decision with reference to the first information. For example, the first information indicates that the first UE and the second UE meet the condition for switching the call data on the satellite. In this case, the first core network element may directly determine that the first UE and the second UE are to switch the call data on the satellite. Alternatively, the first core network element may determine whether the first UE and the second UE are served by the same UPF. If the first UE and the second UE are served by the same UPF, the first core network element may determine that the first UE and the second UE are to switch the call data on the satellite. If the first UE and the second UE are served by different UPFs, but the different UPFs can communicate with each other, the first core network element may also determine that the first UE and the second UE are to switch the call data on the satellite. Alternatively, if the first UE and the second UE are served by different UPFs, and the different UPFs cannot communicate with each other, the first core network element may determine that the first UE and the second UE cannot switch the call data on the satellite, or the first core network element may determine that the first UE and the second UE are to switch the call data on the satellite through the RAN. Optionally, in this case, the RAN that serves the first UE and the RAN that serves the second UE may be the same or may be different, and may be deployed on the satellite.

The first information may be complete information. The first information may indicate related information of the first UE, and may indicate related information of the second UE. For content of the first information, refer to the foregoing descriptions. Alternatively, the first information may include first sub-information and second sub-information. The first sub-information indicates related information of the first UE, and the second sub-information indicates related information of the second UE. In S406, the IMS network element may separately send the first sub-information and the second sub-information to the first core network element. For example, the first sub-information may indicate one or more of the following: the first identifier of the first UE, the description information of the call data between the first UE and the second UE, that the first UE is to make the call, or that the first UE can switch the call data on the satellite. The second sub-information may indicate one or more of the following: the first identifier of the second UE, the description information of the call data between the first UE and the second UE, that the second UE is to make the call, or that the second UE can switch the call data on the satellite.

Optionally, regardless of whether the IMS network element or the first core network element decides whether the first UE and the second UE can switch the call data on the satellite, this decision process may be performed in a corresponding scenario. Optionally, decision logic of the IMS network element may also be used by the first core network element to make the decision, or the first core network element may use the foregoing decision logic of the IMS network element to decide whether the call data between the first UE and the second UE is to be switched on the satellite. This is not limited, and details are not described. Optionally, when one or more of the following conditions are met, the IMS network element or the first core network element may decide whether the first UE and the second UE can switch the call data on the satellite: The call between the first UE and the second UE corresponds to a delay handling policy, a call between any UEs corresponds to a delay handling policy, the network needs to perform delay control, or a disaster recovery factor occurs. A network factor and/or a service factor may cause the delay handling policy corresponding to the call between the first UE and the second UE or the delay handling policy corresponding to the call between the any UEs. For example, if the network needs to perform delay control, the network is congested, or a specific call service or a call service of a specific UE is a call service with a high priority or high importance, the network may perform delay control accordingly. The switching of the call data between the first UE and the second UE on the satellite can reduce a delay to a large extent, and therefore is a delay control policy. Alternatively, if a disaster, for example, an earthquake or a tsunami, occurs currently, importance or a priority of a call service increases. In this case, a call delay is expected to be reduced as much as possible, to improve call quality. Therefore, the network may decide whether the first UE and the second UE can switch the call data on the satellite. If the first UE and the second UE switch the call data on the satellite, the delay may be reduced to a large extent.

Optionally, after receiving the first information, the first core network element may further send response information for the first information to the IMS network element, where for example, the response information is referred to as response information 2. If the IMS network element decides that the first UE and the second UE are to switch the call data on the satellite, the response information 2 may indicate that the first information is successfully received, indicate that the first UE and the second UE have been configured to switch the call data on the satellite, or indicate a failure of configuring the first UE and the second UE to switch the call data on the satellite. Alternatively, if the first core network element decides whether the first UE and the second UE are to switch the call data on the satellite, the response information 2 may indicate that the first information is successfully received, indicate that the first UE and the second UE are to switch the call data on the satellite, or indicate that the first UE and the second UE are not to switch the call data on the satellite. Optionally, if the response message indicates that the first UE and the second UE are not to switch the call data on the satellite, the IMS network element may configure the call data to pass through an IMS network during transmission between the first UE and the second UE.

S407: The first core network element sends first configuration information to the UPF. Correspondingly, the UPF receives the first configuration information from the first core network element. For example, the first core network element may send the first configuration information to the UPF based on the first information.

Optionally, if the first core network element is the SMF, the SMF may send an N4 rule to the UPF, where the N4 rule may include (or indicate) the first configuration information, and the N4 rule may be for configuring an N4 session of the first UE and an N4 session of the second UE. Alternatively, if the first core network element is the PCF, the PCF may first send a PCC rule to the SMF, where the PCC rule may include (or indicate) the first configuration information. After receiving the PCC rule, the SMF may send the first configuration information to the UPF. For example, the SMF sends an N4 rule to the UPF, where the N4 rule may include (or indicate) the first configuration information. Optionally, the SMF may determine the first configuration information based on the first information from the IMS network element. For example, the SMF determines the first UE based on the parameter indicating the first UE, and determines the second UE based on the parameter indicating the second UE. Therefore, the SMF may determine the IMS PDU session of the first UE and the corresponding UPF, and determine the IMS PDU session of the second UE and the corresponding UPF. In this case, the SMF may send the first configuration information to the corresponding UPF. Optionally, first configuration information corresponding to the calling UE (for example, the first UE) may be different from first configuration information corresponding to the called UE (for example, the second UE). In addition, the SMF may further determine, based on the description information of the call data in the first information, a data flow on which the UPF is to perform local switching.

The first configuration information may be for configuring the UPF to perform local switching on the call data between the first UE and the second UE, or configuring the UPF to directly forward the call data between the first UE and the second UE. This may be understood as: The UPF may perform configuration based on the first configuration information, for example, configure the N4 session of the first UE and the N4 session of the second UE, so that when receiving the call data from the first UE (to be destined to the second UE), the UPF directly forwards the call data to the second UE without forwarding to another network element. Similarly, when receiving the call data from the second UE (to be destined to the first UE), the UPF directly forwards the call data to the first UE without forwarding to another network element. If the UPF that serves the first UE is different from the UPF that serves the second UE, the UPF in S407 may be either of the UPFs.

The first configuration information includes, for example, a data filtering rule and/or a data forwarding rule. The data filtering rule includes, for example, a packet detection rule (packet detection rule, PDR), and the data forwarding rule includes, for example, a forwarding action rule (forwarding action rule, FAR).

In an implementation of the PDR, for call data from a call device (or a communication apparatus), the PDR may be for obtaining the call data between the first UE and the second UE (for example, data (voice call data) of a QoS flow whose 5QI is 1 and data (video call data) of a QoS flow whose 5QI is 2 on the IMS PDU session) through filtering, where the call device is the first UE or the second UE. For example, a source interface (source interface) in the PDR is "access side (access side)", and core network (core network, CN) tunnel (tunnel) information (information) in the PDR is a tunnel header (header) whose 5QI is 1 on the PDU session.

In another implementation of the PDR, for call data that is received by the UPF and forwarded by the UPF, a destination address that is of the call data and that is included in the PDR may be address information of a peer call device (or a peer communication apparatus). If the call data is from the first UE, the peer call device is the second UE; or if the call data is from the second UE, the peer call device is the first UE. For example, a source interface in the PDR is "IMS call internal", and/or the destination address that is of the call data and that is in the PDR is an address of the peer call device, so that the UPF can directly forward the call data between the first UE and the second UE to the peer call device.

In an implementation of the FAR, for call data from a call device, the FAR may indicate forwarding to the UPF. For example, if a destination interface (destination interface) in the FAR is "IMS call internal (IMS call internal)", it indicates the forwarding to the UPF.

In another implementation of the FAR, for call data that is received by the UPF and forwarded by the UPF, the FAR may indicate forwarding to a peer call device. For example, a destination interface in the FAR is "access side", and/or an out header (out header) in the FAR is information about an N3 tunnel or an N9 tunnel.

After receiving the first configuration information, the UPF may perform configuration based on the first configuration information, for example, to perform local switching on the call data between the first UE and the second UE. For example, the configuration performed by the UPF includes one or more of the following: For call data from a call device, setting the data filtering rule as obtaining the call data between the first UE and the second UE (for example, the data (the voice call data) of the QoS flow whose 5QI is 1 and the data (the video call data) of the QoS flow whose 5QI is 2 on the IMS PDU session) through filtering, where the call device is the first UE or the second UE; for call data from a call device, setting the data forwarding rule as performing forwarding to the UPF; for call data that is received by the UPF and forwarded by the UPF, setting a destination address of the call data to address information of a peer call device, where if the call data is from the first UE, the peer call device is the second UE; or if the call data is from the second UE, the peer call device is the first UE; or for call data that is received by the UPF and forwarded by the UPF, setting a rule for forwarding the call data as performing forwarding to a peer call device.

That the UPF sets the data filtering rule as obtaining the call data between the first UE and the second UE through filtering includes: For example, the UPF sets the source interface in the PDR to "access side", and sets the CN tunnel information in the PDR to the tunnel header whose 5QI is 1 on the PDU session. Through the setting, if there is call data that is from the first UE and that is to be sent to the second UE or call data that is from the second UE and that is to be sent to the first UE, the UPF may obtain the call data through filtering for subsequent processing.

That the UPF sets the data forwarding rule as performing forwarding to the UPF includes: For example, the UPF sets the destination interface in the FAR to "IMS call internal". Through the setting, the UPF may forward, to the UPF, call data (for example, the call data that is obtained through filtering by using the foregoing PDR) that is from the first UE and that is to be sent to the second UE. Similarly, the UPF may also forward, to the UPF, call data (for example, the call data that is obtained through filtering by using the foregoing PDR) that is from the second UE and that is to be sent to the first UE. This is equivalent to: The UPF does not directly forward the call data between the first UE and the second UE to another network element, but first forwards the call data to the UPF.

Because the UPF forwards the call data to the UPF, the UPF may receive the call data from the UPF. In this case, the UPF may further perform setting for the call data. For example, the UPF may set a rule for filtering the call data and/or set a rule for forwarding the call data. The rule for filtering the call data includes, for example, a PDR. For example, the UPF may set a source interface in the PDR corresponding to the call data to "IMS call internal", and/or set a destination address of the call data in the PDR to an address of a peer call device, so that the UPF can directly forward the call data to the peer call device. For example, if the first UE and the second UE are served by the same UPF, the UPF may set the destination address of the call data to the address of the peer call device. Alternatively, if the first UE and the second UE are served by different UPFs, the UPF may set the destination address of the call data to an address of the UPF that serves the peer call device, and the UPF may forward the call data to the UPF that serves the peer call device, so that the UPF that serves the peer call device forwards the call data to the peer call device. The rule for forwarding the call data includes, for example, an FAR. For example, the UPF may set a destination interface in the FAR to "access side", and/or set an out header in the FAR to the information about the N3 tunnel or the N9 tunnel. Through the foregoing setting process, the UPF may directly forward, to the second UE, the call data that is from the first UE; or forward, to the UPF that serves the second UE, the call data that is from the first UE; and the UPF also directly forwards, to the first UE, the call data that is from the second UE, or forwards, to the UPF that serves the first UE, the call data that is from the second UE. For example, the UPF that serves the first UE and the UPF that serves the second UE are deployed on the satellite. In this way, the call data between the first UE and the second UE is switched on the satellite.

Optionally, if the first core network element or the IMS network element decides that the first UE and the second UE are to switch the call data on the satellite and the local switching is to be implemented through the UPF, S407 may be performed. Alternatively, if the first core network element decides that the first UE and the second UE are to switch the call data on the satellite, and the first core network element decides that the RAN is to implement the local switching, S407 may be replaced with: The first core network element sends second configuration information to the RAN. Correspondingly, the RAN receives the second configuration information from the first core network element. If the first UE and the second UE are served by different RANs, the first core network element may send the second configuration information to either of the RANs, or the first core network element may send the second configuration information to both the two RANs. For example, the first core network element is the SMF, and the SMF may send N2 session management (session management, SM) information to the RAN. The N2 SM information may include (or indicate) the second configuration information, and the second configuration information may be for configuring the IMS PDU session of the first UE, and may be for configuring the IMS PDU session of the second UE. For another example, the first core network element is the PCF, and the PCF may send a PCC rule to the SMF, where the PCC rule may include (or indicate) the second configuration information. Then, the SMF sends the second configuration information to the RAN. For example, the SMF sends N2 SM information to the RAN, where the N2 SM information may include (or indicate) the second configuration information.

In an optional implementation of the second configuration information, the second configuration information may be for configuring an association relationship between a QoS flow of the first UE and a QoS flow of the second UE. The QoS flow of the first UE is for transmitting the call data between the first UE and the second UE, and the QoS flow of the second UE is for transmitting the call data between the first UE and the second UE. The association relationship is configured, so that the RAN can learn that data from the QoS flow of the first UE is to be directly forwarded to the second UE by using the QoS flow of the second UE, or is to be forwarded, by using the QoS flow of the second UE, to the UPF that serves the second UE; and data from the QoS flow of the second UE is to be directly forwarded to the first UE by using the QoS flow of the first UE, or is to be forwarded, by using the QoS flow of the first UE, to the UPF that serves the first UE. For example, the second configuration information is for configuring an association relationship between a QoS flow 1 of the first UE and a QoS flow 2 of the second UE. In this case, when receiving data from the QoS flow 1 of the first UE, the RAN may directly send the data to the second UE by using the QoS flow 2 of the second UE, or send, by using the QoS flow 2 of the second UE, the data to the UPF that serves the second UE; or when receiving data from the QoS flow 1 of the second UE, the RAN may directly send the data to the first UE by using the QoS flow 2 of the first UE, or send, by using the QoS flow 2 of the first UE, the data to the UPF that serves the first UE.

Optionally, the method may further include S408 to S412. The IMS network element in these steps is, for example, the P-CSCF, and the first core network element is, for example, the PCF.

S408: The IMS network element sends a second request to the second UE. Correspondingly, the second UE receives the second request from the IMS network element. The second request is, for example, a SIP invite message, and the SIP invite message may be for requesting the second UE to accept the call with the first UE.

S409: The second UE sends a response message to the IMS network element, where the response message is a response message for the second request after the second UE receives the second request. For example, the response message is a SIP 183 message. Correspondingly, the IMS network element receives the SIP 183 message from the second UE. The SIP 183 message may indicate that the second UE accepts the call with the first UE, or indicate that the second UE receives the request of the SIP invite message. The SIP 183 message includes, for example, a session description protocol (session description protocol, SDP) answer (answer).

S410: The IMS network element triggers the PCF to establish, for the first UE and the second UE, a QoS flow for carrying the call data. For example, the QoS flow is a guaranteed bit rate (guaranteed bit rate, GBR)-type QoS flow whose 5QI is 1.

Optionally, the SMF may establish, for the first UE and the second UE, the QoS flow whose 5QI is 1 and that is for transmitting the voice call data, the QoS flow whose 5QI is 2 and that is for transmitting the video call data, and/or another QoS flow for transmitting data channel communication data. This step may occur after S410, before S411, after S411, or before S412.

S411: The IMS network element sends a SIP 183 message to the first UE. Correspondingly, the first UE receives the SIP 183 message from the IMS network element. For example, the SIP 183 message indicates that the second UE accepts the call with the first UE.

S412: The first UE and the second UE make the call.

The call data sent by the first UE may arrive at the UPF or the RAN. The UPF or the RAN may forward the call data to the second UE; or the UPF or the RAN may forward the call data to the UPF or the RAN that serves the second UE, and then the UPF or the RAN forwards the call data to the second UE. Similarly, the call data sent by the second UE may arrive at the UPF or the RAN. The UPF or the RAN may forward the call data to the first UE; or the UPF or the RAN may forward the call data to the UPF or the RAN that serves the first UE, and then the UPF or the RAN forwards the call data to the first UE.

Alternatively, S406 may occur before S410, after S410, or simultaneously with S410. For example, after receiving the SIP 183 message from the second UE (in S409), the IMS network element may perform S410. The IMS network element may perform S406 before S410, in a process of performing S410, or after S410. This is equivalent to: In a process of triggering the PCF to establish a call bearer (for example, the QoS flow whose 5QI is 1, the QoS flow whose 5QI is 2, and/or the another QoS flow for transmitting the data channel communication data), the IMS network element may indicate that data on the bearer is to be directly switched to a peer UE on the satellite. When establishing the call bearer, the SMF may also configure the UPF to perform local switching. For this, refer to FIG. 4B. FIG. 4A and FIG. 4B are both flowcharts according to this embodiment of this application, and a difference lies in that sequences of some steps may be different.

In this embodiment of this application, the UPF or the RAN may perform local switching on the call data between the first UE and the second UE, and both the first UE and the second UE access the network via the satellite. For example, the UPF or the RAN may switch the call data between the first UE and the second UE on the satellite. Therefore, the call data can be switched on the satellite without being routed to a terrestrial network, to shorten a transmission path of the call data and reduce a delay. In addition, because the UPF or the RAN can perform local switching on the call data between the devices, the call data can directly arrive at the peer call device from the UPF or the RAN without being transmitted through the IMS network element or the like, so that the transmission path is further shortened, and the delay is further reduced.

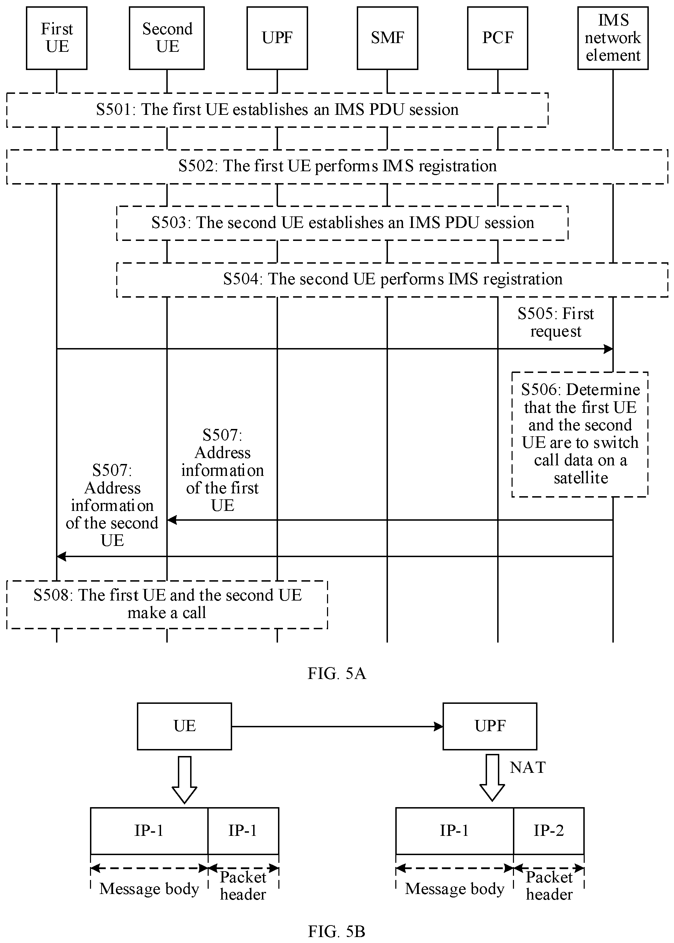

Next, an embodiment of this application provides another communication method. FIG. 5A is a flowchart of the method.

S501: A first UE establishes a PDU session. The PDU session may be for carrying IMS communication-related signaling and data, and therefore may also be referred to as an IMS PDU session.

For more content of S501, refer to S401 in the embodiment shown in FIG. 4A or FIG. 4B.

S502: The first UE performs IMS registration.

For more content of S502, refer to S402 in the embodiment shown in FIG. 4A or FIG. 4B.

S503: A second UE establishes a PDU session. Similarly, the PDU session may also be referred to as an IMS PDU session.

For more content of S503, refer to S403 in the embodiment shown in FIG. 4A or FIG. 4B.

S504: The second UE performs IMS registration.

For more content of S504, refer to S404 in the embodiment shown in FIG. 4A or FIG. 4B.

S501 to S504 may be optional steps. For example, if the UE can make a call without registration, any one or more of S501 to S504 may not need to be performed.

The foregoing describes the registration procedures of the two UEs. The following describes a call process between the UEs.

S505: The first UE sends a first request to an IMS network element. Correspondingly, the IMS network element receives the first request from the first UE.

For more content of S505, refer to S405 in the embodiment shown in FIG. 4A or FIG. 4B.

S506: The IMS network element determines that the first UE and the second UE are to switch call data on a satellite, or determines whether the first UE and the second UE meet a condition for switching the call data on the satellite.

In this embodiment of this application, the IMS network element decides whether the first UE and the second UE are to switch the call data on the satellite, or decides whether the first UE and the second UE meet the condition for switching the call data on the satellite. The IMS network element is, for example, a P-CSCF or an S-CSCF, or may be another network element in an IMS.

Optionally, that the IMS network element determines that the first UE and the second UE are to switch the call data on the satellite may include: determining that the first UE and the second UE are served by a same UPF, where the UPF is deployed on the satellite; and/or determining that the first UE and the second UE are served by a same IMS network element.

Alternatively, if the IMS network element determines that the first UE and the second UE meet the condition for switching the call data on the satellite, the condition may include: The first UE and the second UE are served by a same UPF, where the UPF is deployed on the satellite; and/or the first UE and the second UE are served by a same IMS network element.

In this embodiment of this application, a core network element does not perform a further determining process. Therefore, if the IMS network element determines that the first UE and the second UE are served by different UPFs, because it cannot be determined whether a data transmission channel can be established between the two UPFs, to improve a success rate at which the first UE and the second UE switch the call data on the satellite, the IMS network element may consider that the first UE and the second UE cannot switch the call data on the satellite. The IMS network element may consider, only when the first UE and the second UE are served by the same UPF, that the first UE and the second UE can switch the call data on the satellite.

Optionally, that the IMS network element determines that the first UE and the second UE are to switch the call data on the satellite may further include: determining that media description information supported by the first UE matches that supported by the second UE. For example, in addition to determining whether the first UE and the second UE are served by the same UPF, where the UPF is deployed on the satellite, and/or determining whether the first UE and the second UE are served by the same IMS network element, the IMS network element may further determine whether the media description information of the first UE matches that of the second UE. In a conventional call process, when call data passes through the IMS, the IMS network element may perform format conversion on the call data. For example, media description information of UEs of both call parties may not match, and a peer call end can identify the received call data through processing performed by the IMS network element. However, in this embodiment of this application, the call data between the first UE and the second UE may not pass through the IMS, but directly arrive at a peer call end (the first UE or the second UE). Therefore, optionally, the media description information of the first UE may match that of the second UE, so that the first UE and the second UE can identify the call data from the peer call end without processing performed by the IMS network element. Optionally, if the media description information of the first UE does not match that of the second UE, the IMS network element may consider that the first UE and the second UE cannot switch the call data on the satellite.

For more content of S506, for example, how the IMS network element determines that the first UE and the second UE are to switch the call data on the satellite, refer to the related descriptions in the embodiment shown in FIG. 4A or FIG. 4B.

Alternatively, the IMS network element may not need to determine whether the first UE and the second UE can switch the call data on the satellite, but may directly configure the first UE and the second UE to switch the call data on the satellite. Therefore, S506 is an optional step. For example, the IMS network element may perform the following steps such as S507 without determining. If the determining is not performed, a failure rate at which the first UE and the second UE switch the call data on the satellite increases. This is because the first UE and the second UE may actually not meet the condition for switching the call data on the satellite. However, the manner of not performing determining can save time and improve efficiency of making a call by the UEs.

S507: The IMS network element sends address information of the second UE to the first UE. Correspondingly, the second UE receives the address information from the IMS network element. The IMS network element sends address information of the first UE to the second UE. Correspondingly, the first UE receives the address information from the IMS network element. This is equivalent to: The IMS network element sends address information of peer devices to the devices of both call parties.

If the IMS network element is the S-CSCF, the S-CSCF may first send corresponding address information to the P-CSCF, and then the P-CSCF sends the address information to a corresponding UE. If the IMS network element is the P-CSCF, the P-CSCF may send corresponding address information to a corresponding UE. Using an example in which the IMS network element is the P-CSCF, the P-CSCF may send a second request to the second UE, where the second request is, for example, a SIP invite message, and the SIP invite message may include the address information of the first UE, for example, an IP address of the first UE. In addition, the P-CSCF may send a SIP 183 message to the first UE, where the SIP 183 message may include the address information of the second UE, for example, an IP address of the second UE.

The IMS network element may obtain the address information of the first UE by using a request of the first UE. The request of the first UE includes, for example, the first request in the embodiment shown in FIG. 4A or FIG. 4B, or includes a SIP registration message sent by the first UE to the IMS network element in S502. The first request is, for example, a SIP invite message, and the SIP invite message or the SIP registration message may be implemented in a form of a data packet. The data packet may carry source address information. The source address information is, for example, private-network address information of the first UE. For example, the source address information is carried in a message body (for example, a payload) of the data packet. Alternatively, the source address information may be public-network address information of the first UE. For example, a UPF that serves the first UE may allocate a public-network address to the first UE, and the public-network address information may be carried in an IP packet header of the data packet.

FIG. 5B shows an example of address information carried in a data packet corresponding to a SIP message of the first UE according to this embodiment of this application. In FIG. 5B, for example, the IP address obtained when the first UE establishes the IMS PDU session is a private-network address, and the UPF performs NAT when the data packet of the first UE arrives at the UPF. When sending the data packet (or the SIP message), the first UE includes the private-network address information of the first UE in a message body of the SIP message, and the address information is also included in an IP packet header of the data packet. For example, the address information is IP-1 shown in FIG. 5B. When the data packet arrives at the UPF, the UPF may perform NAT on the address information in the IP packet header of the data packet, to translate the address information into a public-network address. For example, address information obtained through the translation is IP-2. In this case, source address information in an IP packet header of a data packet sent by the UPF to the IMS network element is IP-2, and source address information carried in a message body of the data packet is still IP-1. After the data packet arrives at the IMS network element, the IMS network element may determine that the source address information in the IP packet header of the data packet is different from the source address information in the message body of the data packet, and therefore may determine that the UPF performs NAT on the IP address of the first UE, so that an IP address that is of the first UE and that is stored in the IMS network element may include at least one of IP1 or IP2. Correspondingly, in S507, the address information that is of the first UE and that is sent by the IMS network element to the second UE may be IP1 and/or IP2, to indicate (or be used as) the IP address of the first UE. If the IP address obtained when the first UE establishes the IMS PDU session is a public-network address, when the data packet of the first UE arrives at the UPF, the UPF may not perform NAT. Therefore, using an example in which IP1 is the IP address in the message body of the SIP message received by the IMS network element, and IP2 is a source address in the packet header of the data packet that carries the SIP message and that is received by the IMS network element, IP1 and IP2 may be the same or different.

Similarly, the IMS network element may obtain the address information of the second UE by using a request of the second UE. The request of the second UE includes, for example, the SIP registration message sent by the second UE to the IMS network element in S402. The SIP registration message may be implemented in a form of a data packet. The data packet may carry source address information. The source address information is, for example, a private-network address of the second UE. Alternatively, the source address information may be public-network address information of the second UE. For example, the UPF that serves the second UE may allocate a public-network address to the second UE, and the public-network address information may be carried in an IP packet header of the data packet. Correspondingly, in S507, the address information that is of the second UE and that is sent by the IMS network element to the first UE may be an IP address in a message body of the SIP message that is received by the IMS network element from the second UE, and/or may be a source address in a packet header of the data packet that carries the SIP message of the second UE, where the IP address and/or the source address may indicate (or be used as) the IP address of the second UE.

Optionally, in S507, the IMS network element may send the address information of the first UE to the second UE. After receiving the address information, the second UE may send a SIP 183 message to the IMS network element. The IMS network element may trigger a first core network element (for example, a PCF) to establish, for the first UE and the second UE, a QoS flow for carrying the call data. The QoS flow is, for example, a GBR-type QoS flow whose 5QI is 1. Then, the IMS network element may send the address information of the second UE to the first UE. For this part of content, refer to S408 to S411 in the embodiment shown in FIG. 4A or FIG. 4B.

S508: The first UE and the second UE make the call.

For example, in this embodiment of this application, the call data between the first UE and the second UE may be locally switched on the UPF. When the first UE sends call data to the second UE, a destination address carried in the call data may be the address information of the second UE. After receiving the call data, the UPF may directly send the call data to the second UE based on the destination address without forwarding to another network element, for example, the IMS network element. Similarly, when the second UE sends call data to the first UE, a destination address carried in the call data may be the address information of the first UE. After receiving the call data, the UPF may directly send the call data to the first UE based on the destination address without forwarding to another network element, for example, the IMS network element.

In this embodiment of this application, the UPF may perform local switching on the call data between the first UE and the second UE, and both the first UE and the second UE access a network via the satellite. For example, the UPF may switch the call data between the first UE and the second UE on the satellite. Therefore, the call data can be switched on the satellite without being routed to a terrestrial network, to shorten a transmission path of the call data and reduce a delay. Because the UPF can perform local switching on the call data between the devices, the call data can directly arrive at a peer call device from the UPF without being transmitted through the IMS network element or the like, so that the transmission path is further shortened, and the delay is further reduced. In addition, the IMS network element may send the address information of the devices of both the call parties to the peer communication devices, so that the devices of both the call parties can switch the call data on the satellite by including addresses of the peer call devices during the call, and there is no need to perform excessive configuration on the core network element and/or a RAN, to reduce a network element configuration process and improve call efficiency.

The following continues to describe a method provided in embodiments of this application. In the method described below, a first core network element may be the SMF shown in any one of FIG. 3A to FIG. 3E. In the following descriptions, an example in which the first core network element is an SMF is used. For example, a first core network element that serves a first UE is an SMF that serves an IMS PDU session of the first UE, and may be referred to as a first SMF; and a first core network element that serves a second UE is an SMF that serves an IMS PDU session of the second UE, and may be referred to as a second SMF. In the method described below, a second core network element may be the PCF shown in any one of FIG. 3A to FIG. 3E. In the following descriptions, an example in which the second core network element is a PCF is used. For example, a second core network element that serves the first UE is a PCF that serves the first UE or a PCF that serves the IMS PDU session of the first UE, and may be referred to as a first PCF; and a second core network element that serves the second UE is a PCF that serves the second UE or a PCF that serves the IMS PDU session of the first UE, and may be referred to as a second PCF.

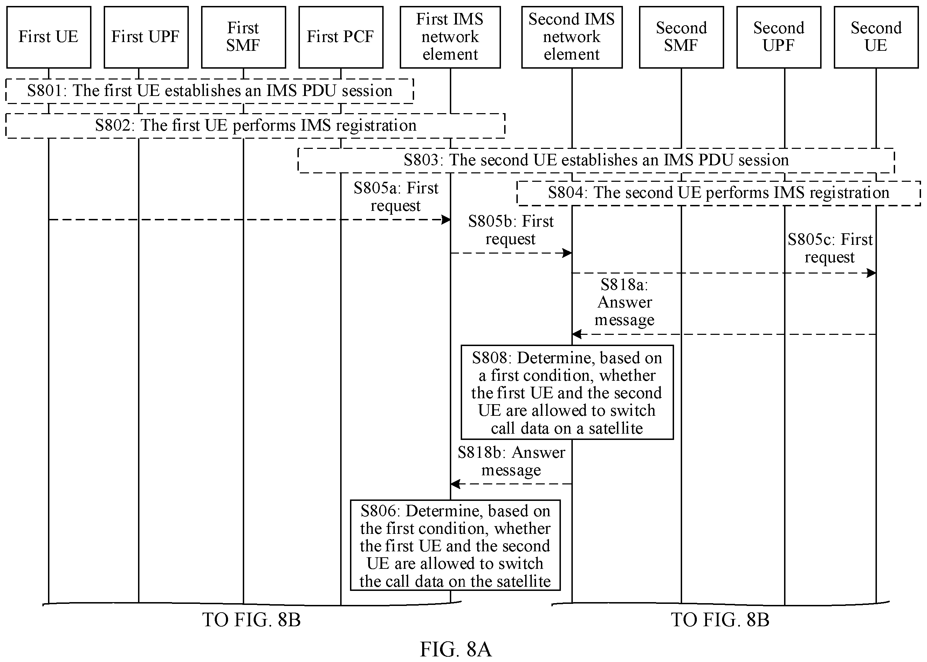

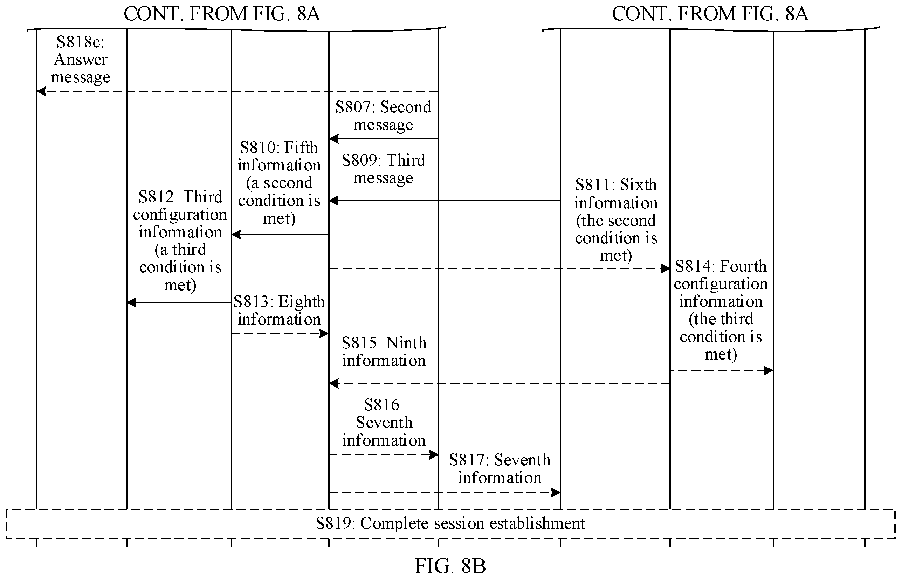

Next, an embodiment of this application provides still another communication method. FIG. 8A and FIG. 8B are a flowchart of the method.

S801: A first UE establishes a PDU session. The PDU session may be for carrying IMS communication-related signaling and data, and therefore may also be referred to as an IMS PDU session. An anchor UPF of the PDU session is located on the ground.

For more content of S801, refer to S401 in the embodiment shown in FIG. 4A or FIG. 4B.

S802: The first UE performs IMS registration.

For more content of S802, refer to S402 in the embodiment shown in FIG. 4A or FIG. 4B.

S803: A second UE establishes a PDU session. Similarly, the PDU session may also be referred to as an IMS PDU session, and an anchor UPF of the PDU session is located on the ground.

For more content of S803, refer to S403 in the embodiment shown in FIG. 4A or FIG. 4B.

S804: The second UE performs IMS registration.

For more content of S804, refer to S404 in the embodiment shown in FIG. 4A or FIG. 4B.

S801 to S804 may be optional steps. For example, if the UE can make a call without registration, any one or more of S801 to S804 may not need to be performed.

The foregoing describes the registration procedures of the two UEs. The following describes a call process between the UEs.

S805a: The first UE sends a first request to a first IMS network element. Correspondingly, the first IMS network element receives the first request from the first UE.

The first IMS network element is, for example, an IMS network element that serves the first UE. The first IMS network element is, for example, a P-CSCF, an S-CSCF, or another network element in an IMS that serves the first UE.

This specification further relates to an IMS network element that serves the second UE, where the IMS network element may be referred to as a second IMS network element. The second IMS network element is, for example, a P-CSCF, an S-CSCF, or another network element in an IMS that serves the second UE. The first IMS network element and the second IMS network element may be a same network element, or may be different network elements.

If the IMS that serves the first UE is the same as the IMS network element that serves the second UE, the first IMS network element and the second IMS network element are the same network element. If the IMS that serves the first UE is different from the IMS network element that serves the second UE, the first IMS network element and the second IMS network element are different network elements.

The first request may be for requesting to make a call with the second apparatus, and for example, is referred to as a call request. For more content of S805a, refer to S405 in the embodiment shown in FIG. 4A or FIG. 4B.

S806: The first IMS network element determines, based on a first condition, whether the first UE and the second UE are allowed to switch call data on a satellite; or the first IMS network element determines whether the first UE meets a condition for switching call data on a satellite, where for example, the condition is referred to as a first condition.

In embodiments of this application, switching call data on a satellite may also be understood as or replaced with UE-satellite-UE (USU) communication, may be understood as or replaced with not returning call data to a terrestrial network, may be understood as performing local switching on a satellite, or may be understood as another description. This is not limited.

The first IMS network element may perform S806 after receiving a first message. The first message is, for example, the first request in S805a. The first request may be for requesting to make the call with the second UE, and for example, may also be referred to as the call request. The first UE sends the first request, and the first request may arrive at the first IMS network element. Refer to S805a. If the first IMS network element sends the first request to the second IMS network element, the second IMS network element may receive the first request. Refer to S805b. In addition, the second IMS network element may further send the first request to the second UE. Refer to S805c. For more content of the first request, refer to S405 in the embodiment shown in FIG. 4A or FIG. 4B.

Alternatively, the first message may be an answer message in S818b, and the answer message is an answer message for the first request. This is used as an example in FIG. 8A.

For example, after receiving the first request, the first IMS network element may temporarily not perform S806, but may perform S806 after receiving the answer message from the second UE. In this case, the response message may be referred to as the first message. The answer message may be an answer to the first request. For example, the answer message is a SIP 183 message (a session progress message, sent by a called party to a calling party to notify that a session is in progress), a SIP 180 message (a ringing message, used by the called party to notify the calling party that the called party starts ringing for a user, where the calling party may generate a ring back tone for a user), or another answer message. The first UE sends a message (for example, the first request) for requesting to make the call with the second UE, and the first request may arrive at the first IMS network element. Refer to S805a. If the first IMS network element sends the first request to the second IMS network element, the second IMS network element may receive the first request. Refer to S805b. In addition, the second IMS network element may further send the first request to the second UE. Refer to S805c. The first request may be for requesting to make the call with the second UE. After receiving the first request, the second UE may send the answer message. If the answer message arrives at the second IMS network element, the second IMS network element receives the answer message. Refer to S818a. The second IMS network element may send the answer message to the first IMS network element. Refer to S818b. The first IMS network element may send the answer message to the first UE. Refer to S818c.

Optionally, that the first IMS network element determines that the first UE and the second UE are to switch the call data on the satellite may include one or more of the following, or the first IMS network element may determine, by using one or more of the following, that the first UE and the second UE are to switch the call data on the satellite: determining that a network allows the first UE to switch the call data on the satellite; determining that the first UE and the second UE are served by a same UPF, where the UPF is deployed on the satellite; determining that the first UE and the second UE are served by the same IMS network element; determining that the first UE and the second UE are served by different UPFs, where the different UPFs are both deployed on the satellite; determining that media description information supported (or used) by the first UE matches that supported (or used) by the second UE; determining that a serving PLMN of the first UE and a serving PLMN of the second UE are a same PLMN; determining that lawful interception is not to be performed on the call between the first UE and the second UE; determining that the first UE and the second UE are covered by the same satellite; determining that the first UE and the second UE are covered by different satellites, and there is an inter-satellite link (inter-satellite link, ISL) between the different satellites; or determining that the first UE is not to perform home routing during the call when the first UE is in a roaming state. The first IMS network element may determine, for example, based on subscription information of the first UE and/or by using an operator policy, whether the network allows the first UE to switch the call data on the satellite. This is not specifically limited.

Alternatively, the first condition may include one or more of the following: A network allows the first UE to switch the call data on the satellite; the first UE and the second UE are served by a same UPF, where the UPF is deployed on the satellite; the first UE and the second UE are served by the same IMS network element; the first UE and the second UE are served by different UPFs, where the different UPFs are both deployed on the satellite; media description information supported by the first UE matches that supported by the second UE; a serving PLMN of the first UE and a serving PLMN of the second UE are a same PLMN; lawful interception is not to be performed on the call between the first UE and the second UE; the first UE and the second UE are covered by the same satellite; the first UE and the second UE are covered by different satellites, and there is an inter-satellite link between the different satellites; or the first UE is not to perform home routing during the call when the first UE is in a roaming state.

The foregoing uses an example in which the first IMS network element and the second IMS network element are different network elements. Alternatively, if the first IMS network element and the second IMS network element are the same network element, that the first IMS network element determines that the first UE and the second UE are to switch the call data on the satellite may further include one or more of the following, or the first IMS network element may further determine, by using one or more of the following, that the first UE and the second UE are to switch the call data on the satellite: determining that the first UE and the second UE are served by a same PCF; determining that the IMS PDU session of the first UE and the IMS PDU session of the second UE are served by a same PCF; determining that the IMS PDU session of the first UE and the IMS PDU session of the second UE are served by a same SMF; determining that the IMS PDU session of the first UE and the IMS PDU session of the second UE are served by a same PCF and a same SMF; determining that the network allows the second UE to switch call data on the satellite; or determining that the second UE is not to perform home routing during the call when the second UE is in a roaming state.

Alternatively, if the first IMS network element and the second IMS network element are the same network element, the first condition may further include one or more of the following: The first UE and the second UE are served by a same PCF; the IMS PDU session of the first UE and the IMS PDU session of the second UE are served by a same PCF; the IMS PDU session of the first UE and the IMS PDU session of the second UE are served by a same SMF; the IMS PDU session of the first UE and the IMS PDU session of the second UE are served by a same PCF and a same SMF; the IMS PDU session of the first UE and the IMS PDU session of the second UE are served by a same PCF and a same SMF; the network allows the second UE to switch call data on the satellite; or the second UE is not to perform home routing during the call when the second UE is in a roaming state.

A PCF that serves a UE and a PCF that serves an IMS PDU session of the UE may be a same PCF. For example, a PCF that serves a UE may be specifically a PCF that serves an IMS PDU session of the UE. In the following descriptions, the "PCF that serves the UE" is used as an example for description. In addition, an SMF that serves a UE may be specifically an SMF that serves an IMS PDU session of the UE. In the following descriptions, the "SMF that serves the UE" is used as an example for description.

It can be learned from the foregoing descriptions of the first condition that, if the first IMS network element and the second IMS network element are different network elements, the first IMS network element may perform determining on information related to the first UE, and the first IMS network element may not need to perform determining on information related to the second UE but not related to the first UE (for example, whether the second UE is to perform home routing, or whether the network allows the second UE to switch the call data on the satellite). Similarly, the second IMS network element may perform determining on information related to the second UE, and the second IMS network element may not need to perform determining on information related to the first UE but not related to the second UE (for example, whether the first UE is to perform home routing, or whether the network allows the first UE to switch the call data on the satellite). If the first IMS network element and the second IMS network element are the same network element, the first IMS network element may perform determining on the information related to the first UE and/or the information related to the second UE.

The first condition may include a condition related to a first PCF that serves the first UE. In this case, the first IMS network element may first obtain information about the first PCF. For example, the first IMS network element may request the information about the first PCF from a UDM, or the first IMS network element may obtain the information about the first PCF by using a binding support function (binding support function, BSF). For example, for a specific UE or a specific PDU session, the BSF may store one or more of an identifier of the UE, an IP address of the UE, a data network name (data network name, DNN) of the UE, slice information of the UE, or information about a PCF selected for the UE (for example, an address of the PCF and an associated PCF instance ID). Therefore, the first IMS network element may obtain, from the BSF by using the one or more of the foregoing information, the information about the PCF for the corresponding UE or the information about the PCF corresponding to the PDU session of the UE. Alternatively, the first IMS network element may obtain the information about the first PCF in another manner. Optionally, if the first IMS network element and the second IMS network element are the same network element, the first condition may include a condition related to a second PCF that serves the second UE, and the first IMS network element may further obtain information about the second PCF. For example, the first IMS network element may request the information about the second PCF from the UDM, the first IMS network element may obtain the information about the second PCF by using the BSF, or the first IMS network element may obtain the information about the second PCF in another manner. The information about the first PCF includes, for example, an identifier of the first PCF and/or address information of the first PCF; and the information about the second PCF includes, for example, an identifier of the second PCF and/or address information of the second PCF.

The first condition may include a condition related to a first SMF that serves the IMS PDU session of the first UE. In this case, the first IMS network element may first obtain information about the first SMF. For example, the first IMS network element may request the information about the first SMF from the UDM. Alternatively, the first IMS network element may obtain the information about the first SMF by using the BSF. In this case, for a specific PDU session, the BSF may store one or more of an identifier of a UE corresponding to the PDU session, an IP address of the UE, a DNN of the UE, slice information of the UE, or information about an SMF selected for the UE (for example, an address of the SMF and an associated SMF instance ID). Therefore, the first IMS network element may obtain, from the BSF by using the one or more of the foregoing information, the information about the SMF corresponding to the PDU session of the corresponding UE. Alternatively, the first IMS network element may obtain the information about the first SMF in another manner. Optionally, if the first IMS network element and the second IMS network element are the same network element, the first condition may include a condition related to a second SMF that serves the second UE, and the first IMS network element may further obtain information about the second SMF. For example, the first IMS network element may request the information about the second SMF from the UDM, the first IMS network element may obtain the information about the second SMF by using the BSF, or the first IMS network element may obtain the information about the second SMF in another manner. The information about the first SMF includes, for example, an identifier of the first SMF and/or address information of the first SMF; and the information about the second SMF includes, for example, an identifier of the second SMF and/or address information of the second SMF.

The following describes some content included in the first condition.

For example, one UPF may be deployed on one satellite, or one satellite has a function of one UPF. In this case, if the first UE and the second UE are covered by the same satellite, it may be considered that the first UE and the second UE may be served by the same UPF, where the UPF is deployed on the satellite.

If the first UE and the second UE are covered by different satellites, it indicates that the first UE and the second UE are served by different UPFs, and the different UPFs are both located on the satellites. If there is an inter-satellite link between the different satellites, it may indicate that a data transmission channel can be established between the different UPFs.

If the first UE and the second UE are served by the same UPF, where the UPF is deployed on the satellite, it indicates that the call data between the first UE and the second UE can be switched on the satellite. Alternatively, if the first UE and the second UE are served by different UPFs, and the different UPFs can communicate with each other or a data transmission channel can be established between the different UPFs, it indicates that local switching of the call data between the first UE and the second UE can be implemented through the UPFs. If the different UPFs are both deployed on satellites, the call data between the first UE and the second UE can be switched on the satellites.

Currently, lawful interception needs to be performed on some calls to implement behavior management and control. Generally, the lawful interception is implemented by using a terrestrial network. Therefore, if lawful interception needs to be performed on a call, the call should be transmitted through a terrestrial path, and switching of call data on a satellite is not suitable. Whether lawful interception needs to be performed on a call of the first UE may be determined by the first IMS network element that serves the first UE. Therefore, if the lawful interception does not need to be performed on the call between the first UE and the second UE, the call data corresponding to the call may be switched on the satellite. If the lawful interception needs to be performed on the call, the call data corresponding to the call should not be switched on the satellite.

If the first UE is in the roaming state, the first UE may or may not perform home routing (HPLMN routing) during the call with the second UE, where not performing home routing may also be understood as performing visited PLMN routing (VPLMN routing). If the first UE performs home routing during the call with the second UE, a transmission path of the call data needs to include a home path. In this case, the call data cannot be switched on the satellite. If the first UE does not perform home routing during the call with the second UE, a transmission path of the call data may not include a home path. In this case, the call data may be switched on the satellite.

If the PCF that serves the first UE is different from the PCF that serves the second UE, or the PCF that serves the IMS PDU session of the first UE is different from the PCF that serves the IMS PDU session of the second UE, information and policy exchange between the two PCFs may be involved when the first UE and the second UE switch the call data on the satellite. This increases system complexity. Therefore, in this embodiment of this application, if the PCF that serves the first UE is different from the PCF that serves the second UE, or the PCF that serves the IMS PDU session of the first UE is different from the PCF that serves the IMS PDU session of the second UE, the first UE and the second UE may not switch the call data on the satellite. If the PCF that serves the first UE is the same as the PCF that serves the second UE, and the PCF that serves the IMS PDU session of the first UE is the same as the PCF that serves the IMS PDU session of the second UE, the first UE and the second UE may switch the call data on the satellite.

If the SMF that serves the IMS PDU session of the first UE is different from the SMF that serves the IMS PDU session of the second UE, information exchange between the two SMFs may be involved when the first UE and the second UE switch the call data on the satellite. In this embodiment of this application, information exchange may be implemented between SMFs. In this case, regardless of whether the SMF that serves the IMS PDU session of the first UE is the same as the SMF that serves the IMS PDU session of the second UE, the switching of the call data between the first UE and the second UE on the satellite is not affected. In other words, the first UE and the second UE may switch the call data on the satellite, or may not switch the call data on the satellite. In this case, the conditions related to the SMFs may not be included in the first condition. Alternatively, considering that interaction between SMFs also causes system complexity, this embodiment of this application may also specify that if the first UE and the second UE need to switch the call data on the satellite, the SMF that serves the IMS PDU session of the first UE should be the same as the SMF that serves the IMS PDU session of the second UE. In this case, if the SMF that serves the IMS PDU session of the first UE is different from the SMF that serves the IMS PDU session of the second UE, the first UE and the second UE may not switch the call data on the satellite; or if the SMF that serves the IMS PDU session of the first UE is the same as the SMF that serves the IMS PDU session of the second UE, the first UE and the second UE may switch the call data on the satellite.

If this embodiment of this application specifies that if the first UE and the second UE need to switch the call data on the satellite, the SMF that serves the IMS PDU session of the first UE should be the same as the SMF that serves the IMS PDU session of the second UE, it may be understood in combination with a specification for the PCFs that if the first UE and the second UE need to switch the call data on the satellite, the PCF that serves the first UE should be the same as the PCF that serves the second UE, the PCF that serves the IMS PDU session of the first UE should be the same as the PCF that serves the IMS PDU session of the second UE, and the SMF that serves the IMS PDU session of the first UE should be the same as the SMF that serves the IMS PDU session of the second UE. In this case, if the first condition includes a condition related to the PCF and a condition related to the SMF, and if one or more of the following conditions are met, the first UE and the second UE may not switch the call data on the satellite: The PCF that serves the first UE is different from the PCF that serves the second UE, the PCF that serves the IMS PDU session of the first UE is different from the PCF that serves the IMS PDU session of the second UE, or the SMF that serves the IMS PDU session of the first UE is different from the SMF that serves the IMS PDU session of the second UE. Alternatively, if the following conditions are met, the first UE and the second UE may switch the call data on the satellite: The PCF that serves the first UE is the same as the PCF that serves the second UE, the PCF that serves the IMS PDU session of the first UE is the same as the PCF that serves the IMS PDU session of the second UE, and the SMF that serves the IMS PDU session of the first UE is the same as the SMF that serves the IMS PDU session of the second UE.

For more content of S806, for example, another condition included in the first condition, refer to the related descriptions in the embodiment shown in FIG. 4A or FIG. 4B.

Alternatively, the first IMS network element may not need to determine whether the first UE and the second UE can switch the call data on the satellite, but may directly configure the first UE and the second UE to switch the call data on the satellite. Therefore, S806 is an optional step. For example, the first IMS network element may perform the following steps such as S807 without determining. If the determining is not performed, a failure rate at which the first UE and the second UE switch the call data on the satellite increases. This is because the first UE and the second UE may actually not meet the condition for switching the call data on the satellite. However, the manner of not performing determining can save time and improve efficiency of making the call by the UEs.

S807: The first IMS network element sends a second message to the first PCF that serves the first UE. Correspondingly, the first PCF receives the second message.

The first PCF and the second PCF that serves the second UE may be the same, that is, the first PCF and the second PCF are the same PCF. In this case, the first PCF in S807 is the PCF. As described above, the first IMS network element and the second IMS network element may be the same network element, or may be different network elements. In this case, if the first IMS network element and the second IMS network element are the same network element (for example, the first IMS network element), the first IMS network element may send the second message and a third message to the first PCF. Alternatively, if the first IMS network element and the second IMS network element are different network elements, the first IMS network element may send the second message to the first PCF, and the second IMS network element may send a third message to the first PCF. The first PCF may receive the second message and the third message. When the first IMS network element is the same as the second IMS network element, that the first IMS network element sends the second message and the third message to the first PCF may be understood as: The first IMS network element requests USU communication for the first UE and the second UE separately, where content of the second message and the third message may not be completely the same. In addition, if the first IMS network element is the same as the second IMS network element, and the first PCF is the same as the second PCF, optionally, the first IMS network element may combine the second message and the third message into one message for sending. For example, the first IMS network element includes information included in the second message and information included in the third message in one message for sending.

Optionally, the second message may also be referred to as a UE policy request (UE policy request), or may have another name. The second message may include an identifier of the first UE, an identifier of the second UE, and fourth information. The fourth information may be for requesting the switching of the call data between the first UE and the second UE on the satellite. For example, the fourth information may also be referred to as a USU communication request (the USU communication request may be considered as a USU communication request for the first UE, or may be considered as a USU communication request for the first UE and the second UE). A name is not limited.

The identifier of the first UE may include one or more of a first identifier of the first UE, a second identifier of the first UE, or a third identifier of the first UE, and may further include another identifier of the first UE. The identifier of the second UE may include one or more of a first identifier of the second UE, a second identifier of the second UE, or a third identifier of the second UE, and may further include another identifier of the second UE. A third identifier of a UE includes, for example, address information of the UE, for example, an IP address of the UE. For example, the third identifier of the first UE may include an IP address of the first UE, and the third identifier of the second UE may include an IP address of the second UE. In addition, for descriptions of the first identifier, the second identifier, and the like, refer to the embodiment shown in FIG. 4A or FIG. 4B.

If the first IMS network element determines, in S806, that the first UE and the second UE are to switch the call data on the satellite, S807 may be performed. Alternatively, if the first IMS network element determines, in S806, that the first UE and the second UE are not to switch the call data on the satellite, S807 may not be performed.

S808: The second IMS network element determines, based on the first condition, whether the first UE and the second UE are allowed to switch the call data on the satellite; or the second IMS network element determines whether the first UE meets the condition for switching the call data on the satellite, where for example, the condition is referred to as the first condition.

The second IMS network element may perform S808 after receiving a first message. For the second IMS network element, in an optional implementation of the first message, the first message is, for example, from the first UE. The first message is, for example, the first request in S805b. The first UE sends the first request, and the first request may arrive at the first IMS network element. Refer to S805a. If the first IMS network element sends the first request to the second IMS network element, the second IMS network element may receive the first request. Refer to S805b. In addition, the second IMS network element may further send the first request to the second UE. Refer to S805c.

Alternatively, in another optional implementation of the first message, the first message is, for example, from the second UE, and is, for example, the answer message in S818a. This is used as an example in FIG. 8A. The answer message may be an answer to the message for requesting to make the call with the second UE, for example, the answer to the first request. The first UE sends the message (for example, the first request) for requesting to make the call with the second UE, and the first request may arrive at the first IMS network element. Refer to S805a. If the first IMS network element sends the first request to the second IMS network element, the second IMS network element may receive the first request. Refer to S805b. In addition, the second IMS network element may further send the first request to the second UE. Refer to S805c. The first request may be for requesting to make the call with the second UE. After receiving the first request, the second UE may send the answer message. If the answer message arrives at the second IMS network element, the second IMS network element receives the answer message. Refer to S818a. The second IMS network element may send the answer message to the first IMS network element. Refer to S818b. The first IMS network element may send the answer message to the first UE. Refer to S818c.

Optionally, that the second IMS network element determines that the first UE and the second UE are to switch the call data on the satellite may include one or more of the following, or the second IMS network element may determine, by using one or more of the following, that the first UE and the second UE are to switch the call data on the satellite: determining that the network allows the second UE to switch the call data on the satellite; determining that the first UE and the second UE are served by the same UPF, where the UPF is deployed on the satellite; determining that the first UE and the second UE are served by the same IMS network element; determining that the first UE and the second UE are served by different UPFs, where the different UPFs are both deployed on the satellite; determining that the media description information supported by the first UE matches that supported by the second UE; determining that the serving PLMN of the first UE and the serving PLMN of the second UE are the same PLMN; determining that lawful interception is not to be performed on the call between the first UE and the second UE; determining that the first UE and the second UE are covered by the same satellite; determining that the first UE and the second UE are covered by different satellites, and there is an inter-satellite link between the different satellites; determining that the second UE is not to perform home routing during the call when the second UE is in a roaming state; determining that the first UE and the second UE are served by the same PCF; determining that the IMS PDU session of the first UE and the IMS PDU session of the second UE are served by the same PCF; determining that the IMS PDU session of the first UE and the IMS PDU session of the second UE are served by the same PCF and the same SMF; or determining that the first UE and the second UE are served by the same PCF and the same SMF. The second IMS network element may determine, for example, based on the subscription information of the first UE and/or by using an operator policy, whether the network allows the second UE to switch the call data on the satellite. This is not specifically limited.

Alternatively, the first condition may include one or more of the following: The network allows the second UE to switch the call data on the satellite; the first UE and the second UE are served by the same UPF, where the UPF is deployed on the satellite; the first UE and the second UE are served by the same IMS network element; the first UE and the second UE are served by different UPFs, where the different UPFs are deployed on the satellite; the media description information supported by the first UE matches that supported by the second UE; the serving PLMN of the first UE and the serving PLMN of the second UE are the same PLMN; the lawful interception is not to be performed on the call between the first UE and the second UE; the first UE and the second UE are covered by the same satellite; the first UE and the second UE are covered by different satellites, and there is an inter-satellite link between the different satellites; the second UE is not to perform home routing during the call when the second UE is in a roaming state; the first UE and the second UE are served by the same PCF; the IMS PDU session of the first UE and the IMS PDU session of the second UE are served by the same PCF; the first UE and the second UE are served by the same PCF and the same SMF; or the IMS PDU session of the first UE and the IMS PDU session of the second UE are served by the same PCF and the same SMF.

The foregoing uses an example in which the first IMS network element and the second IMS network element are different network elements. If the first IMS network element and the second IMS network element are the same network element, S808 may not be performed, and only S806 needs to be performed. For details, refer to the descriptions of S806.

For more content of S808, for example, the first condition, refer to the descriptions of S806.

S809: The second IMS network element sends the third message to the second PCF that serves the second UE. Correspondingly, the second PCF receives the third message.

The first PCF and the second PCF that serves the second UE may be the same, that is, the first PCF and the second PCF are the same PCF. This is used as an example in the following of this embodiment of this application. In this case, both the second PCF in S809 and the first PCF in S807 are the same PCF. As described above, the first IMS network element and the second IMS network element may be the same network element, or may be different network elements. In this case, if the first IMS network element and the second IMS network element are the same network element (for example, the first IMS network element), the first IMS network element may send the second message and the third message to the first PCF. Alternatively, if the first IMS network element and the second IMS network element are different network elements, the first IMS network element may send the second message to the first PCF, and the second IMS network element may send the third message to the first PCF.

Optionally, the third message may also be referred to as a UE policy request, or may have another name. The third message may include the identifier of the first UE, the identifier of the second UE, and fourth information. The fourth information may be for requesting the switching of the call data between the first UE and the second UE on the satellite. For example, the fourth information may also be referred to as a USU communication request (the USU communication request may be considered as a USU communication request for the second UE, or may be considered as a USU communication request for the first UE and the second UE). A name is not limited.

The identifier of the first UE may include the first identifier of the first UE, the second identifier of the first UE, or the third identifier of the second UE, and may further include another identifier of the first UE. The identifier of the second UE may include the first identifier of the second UE, the second identifier of the second UE, or the third identifier of the second UE, and may further include another identifier of the second UE. A third identifier of a UE includes, for example, address information of the UE, for example, an IP address of the UE. For example, the third identifier of the first UE may include the IP address of the first UE, and the third identifier of the second UE may include the IP address of the second UE. For descriptions of the first identifier, the second identifier, and the like, refer to the embodiment shown in FIG. 4A or FIG. 4B.

If the second IMS network element determines, in S808, that the first UE and the second UE are to switch the call data on the satellite, S809 may be performed; or if the second IMS network element determines, in S808, that the first UE and the second UE are not to switch the call data on the satellite, S809 may not be performed.

S810: The first PCF sends fifth information to the first SMF based on a second condition. Correspondingly, the first SMF receives the fifth information.

For example, the first PCF may determine, based on the second condition, whether the first UE and the second UE are allowed to switch the call data on the satellite. If the first UE and the second UE are allowed to switch the call data on the satellite (or the second condition is met), the first PCF sends the fifth information to the first SMF. If the first UE and the second UE are not allowed to switch the call data on the satellite (or the second condition is not met), the first PCF may not send the fifth information to the first SMF. This embodiment of this application uses an example in which the first PCF and the second PCF are the same PCF, and the first PCF is used for description below.

Optionally, the second condition includes one or more of the following: The PCF that serves the first UE and the PCF that serves the second UE are the same; the PCF that serves the IMS PDU session of the first UE and the PCF that serves the IMS PDU session of the second UE are the same; the SMF that serves the IMS PDU session of the first UE and the SMF that serves the IMS PDU session of the second UE are the same; both the first UE and the second UE access the network via the satellite; the first UE and the second UE are covered by the same satellite; or the first UE and the second UE are covered by different satellites, and there is an inter-satellite link between the different satellites.

Optionally, the first PCF may determine whether the first PCF that serves the first UE and the second PCF that serves the second UE are the same (or are the same PCF). The second message may include the identifier of the first UE and the identifier of the second UE. The first PCF may determine, based on the identifier of the first UE, whether the first PCF is the PCF that serves the first UE (or the PCF that serves the IMS PDU session of the first UE). In addition, the first PCF may determine, based on the identifier of the second UE, whether the first PCF is the PCF that serves the second UE (or the PCF that serves the IMS PDU session of the second UE). If the first PCF is both the PCF that serves the first UE (or the PCF that serves the IMS PDU session of the first UE) and the PCF that serves the second UE (or the PCF that serves the IMS PDU session of the second UE), the first PCF may determine that the first PCF is the same as the second PCF, or determine that the first PCF serves the first UE and the second UE.

Optionally, the first PCF may determine whether the first SMF that serves the first UE and the second SMF that serves the second UE are the same (or are the same SMF). For example, the first PCF may determine the first SMF based on the identifier of the first UE, and may determine the second SMF based on the identifier of the second UE, to determine whether the first SMF and the second SMF are the same SMF.

The first condition is described in both S806 and S808, and the second condition may be included in the first condition. Therefore, optionally, the first PCF may not need to perform determining on the second condition. For example, the first PCF may send the fifth information to the first SMF without performing determining on the second condition. Alternatively, regardless of whether the first IMS network element has performed determining on the first condition, the first PCF may perform determining on the second condition. Alternatively, optionally, if the first PCF performs determining on the second condition, the first IMS network element may not need to perform determining on the first condition (or not need to perform determining on a condition that is in the first condition and that is similar to or related to the second condition). Specifically, which network element is to perform determining on a corresponding condition may be default in a communication system, may be predefined in a protocol, may be determined through negotiation between network elements, or may be specified in an operator policy.

Optionally, if the first PCF determines that the second condition is met, and the first PCF receives the second message from the first IMS network element and the third message from the second IMS network element (or if the first IMS network element and the second IMS network element are the same IMS network element, the first PCF may receive the second message and the third message from the IMS network element), the first PCF considers that the first UE and the second UE can switch the call data on the satellite, and the first PCF may perform S810. Alternatively, if one or more of the following conditions are met, the first PCF considers that the first UE and the second UE cannot switch the call data on the satellite, and the first PCF may not perform S810: The second condition is not met; the first PCF does not receive the second message from the first IMS network element and/or the third message from the second IMS network element (for example, if the first PCF is the same as the second PCF, the first PCF does not receive the second message from the first IMS network element and/or the third message from the second IMS network element; or for another example, if the first PCF is different from the second PCF, the first PCF may receive the second message from the first IMS network element, but cannot receive the third message from the second IMS network element; and similarly, the second PCF may receive the third message from the second IMS network element, but cannot receive the second message from the first IMS network element); or the first PCF does not receive the second message and/or the third message from the first IMS network element (for example, the first PCF is the same as the second PCF, and the first IMS network element and the second IMS network element are the same IMS network element). It may be understood that if the first PCF receives the second message and the third message, it indicates that both the first IMS network element and the second IMS network element determine that the first UE and the second UE are to switch the call data on the satellite. In this case, if the first PCF also determines that the second condition is met, the first PCF may perform S810.

Alternatively, if the first PCF does not perform determining on the second condition, when the first PCF receives the second message from the first IMS network element and the third message from the second IMS network element (or if the first IMS network element and the second IMS network element are the same IMS network element, the first PCF may receive the second message and the third message from the IMS network element), the first PCF may consider that the first UE and the second UE can switch the call data on the satellite, and the first PCF may perform S810. Alternatively, if one or both of the following conditions are met, the first PCF considers that the first UE and the second UE cannot switch the call data on the satellite, and the first PCF may not perform S810: The first PCF does not receive the second message from the first IMS network element and/or the third message from the second IMS network element, or the first PCF does not receive the second message and/or the third message from the first IMS network element (the first IMS network element and the second IMS network element are the same IMS network element).

The foregoing involves determining, by the first PCF, whether only one of the second message and the third message is received. For example, if the first PCF receives one of the second message and the third message, the first PCF may start timing, for example, start a timer. If the other of the second message and the third message is received within timing duration of the timer, it is determined that the second message and the third message are received, and the timer may be stopped. If the other of the second message and the third message has not been received when the timer expires, it is determined that the other message is not received.

If the first PCF considers that the first UE and the second UE cannot switch the call data on the satellite, optionally, the first PCF may send first rejection information to the first IMS network element. The first rejection information may indicate that the first UE and the second UE are rejected to switch the call data on the satellite, indicate that the first UE and the second UE are not allowed to switch or not supported in switching the call data on the satellite, indicate that the first UE and the second UE cannot be configured to switch the call data on the satellite, or indicate a failure of configuring the first UE and the second UE to switch the call data on the satellite.

S811: The first PCF sends sixth information to the second SMF. Correspondingly, the second SMF receives the sixth information.

If the first SMF and the second SMF are the same SMF, the first PCF may send the fifth information and the sixth information to the SMF, and the SMF may receive the fifth information and the sixth information; or the first PCF sends only the fifth information to the SMF, and does not need to send the sixth information, and the SMF may receive the fifth information. If the first SMF and the second SMF are different SMFs, the first PCF may send the fifth information to the first SMF, and may further send the sixth information to the second SMF. FIG. 8A and FIG. 8B use an example in which the first SMF and the second SMF are different SMFs. A condition that needs to be met for sending the sixth information by the first PCF is similar to the condition that needs to be met for sending the fifth information. Details are not described.

Both the fifth information and the sixth information may indicate that the first UE and the second UE are to switch the call data on the satellite. For example, the fifth information may include the identifier of the first UE, the identifier of the second UE, and indication information C; and the sixth information may include the identifier of the first UE, the identifier of the second UE, and the indication information C. The indication information C may indicate that the first UE and the second UE are to switch the call data on the satellite. Optionally, the fifth information may be included in a first PCC rule, and the sixth information may be included in a second PCC rule.

Next, the SMF may configure a user plane of an IMS PDU session, to be specific, configure a UPF. For example, the SMF may configure an on-satellite UPF for the IMS PDU session of the first UE and the IMS PDU session of the second UE based on a third condition, and configure a routing and forwarding rule for the call data between the first UE and the second UE as performing forwarding through the on-satellite UPF. The UPF is, for example, an uplink classifier (uplink classifier, UL) UPF, a branching point (branching point, BP) UPF, or a local PDU session anchor (local PDU session anchor, LPSA) UPF, so that the call data between the first UE and the second UE is switched on the satellite without passing through the terrestrial network. This configuration process may include the following S812 to S815. If the first SMF and the second SMF are different SMFs, the foregoing SMF may include the first SMF and the second SMF. The two SMFs may separately perform configuration processes. For example, the first SMF configures a first UPF, and the second SMF configures a second UPF, so that a transmission channel between the first UPF and the second UPF is established through interaction between the first SMF and the second SMF. Alternatively, if the first SMF is the same as the second SMF, the foregoing SMF may include the SMF, and the SMF may configure a first UPF and a second UPF. The first UPF and the second UPF may be a same UPF or different UPFs.

S812: The first SMF sends third configuration information to the first UPF based on the third condition. Correspondingly, the first UPF receives the third configuration information. The third configuration information may be for configuring the first UPF to directly forward the call data between the first UE and the second UE.

Optionally, the third condition may include one or more of the following: Both the first UE and the second UE access the network via the satellite; the first UE and the second UE are served by the same UPF, where the UPF is deployed on the satellite; the first UE and the second UE are served by different UPFs, where the different UPFs are both deployed on the satellite, and a data transmission channel is capable of being established between the different UPFs; the first UE and the second UE are covered by the same satellite; or the first UE and the second UE are covered by different satellites, and there is an inter-satellite link between the different satellites.

For example, one UPF may be deployed on one satellite, or one satellite has a function of one UPF. In this case, if the first UE and the second UE are covered by the same satellite, it may be considered that the first UE and the second UE are served by the same UPF, where the UPF is deployed on the satellite.

If the first UE and the second UE are covered by different satellites, it indicates that the first UE and the second UE are served by different UPFs, and the different UPFs are both located on the satellites. If there is an inter-satellite link between the different satellites, it may indicate that a data transmission channel can be established between the different UPFs.

If the first UE and the second UE are served by the same UPF, where the UPF is deployed on the satellite, it indicates that the call data between the first UE and the second UE can be switched on the satellite. Alternatively, if the first UE and the second UE are served by different UPFs, and the different UPFs can communicate with each other or a data transmission channel can be established between the different UPFs, it indicates that local switching of the call data between the first UE and the second UE can be implemented through the UPFs. If the different UPFs are both deployed on the satellites, the call data between the first UE and the second UE can be switched on the satellites. Therefore, the first SMF may determine, by using the third condition, whether the first UE and the second UE can switch the call data on the satellite.

For example, if the third condition is met, it indicates that the first UE and the second UE can switch the call data on the satellite, and the first SMF may send the third configuration information to the first UPF. If the third condition is not met, it indicates that the first UE and the second UE are not allowed to switch the call data on the satellite, and the first SMF may not send the third configuration information to the first UPF.

Optionally, if the third condition is not met, for example, the first SMF determines that the first UE and the second UE cannot switch the call data on the satellite, optionally, the first SMF may send eighth information to the first PCF, and the first PCF may receive the eighth information. For this, refer to S813. The eighth information may indicate a configuration result of the first SMF for the switching of the call data between the first UE and the second UE on the satellite. For example, if the first UE and the second UE cannot switch the call data on the satellite, the configuration result indicated by the eighth information may be that the configuration is not supported, the configuration cannot be performed, the configuration fails, or the like.

Alternatively, optionally, after performing S812, the first SMF may also perform S813. In this case, a configuration result indicated by the eighth information may be that the configuration is supported, the configuration can be performed, the configuration succeeds, the configuration has been performed, or the like.

If the first SMF and the second SMF are different SMFs, before sending the third configuration information, the first SMF may further receive configuration information A from the second SMF, and the first SMF may obtain the third configuration information based on configuration information determined by the first SMF and the configuration information A. For example, the first SMF may determine the third configuration information based on configuration information of the first SMF for the first UPF and configuration information of the second SMF for the first UPF.

The first SMF may send request information to the second SMF, to request to obtain the configuration information A. Optionally, the request information may include configuration information B, and the configuration information B may be used by the second SMF to configure the second UPF. For example, if the configuration information B includes configuration information of the first SMF for the second UPF, the second SMF may determine, based on configuration information of the second SMF for the second UPF and the configuration information B, information, for example, fourth configuration information, for configuring the second UPF.

Alternatively, the first SMF may receive the configuration information A from the second SMF without requesting. Optionally, the configuration information A may be further for requesting configuration information of the first SMF for the second UPF. In this case, the first SMF may send configuration information B to the second SMF, and the second SMF may determine the fourth configuration information based on configuration information of the second SMF for the second UPF and the configuration information B.

S814: The second SMF sends the fourth configuration information to the second UPF based on the third condition. Correspondingly, the second UPF receives the fourth configuration information. The fourth configuration information may be for configuring the second UPF to directly forward the call data between the first UE and the second UE.

The second SMF may also perform processing similar to that performed by the first SMF. Therefore, for more content of S814, refer to S812.

For example, if the third condition is met, it indicates that the first UE and the second UE can switch the call data on the satellite, and the second SMF may send the fourth configuration information to the second UPF. If the third condition is not met, it indicates that the first UE and the second UE are not allowed to switch the call data on the satellite, and the second SMF may not send the fourth configuration information to the second UPF.

Optionally, if the third condition is not met, for example, the second SMF determines that the first UE and the second UE cannot switch the call data on the satellite, optionally, the second SMF may send ninth information to the second PCF, and the second PCF may receive the ninth information. For this, refer to S815. In this embodiment of this application, the first PCF and the second PCF are the same PCF. The ninth information may indicate a configuration result of the second SMF for the switching of the call data between the first UE and the second UE on the satellite. For example, if the first UE and the second UE cannot switch the call data on the satellite, the configuration result indicated by the ninth information may be that the configuration is not supported, the configuration cannot be performed, the configuration fails, or the like.

Alternatively, optionally, after performing S814, the second SMF may also perform S815. In this case, a configuration result indicated by the ninth information may be that the configuration is supported, the configuration can be performed, the configuration succeeds, the configuration has been performed, or the like.

If the first SMF and the second SMF are different SMFs, before sending the fourth configuration information, the second SMF may further receive the configuration information B from the first SMF, and the second SMF may obtain the fourth configuration information based on configuration information determined by the second SMF and the configuration information B. For example, the second SMF may determine the fourth configuration information based on the configuration information of the second SMF for the second UPF and the configuration information of the first SMF for the second UPF. For more descriptions of this, refer to S812.

The foregoing uses an example in which the first SMF and the second SMF are different SMFs. Alternatively, if the first SMF and the second SMF are the same SMF, the SMF may send the third configuration information to the first UPF, and send the fourth configuration information to the second UPF. In addition, the SMF may further send the eighth information to the first PCF. In addition, if the first UPF and the second UPF are the same UPF, the first SMF may send the third configuration information to the UPF, and the second SMF may send the fourth configuration information to the UPF. Alternatively, if the first UPF and the second UPF are the same UPF, and the first SMF and the second SMF are the same SMF, the SMF may send the third configuration information to the UPF.

S816: The first PCF sends seventh information to the first IMS network element. Correspondingly, the first IMS network element receives the seventh information.

The seventh information may indicate the configuration result for the switching of the call data between the first UE and the second UE on the satellite.

Optionally, if the first SMF and the second SMF are the same SMF, the first PCF may send the seventh information to the first IMS network element after receiving the eighth information. Alternatively, if the first SMF and the second SMF are different SMFs, optionally, the first PCF may send the seventh information to the first IMS network element after receiving the eighth information and the ninth information. If the first IMS network element and the second IMS network element are different IMS network elements, after receiving the eighth information (or after receiving the eighth information and the ninth information), the first PCF may send the seventh information to the second IMS network element in addition to sending the seventh information to the first IMS network element. For this, refer to S817. The seventh information may indicate the configuration result for the switching of the call data between the first UE and the second UE on the satellite.

For example, if the configuration result indicated by the eighth information is that the configuration is supported, the configuration can be performed, the configuration succeeds, the configuration has been performed, or the like, and the configuration result indicated by the ninth information is that the configuration is supported, the configuration can be performed, the configuration succeeds, the configuration has been performed, or the like, the configuration result indicated by the seventh information may be that the configuration is supported, the configuration can be performed, the configuration succeeds, the configuration has been performed, or the like. Alternatively, if the configuration result indicated by the eighth information is that the configuration is not supported, the configuration cannot be performed, the configuration fails, or the like, and/or the configuration result indicated by the ninth information is that the configuration is not supported, the configuration cannot be performed, the configuration fails, or the like, the configuration result indicated by the seventh information may be that the configuration is not supported, the configuration cannot be performed, the configuration fails, or the like.

Optionally, the method may further include S819: Complete IMS session establishment or call establishment. After S819, the first UE and the second UE may start the call. S819 may include another related step for establishing the call. Details are not described in this embodiment of this application.

In this embodiment of this application, the UPF may perform local switching on the call data between the first UE and the second UE, and both the first UE and the second UE access the network via the satellite. For example, the UPF may switch the call data between the first UE and the second UE on the satellite. Therefore, the call data can be switched on the satellite without being routed to the terrestrial network, to shorten a transmission path of the call data and reduce a delay. Because the UPF can perform local switching on the call data between the devices, the call data can directly arrive at a peer call device from the UPF without being transmitted through the IMS network element or the like, so that the transmission path is further shortened, and the delay is further reduced. In addition, all the IMS network element, the PCF, the SMF, and the like may perform corresponding determining on whether the first UE and the second UE can switch the call data on the satellite, so that the first UE and the second UE can switch the call data on the satellite when the conditions are met, to meet requirements of a communication scenario and a plurality of communication parameters.

As described in the embodiment shown in FIG. 8A and FIG. 8B, the first IMS network element and the second IMS network element may be the same network element, or may be different network elements. The embodiment shown in FIG. 8A and FIG. 8B mainly describes a case in which the first IMS network element and the second IMS network element are the same network element, and describes the processing steps performed by the first IMS network element when the first IMS network element and the second IMS network element are different. If the first IMS network element and the second IMS network element are different network elements, the second IMS network element may also perform processing similar to that performed by the first IMS network element.

In the embodiment shown in FIG. 8A and FIG. 8B, if the first IMS network element and the second IMS network element are different network elements, the first IMS network element may not be capable of obtaining information about the second UE when determining whether the first condition is met, and the second IMS network element may not be capable of obtaining information about the first UE when determining whether the first condition is met. The following describes yet another communication method according to an embodiment of this application. According to the method, a first IMS network element may obtain information about a second UE, and a second IMS network element may obtain information about a first UE, so that the IMS network elements can perform more determining processes, and determining results are more accurate.

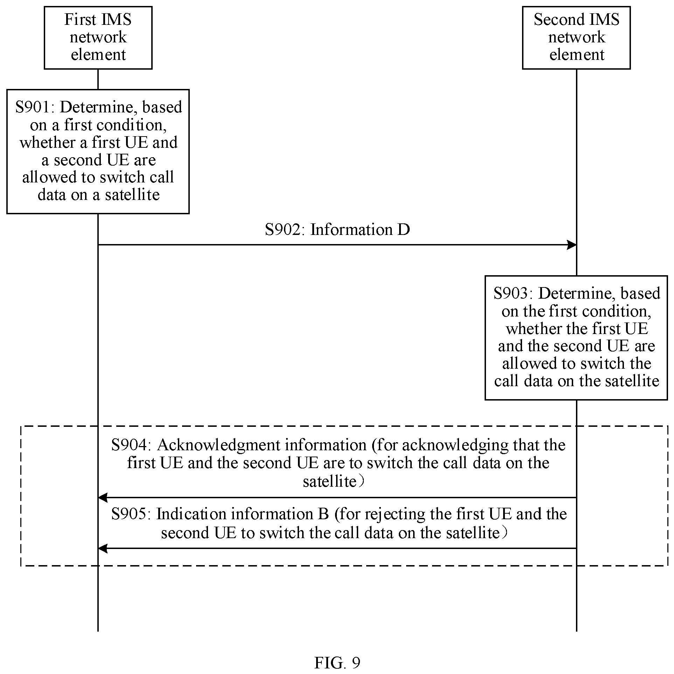

FIG. 9 is a flowchart of the method. This embodiment of this application uses an example in which the first IMS network element and the second IMS network element are different IMS network elements. The embodiment shown in FIG. 9 may be included in the embodiment shown in FIG. 8A and FIG. 8B, and for example, is an improvement to some steps in the embodiment shown in FIG. 8A and FIG. 8B. Therefore, for steps other than the some steps, details are not described in the embodiment shown in FIG. 9, and refer to the embodiment shown in FIG. 8A and FIG. 8B. For example, S901 below and S806 in the embodiment shown in FIG. 8A and FIG. 8B may be a same step, and S903 below and S808 in the embodiment shown in FIG. 8A and FIG. 8B may be a same step.

S901: The first IMS network element determines, based on a first condition, whether the first UE and the second UE are allowed to switch call data on a satellite; or the first IMS network element determines whether the second UE meets a condition for switching call data on a satellite, where for example, the condition is referred to as a first condition.

Optionally, that the first IMS network element determines that the first UE and the second UE are to switch the call data on the satellite may include one or more of the following, or the first IMS network element may determine, by using one or more of the following, that the first UE and the second UE are to switch the call data on the satellite: determining that a network allows the first UE to switch call data on the satellite; determining that the first UE and the second UE are served by a same UPF, where the UPF is deployed on the satellite; determining that the first UE and the second UE are served by a same IMS network element; determining that the first UE and the second UE are served by different UPFs, where the different UPFs are both deployed on the satellite; determining that media description information supported by the first UE matches that supported by the second UE; determining that a serving PLMN of the first UE and a serving PLMN of the second UE are a same PLMN; determining that lawful interception is not to be performed on a call between the first UE and the second UE; determining that the first UE and the second UE are covered by the same satellite; determining that the first UE and the second UE are covered by different satellites, and there is an inter-satellite link between the different satellites; determining that the first UE is not to perform home routing during a call when the first UE is in a roaming state; determining that the first UE and the second UE are served by a same PCF; determining that an IMS PDU session of the first UE and an IMS PDU session of the second UE are served by a same PCF; determining that an IMS PDU session of the first UE and an IMS PDU session of the second UE are served by a same SMF; determining that an IMS PDU session of the first UE and an IMS PDU session of the second UE are served by a same PCF and a same SMF; determining that a network allows the second UE to switch the call data on the satellite; or determining that the second UE is not to perform home routing during a call when the second UE is in a roaming state.

Alternatively, the first condition may include one or more of the following: A network allows the first UE to switch call data on the satellite; the first UE and the second UE are served by a same UPF, where the UPF is deployed on the satellite; the first UE and the second UE are served by a same IMS network element; the first UE and the second UE are served by different UPFs, where the different UPFs are both deployed on the satellite; media description information supported by the first UE matches that supported by the second UE; a serving PLMN of the first UE and a serving PLMN of the second UE are a same PLMN; lawful interception is not to be performed on a call between the first UE and the second UE; the first UE and the second UE are covered by the same satellite; the first UE and the second UE are covered by different satellites, and there is an inter-satellite link between the different satellites; the first UE is not to perform home routing during a call when the first UE is in a roaming state; the first UE and the second UE are served by a same PCF; an IMS PDU session of the first UE and an IMS PDU session of the second UE are served by a same PCF; an IMS PDU session of the first UE and an IMS PDU session of the second UE are served by a same SMF; an IMS PDU session of the first UE and an IMS PDU session of the second UE are served by a same PCF and a same SMF; a network allows the second UE to switch the call data on the satellite; or the second UE is not to perform home routing during a call when the second UE is in a roaming state.

In this embodiment of this application, the first IMS network element and the second IMS network element are different network elements, but the two IMS network elements may interact with each other to obtain related information of a peer UE, to perform determining on the first condition.

In an optional implementation, the first IMS network element may send information D to the second IMS network element. For this, refer to S902. The information D may include one or more of the following: information about a first PCF, information about a first SMF, an identifier of a satellite that serves the first UE, information about the serving PLMN of the first UE, an identity of a serving cell of the first UE, or indication information. The indication information is, for example, referred to as indication information A, and the indication information A may indicate that the first UE and the second UE are to switch the call data on the satellite.

For example, the first IMS network element may send the information D to the second IMS network element after determining, based on the first condition, that the first UE and the second UE can switch the call data on the satellite. Alternatively, the first IMS network element may send the information D to the second IMS network element when determining that the first UE accesses the network via the satellite and/or determining that the first UE is allowed to switch the call data on the satellite. Therefore, if the first IMS network element sends the information D, it may indicate that the first IMS network element allows the first UE and the second UE to switch the call data on the satellite. If the second IMS network element receives the information D from the first IMS network element, the second IMS network element may determine that the first IMS network element allows the first UE and the second UE to switch the call data on the satellite. If the second IMS network element does not receive the information D, the second IMS network element may determine that the first IMS network element does not allow the first UE and the second UE to switch the call data on the satellite.

After receiving the information D from the first IMS network element, the second IMS network element may determine whether the first condition is met, or determine whether the first UE and the second UE are allowed to switch the call data on the satellite. For this, refer to S903. For example, if the first condition is met, the second IMS network element may send acknowledgment information to the first IMS network element. For this, refer to S904. Alternatively, if the first condition is not met, the second IMS network element may send indication information B to the first IMS network element. For this, refer to S905. Optionally, if the first condition is met, or it is determined whether the first UE and the second UE are allowed to switch the call data on the satellite, the second IMS network element may further perform S809 in the embodiment shown in FIG. 8A and FIG. 8B.

In addition, if the first IMS network element receives the acknowledgment information in S904, the first IMS network element may perform S807 in the embodiment shown in FIG. 8A and FIG. 8B. It can be learned that if the first IMS network element and the second IMS network element are different network elements, the first IMS network element may perform S807 when determining, based on the first condition, that the first UE and the second UE are allowed to switch the call data on the satellite and receiving the acknowledgment information from the second IMS network element. If the first IMS network element determines, based on the first condition, that the first UE and the second UE are not allowed to switch the call data on the satellite, and/or does not receive the acknowledgment information from the second IMS network element, the first IMS network element may not perform S807. In this case, it may also be considered that, for the first IMS network element, the first condition may further include that the acknowledgment information from the second IMS network element is received.

The acknowledgment information may be for acknowledging or indicate that the first UE and the second UE are to switch the call data on the satellite. The indication information B may be for rejecting the first UE and the second UE to switch the call data on the satellite, or indicate that the first UE and the second UE are not allowed to switch or not supported in switching the call data on the satellite.

Optionally, for the second IMS network element, the first condition may include one or more of the following: The second UE is allowed to switch the call data on the satellite; the first UE and the second UE are served by the same UPF, where the UPF is deployed on the satellite; the first UE and the second UE are served by different UPFs, where the different UPFs are both deployed on the satellite; the first UE and the second UE are served by the same IMS network element; the media description information used by the first UE matches that used by the second UE; the serving PLMN of the first UE is the same as the serving PLMN of the second UE; the first UE and the second UE are covered by the same satellite; the first UE and the second UE are covered by different satellites, and there is an inter-satellite link between the different satellites; the lawful interception is not to be performed on the call of the second UE; the first UE is not to perform home routing during the call when the first UE is in the roaming state; the PCF that serves the first UE is the same as the PCF that serves the second UE; the PCF that serves the IMS PDU session of the first UE is the same as the PCF that serves the IMS PDU session of the second UE; the SMF that serves the IMS PDU session of the first UE is the same as the SMF that serves the IMS PDU session of the second UE; or the SMF that serves the IMS PDU session of the first UE is the same as the SMF and the PCF that serve the IMS PDU session of the second UE. It can be learned that content included in a fourth condition is similar to the content included in the first condition. For example, the fourth condition and the first condition are a same condition.

For example, the information D sent by the first IMS network element to the second IMS network element includes the information about the first PCF and the indication information A. After receiving the indication information A and the information about the first PCF, the second IMS network element may determine whether the first PCF and a second PCF are a same PCF (the second IMS network element may first obtain information about the second PCF. For an obtaining manner, refer to a manner in which the first IMS network element obtains the information about the first PCF). If the first PCF and the second PCF are the same PCF, the second IMS network element may send the acknowledgment information to the first IMS network element. Alternatively, if the first PCF and the second PCF are different PCFs, the second IMS network element may send the indication information B to the first IMS network element.

For another example, the information D sent by the first IMS network element to the second IMS network element includes the information about the first PCF, the information about the first SMF, and the indication information A. After receiving the indication information A, the information about the first SMF, and the information about the first PCF, the second IMS network element may determine whether the first PCF and a second PCF are a same PCF, and determine whether the first SMF and a second SMF are a same SMF (the second IMS network element may first obtain information about the second PCF and information about the second SMF. For an obtaining manner, refer to a manner in which the first IMS network element obtains the information about the first PCF and the information about the first SMF). If the first PCF and the second PCF are the same PCF, and the first SMF and the second SMF are the same SMF, the second IMS network element may send the acknowledgment information to the first IMS network element. Alternatively, if the first PCF and the second PCF are different PCFs, and/or the first SMF and the second SMF are different SMFs, the second IMS network element may send the indication information B to the first IMS network element.

For another example, the information D sent by the first IMS network element to the second IMS network element includes the identifier of the satellite that serves the first UE. After receiving the information D, the second IMS network element may determine an identifier of a satellite that serves the second UE. For example, if the identifier of the satellite that serves the first UE is the same as the identifier of the satellite that serves the second UE, it indicates that the two UEs are served by the same satellite, and the second IMS network element may send the acknowledgment information to the first IMS network element. Alternatively, if the identifier of the satellite that serves the first UE is different from the identifier of the satellite that serves the second UE, it indicates that the two UEs are served by different satellites, and the second IMS network element may send the indication information B to the first IMS network element. Alternatively, if the identifier of the satellite that serves the first UE is different from the identifier of the satellite that serves the second UE, but there is an inter-satellite link between the two satellites, the second IMS network element may send the acknowledgment information to the first IMS network element. Alternatively, if the identifier of the satellite that serves the first UE is different from the identifier of the satellite that serves the second UE, and there is no inter-satellite link between the two satellites, the second IMS network element may send the indication information B to the first IMS network element.

For another example, the information D sent by the first IMS network element to the second IMS network element includes the information about the serving PLMN of the first UE. After receiving the information D, the second IMS network element may determine information about the serving PLMN of the second UE. For example, if the serving PLMN of the first UE is the same as the serving PLMN of the second UE, the second IMS network element may send the acknowledgment information to the first IMS network element. Alternatively, if the serving PLMN of the first UE is different from the serving PLMN of the second UE, the second IMS network element may send the indication information B to the first IMS network element.

For still another example, the information D sent by the first IMS network element to the second IMS network element includes the identity of the serving cell of the first UE. After receiving the information D, the second IMS network element may determine an identity of a serving cell of the second UE. For example, if the identity of the serving cell of the first UE is the same as the identity of the serving cell of the second UE, the second IMS network element may send the acknowledgment information to the first IMS network element. Alternatively, if the identity of the serving cell of the first UE is different from the identity of the serving cell of the second UE, the second IMS network element may send the indication information B to the first IMS network element.

If the information D includes a plurality of parameters, the second IMS network element needs to separately perform determining on the plurality of parameters, and sends the acknowledgment information only when all the plurality of parameters meet conditions. If any one or more of the plurality of parameters do not meet a condition, the second IMS network element may send the indication information B. For example, the information D sent by the first IMS network element to the second IMS network element includes the information about the serving PLMN of the first UE and the information about the first PCF. After receiving the information D, the second IMS network element may determine the information about the serving PLMN of the second UE, and determine whether the first PCF and the second PCF are the same PCF. For example, if the serving PLMN of the first UE is the same as the serving PLMN of the second UE, and the first PCF and the second PCF are the same PCF, the second IMS network element may send the acknowledgment information to the first IMS network element. Alternatively, if the serving PLMN of the first UE is different from the serving PLMN of the second UE, and/or the first PCF and the second PCF are different PCFs, the second IMS network element may send the indication information B to the first IMS network element.

If the first IMS network element receives the acknowledgment information from the second IMS network element, the first IMS network element may determine that the first UE and the second UE can switch the call data on the satellite. If the first IMS network element receives the indication information B from the second IMS network element or does not receive the acknowledgment information, the first IMS network element may determine that the first UE and the second UE are not allowed to switch the call data on the satellite.

For more content of S901 and S903, for example, related information of the first condition, refer to S806 and/or S808 in the embodiment shown in FIG. 8A and FIG. 8B. For other steps in this embodiment of this application, details are not described, and refer to the related descriptions in the embodiment shown in FIG. 8A and FIG. 8B.

In this embodiment of this application, the UPF may perform local switching on the call data between the first UE and the second UE, and both the first UE and the second UE access the network via the satellite. For example, the UPF may switch the call data between the first UE and the second UE on the satellite. Therefore, the call data can be switched on the satellite without being routed to a terrestrial network, to shorten a transmission path of the call data and reduce a delay. Because the UPF can perform local switching on the call data between the devices, the call data can directly arrive at a peer call device from the UPF without being transmitted through the IMS network element or the like, so that the transmission path is further shortened, and the delay is further reduced. In addition, all the IMS network element, the PCF, the SMF, and the like may perform corresponding determining on whether the first UE and the second UE can switch the call data on the satellite, so that the first UE and the second UE can switch the call data on the satellite when conditions are met, to meet requirements of a communication scenario and a plurality of communication parameters. In addition, in this embodiment of this application, different IMS network elements may exchange information, so that the IMS network elements can obtain more information to perform more determining processes, to help improve accuracy of determining results.

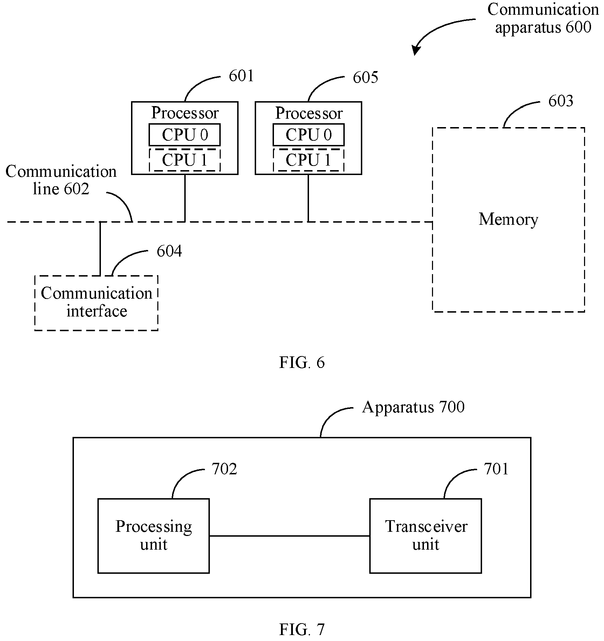

FIG. 6 is a diagram of a structure of a communication apparatus according to an embodiment of this application. The communication apparatus 600 may be the first UE in the embodiment shown in any one of FIG. 4A, FIG. 4B, or FIG. 5A or a circuit system of the first UE, and is configured to implement the method corresponding to the first UE in the foregoing method embodiments. Alternatively, the communication apparatus 600 may be the second UE in the embodiment shown in any one of FIG. 4A, FIG. 4B, or FIG. 5A, FIG. 8A and FIG. 8B, or FIG. 9 or a circuit system of the second UE, and is configured to implement the method corresponding to the second UE in the foregoing method embodiments. Alternatively, the communication apparatus 600 may be the IMS network element in the embodiment shown in any one of FIG. 4A, FIG. 4B, FIG. 5A, FIG. 8A and FIG. 8B, or FIG. 9 or a circuit system of the IMS network element, and is configured to implement the method corresponding to the IMS network element in the foregoing method embodiments. Alternatively, the communication apparatus 600 may be the SMF in the embodiment shown in any one of FIG. 4A, FIG. 4B, FIG. 5A, FIG. 8A and FIG. 8B, or FIG. 9 or a circuit system of the SMF, and is configured to implement the method corresponding to the SMF in the foregoing method embodiments. Alternatively, the communication apparatus 600 may be the UPF in the embodiment shown in any one of FIG. 4A, FIG. 4B, FIG. 5A, FIG. 8A and FIG. 8B, or FIG. 9 or a circuit system of the UPF, and is configured to implement the method corresponding to the UPF in the foregoing method embodiments. Alternatively, the communication apparatus 600 may be the PCF in the embodiment shown in any one of FIG. 4A, FIG. 4B, FIG. 5A, FIG. 8A and FIG. 8B, or FIG. 9 or a circuit system of the PCF, and is configured to implement the method corresponding to the PCF in the foregoing method embodiments. For example, the circuit system is a chip system.

The communication apparatus 600 includes at least one processor 601. The processor 601 may be configured to perform internal processing of the apparatus to implement a specific control processing function. Optionally, the processor 601 includes instructions. Optionally, the processor 601 may store data. Optionally, different processors may be independent components, and may be located at different physical locations, or may be located on different integrated circuits. Optionally, different processors may be integrated into one or more processors, for example, integrated into one or more integrated circuits.

Optionally, the communication apparatus 600 includes one or more memories 603, configured to store instructions. Optionally, the memory 603 may further store data. The processor and the memory may be separately disposed, or may be integrated together.

Optionally, the communication apparatus 600 includes a communication line 602 and at least one communication interface 604. The memory 603, the communication line 602, and the communication interface 604 are all optional, and therefore are all represented by dashed lines in FIG. 6.

Optionally, the communication apparatus 600 may further include a transceiver and/or an antenna. The transceiver may be configured to send information to another apparatus or receive information from another apparatus. The transceiver may be referred to as a transceiver machine, a transceiver circuit, an input/output interface, or the like, and is configured to implement receiving and sending functions of the communication apparatus 600 via the antenna. Optionally, the transceiver includes a transmitter (transmitter) and a receiver (receiver). For example, the transmitter may be configured to generate a radio frequency (radio frequency) signal based on a baseband signal, and the receiver may be configured to convert a radio frequency signal into a baseband signal.

The processor 601 may include a general-purpose central processing unit (central processing unit, CPU), a microprocessor, an application-specific integrated circuit (application-specific integrated circuit, ASIC), or one or more integrated circuits configured to control program execution of the solutions of this application.

The communication line 602 may include a path for communicating information between the foregoing components.

The communication interface 604 uses any transceiver-type apparatus, and is configured to communicate with another device or a communication network, for example, an Ethernet, a radio access network (radio access network, RAN), a wireless local area network (wireless local area network, WLAN), or a wired access network.

The memory 603 may be a read-only memory (read-only memory, ROM) or another type of static storage device that can store static information and instructions, a random access memory (random access memory, RAM) or another type of dynamic storage device that can store information and instructions, an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, or the like), a magnetic disk storage medium or another magnetic storage device, or any other medium that can be configured to carry or store expected program code in a form of an instruction or a data structure and that can be accessed by a computer, but is not limited thereto. The memory 603 may exist independently, and is connected to the processor 601 via the communication line 602. Alternatively, the memory 603 may be integrated with the processor 601.

The memory 603 is configured to store computer-executable instructions for executing the solutions of this application, and the processor 601 controls the execution. The processor 601 is configured to execute the computer-executable instructions stored in the memory 603, to implement the steps performed by the first UE, the second UE, the IMS network element, the SMF, the UPF, or the PCF in the embodiment shown in any one of FIG. 4A, FIG. 4B, FIG. 5A, FIG. 8A and FIG. 8B, or FIG. 9.

Optionally, the computer-executable instructions in this embodiment of this application may also be referred to as application program code. This is not specifically limited in this embodiment of this application.

During specific implementation, in an embodiment, the processor 601 may include one or more CPUs, for example, a CPU 0 and a CPU 1 in FIG. 6.

During specific implementation, in an embodiment, the communication apparatus 600 may include a plurality of processors, for example, the processor 601 and a processor 605 in FIG. 6. Each of the processors may be a single-core (single-CPU) processor, or may be a multi-core (multi-CPU) processor. The processor herein may be one or more devices, circuits, and/or processing cores configured to process data (for example, computer program instructions).

When the apparatus shown in FIG. 6 is a chip, for example, a chip of the first UE, a chip of the second UE, a chip of the IMS network element, a chip of the SMF, a chip of the UPF, or a chip of the PCF, the chip includes a processor 601 (the chip may further include a processor 605), a communication line 602, and a communication interface 604. Optionally, the chip may include a memory 603. Specifically, the communication interface 604 may be an input interface, a pin, a circuit, or the like. The memory 603 may be a register, a cache, or the like. The processor 601 and the processor 605 may be a general-purpose CPU, a microprocessor, an ASIC, or one or more integrated circuits configured to control program execution of the communication method in any one of the foregoing embodiments.

In embodiments of this application, the apparatus may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, the division into modules is an example, and is merely a logical function division. During actual implementation, another division manner may be used. For example, when each functional module is obtained through division based on each corresponding function, FIG. 7 is a diagram of an apparatus. The apparatus 700 may be the first UE, the second UE, the IMS network element, the SMF, the UPF, or the PCF in the foregoing method embodiments, or may be a chip in the first UE, a chip in the second UE, a chip in the SMF, a chip in the IMS network element, a chip in the UPF, or a chip in the PCF. The apparatus 700 includes a processing unit 702 and a transceiver unit 701.

It should be understood that the apparatus 700 may be configured to implement the steps performed by the first UE, the second UE, the IMS network element, the SMF, the UPF, or the PCF in the communication methods in embodiments of this application. For related features, refer to the embodiment shown in any one of FIG. 4A, FIG. 4B, FIG. 5A, FIG. 8A and FIG. 8B, or FIG. 9. Details are not described herein again.

Optionally, functions/implementation processes of the transceiver unit 701 and the processing unit 702 in FIG. 7 may be implemented by the processor 601 in FIG. 6 by invoking the computer-executable instructions stored in the memory 603. Alternatively, a function/an implementation process of the processing unit 702 in FIG. 7 may be implemented by the processor 601 in FIG. 6 by invoking the computer-executable instructions stored in the memory 603, and a function/an implementation process of the transceiver unit 701 in FIG. 7 may be implemented by the communication interface 604 in FIG. 6.

Optionally, when the apparatus 700 is a chip or a circuit, a function/an implementation process of the transceiver unit 701 may alternatively be implemented by a pin, a circuit, or the like. Optionally, the transceiver unit 701 may include a sending unit and/or a receiving unit. The sending unit is configured to implement a sending function, and the receiving unit is configured to implement a receiving function. Alternatively, the transceiver unit 701 may be an integrated module that can implement a sending function and/or a receiving function. Optionally, the transceiver unit 701 may be implemented by a transceiver.

This application further provides a computer-readable storage medium. The computer-readable storage medium stores a computer program or instructions. When the computer program or the instructions are run, the method performed by the first UE, the second UE, the SMF, the UPF, the IMS network element, or the PCF in the foregoing method embodiments is implemented. In this way, the functions in the foregoing embodiments may be implemented in a form of a software functional unit and sold or used as an independent product. Based on such an understanding, the technical solutions of this application essentially, the part contributing to the conventional technology, or a part of the technical solutions may be implemented in a form of a software product. The computer software product is stored in a storage medium, and includes several instructions for instructing a computer device (which may be a personal computer, a server, a network device, or the like) to perform all or a part of the steps of the methods described in embodiments of this application. The storage medium includes any medium that can store program code, such as a USB flash drive, a removable hard disk, a ROM, a RAM, a magnetic disk, or an optical disc.

This application further provides a computer program product. The computer program product includes computer program code. When the computer program code is run on a computer, the computer is caused to perform the method performed by the first UE, the second UE, the SMF, the UPF, the IMS network element, or the PCF in any one of the foregoing method embodiments.

An embodiment of this application further provides a processing apparatus, including a processor and an interface. The processor is configured to perform the method performed by the first UE, the second UE, the SMF, the UPF, the IMS network element, or the PCF in any one of the foregoing method embodiments.

All or some of the foregoing embodiments may be implemented by using software, hardware, firmware, or any combination thereof. When software is used to implement the embodiments, all or some of the embodiments may be implemented in a form of a computer program product. The computer program product includes one or more computer instructions. When the computer program instructions are loaded and executed on a computer, the procedures or functions according to embodiments of this application are all or partially generated. The computer may be a general-purpose computer, a special-purpose computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like.

Various illustrative logical units and circuits described in embodiments of this application may implement or operate the described functions by using a general-purpose processor, a digital signal processor (digital signal processor, DSP), an ASIC, a field-programmable gate array (field-programmable gate array, FPGA) or another programmable logical apparatus, a discrete gate or transistor logic, a discrete hardware component, or a design of any combination thereof. The general-purpose processor may be a microprocessor. Optionally, the general-purpose processor may alternatively be any conventional processor, controller, microcontroller, or state machine. The processor may alternatively be implemented by a combination of computing apparatuses, such as a digital signal processor and a microprocessor, a plurality of microprocessors, one or more microprocessors with a digital signal processor core, or any other similar configuration.

Steps of the methods or algorithms described in embodiments of this application may be directly embedded into hardware, a software unit executed by a processor, or a combination thereof. The software unit may be stored in a RAM, a flash memory, a ROM, an erasable programmable read-only memory (erasable programmable read-only memory, EPROM), an EEPROM, a register, a hard disk, a removable magnetic disk, a CD-ROM, or any other form of storage medium in the art. For example, the storage medium may be connected to the processor, so that the processor can read information from the storage medium and write information to the storage medium. Optionally, the storage medium may be integrated into the processor. The processor and the storage medium may be disposed in an ASIC, and the ASIC may be disposed in a terminal device. Optionally, the processor and the storage medium may be disposed in different parts of a terminal device.

These computer program instructions may alternatively be loaded onto a computer or another programmable data processing device, so that a series of operations and steps are performed on the computer or the another programmable device, to generate computer-implemented processing. Therefore, the instructions executed on the computer or the another programmable device provide steps for implementing a specific function in one or more processes in the flowcharts and/or in one or more blocks in the block diagrams.

Mutual reference may be made to content in embodiments of this application. Unless otherwise specified or logical conflict occurs, terms and/or descriptions in different embodiments are consistent and may be mutually referenced, and technical features in different embodiments may be combined into a new embodiment based on an internal logical relationship between the technical features.

It may be understood that in embodiments of this application, the first UE, the second UE, the SMF, the UPF, the IMS network element, and/or the PCF can perform some or all of the steps in embodiments of this application. These steps or operations are merely examples. In embodiments of this application, other operations or variations of various operations may be further performed. In addition, the steps may be performed in a sequence different from that presented in embodiments of this application, and not all the operations in embodiments of this application may be necessarily performed.

## Claims

1. A communication method, wherein the method comprises:
receiving first information from an internet protocol multimedia subsystem IMS network element, wherein the first information indicates that a first apparatus and a second apparatus are to make a call; and
sending first configuration information to a user plane function UPF based on the first information, wherein the first configuration information is for configuring the UPF to perform local switching on call data between the first apparatus and the second apparatus, and both the first apparatus and the second apparatus access a network via a satellite.

2. The method according to claim 1, wherein the UPF is located on the satellite.

3. The method according to claim 1 or 2, wherein the method further comprises:
when the first information further indicates that the first apparatus and the second apparatus are to switch the call data on the satellite, determining, based on the first information, that the first apparatus and the second apparatus are to switch the call data on the satellite; or
determining, based on a UPF that serves the first apparatus and a UPF that serves the second apparatus, that the first apparatus and the second apparatus are to switch the call data on the satellite.

4. The method according to claim 3, wherein the determining, based on the UPF that serves the first apparatus and the UPF that serves the second apparatus, that the first apparatus and the second apparatus are to switch the call data on the satellite comprises:
determining that the first apparatus and the second apparatus are served by the same UPF; or
determining that the first apparatus and the second apparatus are served by different UPFs, wherein establishment of a data transmission channel is supported between the different UPFs.

5. The method according to any one of claims 1 to 4, wherein the first information further comprises one or more of the following:
a first identifier of the first apparatus;
a second identifier of the first apparatus;
address information of the first apparatus;
a first identifier of the second apparatus;
a second identifier of the second apparatus;
address information of the second apparatus;
calling-party information;
called-party information, or
description information of the call data.

6. A communication method, wherein the method comprises:
receiving a first request from a first apparatus, wherein the first request is for requesting to make a call with a second apparatus; and
sending first information to a first core network element, wherein the first information indicates that the first apparatus and the second apparatus are to make the call, and the first information further indicates that the first apparatus and the second apparatus are to switch call data on a satellite.

7. The method according to claim 6, wherein the method further comprises:
determining that the first apparatus and the second apparatus are to switch the call data on the satellite.

8. The method according to claim 7, wherein the determining that the first apparatus and the second apparatus are to switch the call data on the satellite comprises one or more of the following:
determining that the first apparatus and the second apparatus are served by a same UPF, wherein the UPF is located on the satellite;
determining that the first apparatus and the second apparatus are served by a same IMS network element;
determining that the first apparatus and the second apparatus are served by different UPFs, wherein the different UPFs are both located on the satellite; or
determining that media description information of the first apparatus matches that of the second apparatus.

9. The method according to claim 8, wherein the determining that the first apparatus and the second apparatus are served by the same IMS network element comprises:
determining, based on a second identifier that is of the second apparatus and that is carried in the first request, that the first apparatus and the second apparatus are served by the same IMS network element, and the IMS network element uniquely corresponds to one UPF.

10. The method according to claim 9, wherein the determining, based on the second identifier that is of the second apparatus and that is carried in the first request, that the first apparatus and the second apparatus are served by the same IMS network element comprises:
determining, based on the second identifier of the second apparatus and a second identifier of the first apparatus, that both the first apparatus and the second apparatus perform IMS registration via the same IMS network element.

11. The method according to claim 9 or 10, wherein the second identifier of the second apparatus comprises a uniform resource locator and/or a uniform resource identifier of the second apparatus.

12. The method according to claim 8, wherein the determining that the first apparatus and the second apparatus are served by the same UPF comprises:
determining that the first request and a request from the second apparatus are from the same UPF.

13. The method according to any one of claims 6 to 12, wherein the determining that the first apparatus and the second apparatus are to switch the call data on the satellite comprises:
when the call between the first apparatus and the second apparatus corresponds to a delay handling policy, determining that the first apparatus and the second apparatus are to switch the call data on the satellite; and/or
when a disaster recovery policy is executed, determining that the first apparatus and the second apparatus are to switch the call data on the satellite.

14. The method according to any one of claims 6 to 13, wherein the method further comprises:
determining, based on subscription information of the first apparatus, that a network allows call data of the first apparatus to be switched on the satellite, and/or determining, based on subscription information of the second apparatus, that the network allows call data of the second apparatus to be switched on the satellite;
receiving second information, wherein the second information indicates that the first apparatus requests switching of call data of the first apparatus on the satellite, and/or indicates that the second apparatus requests switching of call data of the second apparatus on the satellite; or
receiving third information, wherein the third information indicates that a network allows call data of the first apparatus to be switched on the satellite, and/or indicates that the network allows call data of the second apparatus to be switched on the satellite.

15. The method according to any one of claims 6 to 14, wherein the call data is not transmitted through an IMS.

16. A communication method, wherein the method comprises:
receiving first configuration information; and
performing configuration based on the first configuration information to perform local switching on call data between a first apparatus and a second apparatus, wherein both the first apparatus and the second apparatus access a network via a satellite.

17. The method according to claim 16, wherein the UPF is located on the satellite.

18. The method according to claim 16 or 17, wherein the performing configuration based on the first configuration information to perform local switching on the call data between the first apparatus and the second apparatus comprises one or more of the following:
for call data from a communication apparatus, setting a data filtering rule as obtaining the call data between the first apparatus and the second apparatus through filtering, wherein the communication apparatus is the first apparatus or the second apparatus;
for call data from the communication apparatus, setting a data forwarding rule as performing forwarding to the UPF;
for call data that is received by the UPF and forwarded by the UPF, setting a destination address of the call data to address information of a peer communication apparatus, wherein if the call data is from the first apparatus, the peer communication apparatus is the second apparatus; or if the call data is from the second apparatus, the peer communication apparatus is the first apparatus; or
for call data that is received by the UPF and forwarded by the UPF, setting a rule for forwarding the call data as performing forwarding to a peer communication apparatus.

19. A communication method, wherein the method comprises:
receiving a first request from a first apparatus, wherein the first request is for requesting to make a call with a second apparatus, and both the first apparatus and the second apparatus access a network via a satellite;
determining that the first apparatus and the second apparatus are to switch call data on the satellite; and
sending address information of the second apparatus to the first apparatus, and sending address information of the first apparatus to the second apparatus.

20. The method according to claim 19, wherein the method further comprises:
receiving a registration request from a communication apparatus, wherein a message header of the registration request comprises address information of the communication apparatus, and the communication apparatus comprises the first apparatus or the second apparatus.

21. The method according to claim 19 or 20, wherein the determining that the first apparatus and the second apparatus are to switch the call data on the satellite comprises:
determining that the first apparatus and the second apparatus are served by a same UPF, wherein the UPF is located on the satellite; and/or
determining that the first apparatus and the second apparatus are served by a same IMS network element.

22. The method according to claim 21, wherein the determining that the first apparatus and the second apparatus are to switch the call data on the satellite further comprises:
determining that media description information of the first apparatus matches that of the second apparatus.

23. The method according to claim 21 or 22, wherein the determining that the first apparatus and the second apparatus are served by the same IMS network element comprises:
determining, based on a second identifier that is of the second apparatus and that is carried in the first request, that the first apparatus and the second apparatus are served by the same IMS network element.

24. The method according to claim 23, wherein the determining, based on the second identifier that is of the second apparatus and that is carried in the first request, that the first apparatus and the second apparatus are served by the same IMS network element comprises:
determining, based on the second identifier of the second apparatus and a second identifier of the first apparatus, that both the first apparatus and the second apparatus perform IMS registration via the same IMS network element.

25. The method according to claim 23 or 24, wherein the second identifier of the second apparatus comprises a uniform resource locator and/or a uniform resource identifier of the second apparatus.

26. The method according to claim 21 or 22, wherein the determining that the first apparatus and the second apparatus are served by the same UPF comprises:
determining that the first request and a request from the second apparatus are from the same UPF.

27. The method according to any one of claims 19 to 26, wherein the determining that the first apparatus and the second apparatus are to switch the call data on the satellite comprises:
when the call between the first apparatus and the second apparatus corresponds to a delay handling policy, determining that the first apparatus and the second apparatus are to switch the call data on the satellite; and/or
when a disaster recovery policy is executed, determining that the first apparatus and the second apparatus are to switch the call data on the satellite.

28. The method according to any one of claims 19 to 27, wherein the method further comprises one or more of the following:
determining, based on subscription information of the first apparatus, that the network allows call data of the first apparatus to be switched on the satellite, and/or determining, based on subscription information of the second apparatus, that the network allows call data of the second apparatus to be switched on the satellite;
receiving second information, wherein the second information indicates that the first apparatus requests switching of call data of the first apparatus on the satellite, and/or indicates that the second apparatus requests switching of call data of the second apparatus on the satellite; or
receiving third information, wherein the third information indicates that the network allows call data of the first apparatus to be switched on the satellite, and/or indicates that the network allows call data of the second apparatus to be switched on the satellite.

29. The method according to any one of claims 19 to 28, wherein the call data is not transmitted through an IMS.

30. A communication method, applied to a communication apparatus, wherein the method comprises:
receiving a second request from an IMS network element, wherein the second request comprises address information of a peer communication apparatus, wherein the communication apparatus is a calling device, and the peer communication apparatus is a called device; or the communication apparatus is a called device, and the peer communication apparatus is a calling device; and both the communication apparatus and the peer communication apparatus access a network via a satellite; and
sending call data to a UPF, wherein destination address information of the call data is the address information of the peer communication apparatus.

31. The method according to claim 30, wherein the method further comprises:
sending second information to the IMS network element, wherein the second information indicates that the communication apparatus requests switching of call data of the communication apparatus on the satellite.

32. The method according to claim 30 or 31, wherein the method further comprises:
sending a registration request to the IMS network element, wherein the registration request is for requesting to register with the IMS network element, and the registration request further indicates that the communication apparatus accesses the network via the satellite.

33. A communication method, wherein the method comprises:
receiving a first message, wherein the first message is used by a first apparatus to request to make a call with a second apparatus, or is used by the second apparatus to respond to a call request from the first apparatus;
determining, based on a first condition, that the first apparatus and the second apparatus are allowed to switch call data on a satellite; and
sending a second message to a second core network element, wherein the second message comprises an identifier of the first apparatus, an identifier of the second apparatus, and fourth information, the fourth information is for requesting the switching of the call data between the first apparatus and the second apparatus on the satellite, and the second core network element is a second core network element that serves an IMS PDU session of the first apparatus and/or a second core network element that serves an IMS PDU session of the second apparatus.

34. The method according to claim 33, wherein the first condition comprises one or more of the following:
the first apparatus and/or the second apparatus are/is allowed to switch call data on the satellite;
the first apparatus and the second apparatus are served by a same user plane function entity, wherein the same user plane function entity is deployed on the satellite;
the first apparatus and the second apparatus are served by a same IMS network element;
the first apparatus and the second apparatus are served by different user plane function entities, wherein the different user plane function entities are both deployed on the satellite;
media description information used by the first apparatus matches that used by the second apparatus;
a serving PLMN of the first apparatus is the same as a serving PLMN of the second apparatus;
the first apparatus and the second apparatus are covered by a same satellite;
the first apparatus and the second apparatus are covered by different satellites, and there is an inter-satellite link between the different satellites;
lawful interception is not to be performed on the call;
when at least one apparatus of the first apparatus or the second apparatus accesses a roaming network, the apparatus that accesses the roaming network is not to perform home routing during the call;
the IMS PDU session of the first apparatus and the IMS PDU session of the second apparatus are served by the same second core network element; or
the IMS PDU session of the first apparatus and the IMS PDU session of the second apparatus are served by the same second core network element and a same first core network element.

35. The method according to claim 34, wherein the method further comprises:
obtaining information about the second core network element that serves the IMS PDU session of the first apparatus, and/or obtaining information about the second core network element that serves the IMS PDU session of the second apparatus; or
obtaining information about the second core network element and a first core network element that serve the IMS PDU session of the first apparatus, and/or obtaining information about the second core network element and a first core network element that serve the IMS PDU session of the second apparatus.

36. The method according to claim 35, wherein the method further comprises:
sending at least one of the following to a second IMS network element that serves the second apparatus:
indication information, wherein the indication information indicates that the first apparatus and the second apparatus are to switch the call data on the satellite;
information about the user plane function entity that serves the first apparatus;
information about the serving PLMN of the first apparatus;
an identifier of a satellite that serves the first apparatus;
an identity of a serving cell of the first apparatus;
the information about the second core network element that serves the IMS PDU session of the first apparatus; or
the information about the first core network element that serves the IMS PDU session of the first apparatus.

37. The method according to claim 36, wherein the sending the at least one of the following to the second IMS network element that serves the second apparatus comprises:
sending the at least one of the following to the second IMS when the first apparatus accesses a network via the satellite and/or the first apparatus is allowed to switch the call data on the satellite.

38. The method according to claim 36 or 37, wherein the method further comprises:
receiving acknowledgment information from the second IMS network element, wherein the acknowledgment information is for acknowledging that the first apparatus and the second apparatus are to switch the call data on the satellite.

39. The method according to claim 35, wherein the method further comprises:
receiving at least one of the following from a first IMS network element:
indication information, wherein the indication information indicates that the first apparatus and the second apparatus are to switch the call data on the satellite;
information about the user plane function entity that serves the first apparatus;
information about the serving PLMN of the first apparatus;
an identifier of a satellite that serves the first apparatus;
an identity of a serving cell of the first apparatus;
the information about the second core network element that serves the IMS PDU session of the first apparatus; or
the information about the first core network element that serves the IMS PDU session of the first apparatus.

40. The method according to claim 39, wherein the method further comprises:
sending acknowledgment information to the first IMS network element, wherein the acknowledgment information is for acknowledging that the first apparatus and the second apparatus are to switch the call data on the satellite.

41. The method according to claim 40, wherein the sending the acknowledgment information to the first IMS network element comprises:
sending the acknowledgment information to the first IMS network element when at least one of the following is met:
the second apparatus is allowed to switch the call data on the satellite;
the first apparatus and the second apparatus are served by the same user plane function entity, wherein the same user plane function entity is deployed on the satellite;
the first apparatus and the second apparatus are served by the different user plane function entities, wherein the different user plane function entities are both deployed on the satellite;
the media description information used by the first apparatus matches that used by the second apparatus;
the serving PLMN of the first apparatus is the same as the serving PLMN of the second apparatus;
the first apparatus and the second apparatus are covered by the same satellite;
the first apparatus and the second apparatus are covered by the different satellites, and there is an inter-satellite link between the different satellites;
the lawful interception is not to be performed on the call of the second apparatus;
the second core network element that serves the IMS PDU session of the first apparatus is the same as the second core network element that serves the IMS PDU session of the second apparatus; or
the second core network element that serves the IMS PDU session of the first apparatus is the same as the second core network element that serves the IMS PDU session of the second apparatus, and the first core network element that serves the IMS PDU session of the first apparatus is the same as the first core network element that serves the IMS PDU session of the second apparatus.

42. The method according to any one of claims 33 to 35, wherein the method further comprises:
receiving seventh information from the second core network element, wherein the seventh information indicates a configuration result for the switching of the call data between the first apparatus and the second apparatus on the satellite.

43. The method according to any one of claims 33 to 42, wherein the first apparatus is a calling apparatus of the call, and the second apparatus is a called apparatus of the call.

44. A communication method, wherein the method comprises:
receiving a second message, wherein the second message comprises an identifier of a first apparatus, an identifier of a second apparatus, and fourth information, and the fourth information is for requesting switching of call data between the first apparatus and the second apparatus on a satellite; and
sending, based on a second condition, fifth information to a first core network element that serves the first apparatus, wherein the fifth information indicates that the first apparatus and the second apparatus are to switch the call data on the satellite; and the first core network element that serves the first apparatus further serves the second apparatus, or the first core network element that serves the first apparatus does not serve the second apparatus.

45. The method according to claim 44, wherein the first core network element that serves the first apparatus does not serve the second apparatus, and the method further comprises:
sending sixth information to a first core network element that serves the second apparatus, wherein the sixth information indicates that the first apparatus and the second apparatus are to switch the call data on the satellite.

46. The method according to claim 44 or 45, wherein the second condition comprises one or more of the following:
a second core network element that serves an IMS PDU session of the first apparatus is the same as a second core network element that serves an IMS PDU session of the second apparatus;
the first core network element that serves an IMS PDU session of the first apparatus is the same as the first core network element that serves an IMS PDU session of the second apparatus;
both the first apparatus and the second apparatus access a network via the satellite;
it is determined that the first apparatus and the second apparatus are covered by the same satellite; or
it is determined that the first apparatus and the second apparatus are covered by different satellites, and there is an inter-satellite link between the different satellites.

47. The method according to any one of claims 44 to 46, wherein
the method further comprises: receiving a third message, wherein the third message comprises the identifier of the first apparatus, the identifier of the second apparatus, and the fourth information; and
the sending, based on the second condition, the fifth information to the first core network element that serves the first apparatus comprises: sending, based on the second condition, the second message, and the third message, the fifth information to the first core network element that serves the first apparatus.

48. The method according to any one of claims 44 to 47, wherein the method further comprises:
determining that the second core network element that serves the IMS PDU session of the first apparatus is different from the second core network element that serves the IMS PDU session of the second apparatus, and/or the first core network element that serves the IMS PDU session of the first apparatus is different from the first core network element that serves the IMS PDU session of the second apparatus; and
sending first rejection information to an IMS network element, wherein the first rejection information indicates that the first apparatus and the second apparatus are rejected to switch the call data on the satellite.

49. The method according to any one of claims 44 to 48, wherein the method further comprises:
receiving eighth information from the first core network element that serves the IMS PDU session of the first apparatus, wherein the eighth information indicates a configuration result for the switching of the call data between the first apparatus and the second apparatus on the satellite; and
sending seventh information to the IMS network element, wherein the seventh information indicates the configuration result for the switching of the call data between the first apparatus and the second apparatus on the satellite.

50. The method according to claim 49, wherein before the sending the eighth information to the IMS network element, the method further comprises:
receiving ninth information from the first core network element that serves the IMS PDU session of the second apparatus, wherein the ninth information indicates a configuration result for the switching of the call data between the first apparatus and the second apparatus on the satellite.

51. A communication method, wherein the method comprises:
receiving information from a second core network element, wherein the information indicates that a first apparatus and a second apparatus are to switch call data on a satellite; and
sending third configuration information to a first user plane function entity based on a third condition, wherein the third configuration information is for configuring the first user plane function entity to directly forward the call data between the first apparatus and the second apparatus, the first user plane function entity is deployed on the satellite, and the first user plane function entity serves the first apparatus, or the first user plane function entity serves the first apparatus and the second apparatus.

52. The method according to claim 51, wherein the first user plane function entity serves the first apparatus, and the method further comprises:
sending fourth configuration information to a second user plane function entity, wherein the fourth configuration information is for configuring the second user plane function entity to directly forward the call data between the first apparatus and the second apparatus, the second user plane function entity is deployed on the satellite, and the second user plane function entity serves the second apparatus.

53. The method according to claim 51 or 52, wherein the third condition comprises one or more of the following:
both the first apparatus and the second apparatus access a network via the satellite;
the first apparatus and the second apparatus are served by a same user plane function entity, wherein the same user plane function entity is deployed on the satellite;
the first apparatus and the second apparatus are served by different user plane function entities, wherein the different user plane function entities are both deployed on the satellite, and a data transmission channel is capable of being established between the different user plane function entities;
the first apparatus and the second apparatus are covered by the same satellite; or
the first apparatus and the second apparatus are covered by different satellites, and there is an inter-satellite link between the different satellites.

54. A communication method, wherein the method comprises:
sending second information to an IMS network element, wherein the second information is for requesting switching of call data on a satellite.

55. A communication apparatus, wherein the communication apparatus comprises a processing unit and a transceiver unit, and the processing unit is coupled to the transceiver unit, to perform the method according to any one of claims 1 to 5, perform the method according to any one of claims 6 to 15, perform the method according to any one of claims 16 to 18, perform the method according to any one of claims 19 to 29, perform the method according to any one of claims 30 to 32, perform the method according to any one of claims 33 to 43, perform the method according to any one of claims 44 to 50, perform the method according to any one of claims 51 to 53, or perform the method according to claim 54.

56. A communication apparatus, wherein the communication apparatus comprises a processor and a memory, the memory is configured to store a computer program, and the processor is configured to execute the computer program stored in the memory, to cause the communication apparatus to perform the method according to any one of claims 1 to 5, perform the method according to any one of claims 6 to 15, perform the method according to any one of claims 16 to 18, perform the method according to any one of claims 19 to 29, perform the method according to any one of claims 30 to 32, perform the method according to any one of claims 33 to 43, perform the method according to any one of claims 44 to 50, perform the method according to any one of claims 51 to 53, or perform the method according to claim 54.

57. A computer-readable storage medium, wherein the computer-readable storage medium is configured to store a computer program; and when the computer program is run on a computer, the computer is caused to perform the method according to any one of claims 1 to 5, perform the method according to any one of claims 6 to 15, perform the method according to any one of claims 16 to 18, perform the method according to any one of claims 19 to 29, perform the method according to any one of claims 30 to 32, perform the method according to any one of claims 33 to 43, perform the method according to any one of claims 44 to 50, perform the method according to any one of claims 51 to 53, or perform the method according to claim 54.

58. A computer program product, wherein the computer program product comprises a computer program; and when the computer program is run on a computer, the computer is caused to perform the method according to any one of claims 1 to 5, perform the method according to any one of claims 6 to 15, perform the method according to any one of claims 16 to 18, perform the method according to any one of claims 19 to 29, perform the method according to any one of claims 30 to 32, perform the method according to any one of claims 33 to 43, perform the method according to any one of claims 44 to 50, perform the method according to any one of claims 51 to 53, or perform the method according to claim 54.

59. A chip system, wherein the chip system comprises:
a processor and an interface, wherein the processor is configured to invoke instructions from the interface and run the instructions; and when the processor executes the instructions, the method according to any one of claims 1 to 5, the method according to any one of claims 6 to 15, the method according to any one of claims 16 to 18, the method according to any one of claims 19 to 29, the method according to any one of claims 30 to 32, the method according to any one of claims 33 to 43, the method according to any one of claims 44 to 50, the method according to any one of claims 51 to 53, or the method according to claim 54 is implemented.

60. A communication system, wherein the communication system comprises a first core network element and an IMS network element, wherein
the first core network element is configured to perform the method according to any one of claims 1 to 5; and
the IMS network element is configured to perform the method according to any one of claims 6 to 15.

61. The communication system according to claim 60, wherein the communication system further comprises a UPF, wherein
the UPF is configured to perform the method according to any one of claims 16 to 18.

62. A communication system, wherein the communication system comprises an IMS network element and a communication apparatus, wherein
the IMS network element is configured to perform the method according to any one of claims 19 to 29; and
the communication apparatus is configured to perform the method according to any one of claims 30 to 32.
